(19) Europäisches Patentamt / European Patent Office / Office européen des brevets

(11) **EP 4 478 176 B1**

(12) **EUROPEAN PATENT SPECIFICATION**

(45) Date of publication and mention of the grant of the patent:
**17.12.2025 Bulletin 2025/51**

(21) Application number: **23216730.4**

(22) Date of filing: **14.12.2023**

(51) International Patent Classification (IPC):
**G06F 7/483** (2006.01)     **G06F 9/30** (2018.01)

(52) Cooperative Patent Classification (CPC):
**G06F 7/483; G06F 9/3001; G06F 9/30014; G06F 9/30036**

(54) **EXTENDED FLOATING-POINT RANGE PROCESSORS, METHODS, SYSTEMS, AND INSTRUCTIONS**

PROZESSOREN MIT ERWEITERTER GLEITKOMMAREICHWEITE, VERFAHREN, SYSTEME UND ANWEISUNGEN

PROCESSEURS, PROCÉDÉS, SYSTÈMES ET INSTRUCTIONS À PLAGE DE VIRGULE FLOTTANTE ÉTENDUE

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **15.06.2023 US 202318210635**

(43) Date of publication of application:
**18.12.2024 Bulletin 2024/51**

(73) Proprietor: **Altera Corporation**
**San Jose, CA 95134 (US)**

(72) Inventors:
• **LANGHAMMER, Martin**
**Alderbury, SP5 3AB (GB)**
• **HEINECKE, Alexander**
**San Jose, 95134 (US)**

(74) Representative: **Hermann, Felix**
**Boehmert & Boehmert**
**Anwaltspartnerschaft mbB**
**Pettenkoferstrasse 22**
**80336 München (DE)**

(56) References cited:
**US-A1- 2013 191 432**

• **JIAJUN ZHOU ET AL: "DyBit: Dynamic Bit-Precision Numbers for Efficient Quantized Neural Network Inference", ARXIV.ORG, CORNELL UNIVERSITY LIBRARY, 201 OLIN LIBRARY CORNELL UNIVERSITY ITHACA, NY 14853, 24 February 2023 (2023-02-24), XP091445611**
• **THIERRY TAMBE ET AL: "AdaptivFloat: A Floating-point based Data Type for Resilient Deep Learning Inference", ARXIV.ORG, CORNELL UNIVERSITY LIBRARY, 201 OLIN LIBRARY CORNELL UNIVERSITY ITHACA, NY 14853, 29 September 2019 (2019-09-29), XP081594937**

**Description**

BACKGROUND

Technical Field

Embodiments described herein generally relate to processors. In particular, embodiments described herein generally relate to processors to process floating-point data elements.

Background Information

Floating-point numbers are commonly used in processors, computer systems, and other electronic devices. One advantage of floating-point numbers is that they allow a wide range of numerical values to be represented in a relatively compact format and/or number of bits.

Floating-point numbers are typically defined according to a floating-point format. The floating-point format apportions the bits used to represent the floating-point number into several constituent fields known as the sign bit, the significand (also known as mantissa or fraction), and the exponent of the floating-point number. An exponent bias is also typically used to adjust the exponent. The value of the floating-point number may be expressed in terms of the sign bit "s", the "significand", the "exponent", and the exponent bias "bias" as shown by the following equation:

$$value = (-1)^s * (1 + significand) * 2^{(exponent - bias)} \qquad \text{Equation 1}$$

The expression "(-1)$^s$" represents negative one raised to the power of the sign bit "s". This expression evaluates whether the floating-point number is positive or negative. For example, when the sign bit is zero the floating-point number is positive and when the sign bit is one the floating-point number is negative. The significand includes a string of bits of a length that affects the precision of the floating-point number. As shown by the expression "(1+significand)" the significand typically includes an implicit most significant bit (MSB) or leftmost bit with a value of one known as the J-bit. This implicit bit or J-bit is not one of the explicit bits present in the floating-point number but rather is an implicit or hidden bit that provides additional precision without needing to explicitly encode another explicit significand bit. The binary point is commonly implicitly assumed to reside at a fixed position just to the right or one bit less significant than the J-bit.

The multiplication by two to the power of "(exponent-bias)" is used to shift the binary point by the exponent less the exponent bias. The exponent bias is used to control which encodings of the exponent bits represent values greater than one and which encodings of the exponent bits represent values between zero and one. The exponent bits are used to encode unsigned integers of different values. The subtraction of the exponent bias from the exponent may allow "exponent-bias" to be either positive or negative depending upon the value of the exponent and the exponent bias. The exponent biases for standard floating-point formats are typically standardized (fixed) for the format, and the standardized exponent biases often have values that map approximately equal numbers of exponent encodings to values greater than one and values between zero and one

US 2013/191432 A1 and the research papers entitled "DyBit: Dynamic Bit-Precision Numbers for Efficient Quantized Neural Network Inference" and "AdaptivFloat: A Floating-point based Data Type for Resilient Deep Learning Inference" are prior art.

Summary

The present invention is defined by the appended independent claims. Preferred embodiments are set forth in the dependent claims.

BRIEF DESCRIPTION OF THE DRAWINGS

Various examples in accordance with the present disclosure will be described with reference to the drawings, in which:

FIG. 1 is a table listing several examples of standard floating-point formats, one or more extended range floating-point formats, and a processor 102 operative to interpret and/or process floating-point data elements according to both the standard floating-point formats and the one or more extended range floating-point formats.

**FIG. 2** is a block diagram of an embodiment of a processor to perform a floating-point instruction to process floating-point data elements according to an extended floating-point range.

**FIG. 3** is a block diagram of a more detailed example embodiment of a processor to perform a floating-point instruction to process floating-point data elements according to an extended floating-point range.

**FIG. 4** is a diagram illustrating a first example embodiment of a floating-point data element being interpreted according to either a standard floating-point format or an extended exponent range floating-point format.

**FIG. 5** is a diagram illustrating a second example embodiment of a floating-point data element being interpreted according to either a standard floating-point format or an extended exponent range floating-point format.

**FIG. 6** is a diagram illustrating a third example embodiment of a floating-point data element being interpreted according to either a standard floating-point format or an extended exponent range floating-point format.

**FIG. 7** is a table listing several examples of standard floating-point formats and extended exponent range for underflow floating-point formats.

**FIG. 8** is a diagram illustrating an example embodiment of a floating-point data element being interpreted according to either a standard floating-point format or an extended exponent range floating-point format.

**FIG. 9** is a table listing several examples of standard floating-point formats and extended exponent range for overflow floating-point formats.

**FIG. 10** is a block diagram of an embodiment of a processor having one or more registers to store information associated with an extended floating-point range.

**FIG. 11** is a block diagram of an embodiment of a floating-point instruction to indicate information associated with an extended floating-point range.

**FIG. 12** illustrates an example embodiment of a method performed by a processor to process a floating-point instruction.

**FIG. 13** illustrates an example embodiment of a method to process a floating-point instruction using emulation or binary translation.

**FIG. 14** is a block diagram of an example embodiment of a processor having a floating-point arithmetic unit 105 to perform an arithmetic operation on a first floating-point data element and a second floating-point data element where at least one of the floating-point data elements utilizes a second exponent value.

**FIG. 15** is a block flow diagram of an example embodiment of a method of multiplying first and second floating-point data elements, when at least one of the first and second floating-point data elements utilizes a second exponent value.

**FIG. 16** is a block diagram of an example embodiment of a floating-point multiplier capable of multiplying first and second floating-point data elements, when at least one of the first and second floating-point data elements utilizes a second exponent value.

**FIGs. 17A-B** is a block flow diagram of an example embodiment of a method of adding first and second floating-point data elements, when at least one of the first and second floating-point data elements utilizes a second exponent value.

**FIG. 18** is a block diagram of an example embodiment of a floating-point adder capable of adding first and second floating-point data elements, when at least one of the first and second floating-point data elements utilizes a second exponent value.

**FIG. 19** illustrates an example computing system.

**FIG. 20** illustrates a block diagram of an example processor and/or System on a Chip (SoC) that may have one or more cores and an integrated memory controller.

**FIG. 21(A)** is a block diagram illustrating both an example in-order pipeline and an example register renaming, out-of-order issue/execution pipeline according to examples.

**FIG. 21(B)** is a block diagram illustrating both an example in-order architecture core and an example register renaming, out-of-order issue/execution architecture core to be included in a processor according to examples.

**FIG. 22** illustrates examples of execution unit(s) circuitry.

**FIG. 23** is a block diagram of a register architecture according to some examples.

**FIG. 24** illustrates examples of an instruction format.

**FIG. 25** illustrates examples of an addressing information field.

**FIG. 26** illustrates examples of a first prefix.

**FIGS. 27(A)-(D)** illustrate examples of how the R, X, and B fields of the first prefix in FIG. 26 are used.

**FIGS. 28(A)-(B)** illustrate examples of a second prefix.

**FIG. 29** illustrates examples of a third prefix.

**FIG. 30** is a block diagram illustrating the use of a software instruction converter to convert binary instructions in a source instruction set architecture to binary instructions in a target instruction set architecture according to examples.

DETAILED DESCRIPTION OF EMBODIMENTS

Disclosed herein are embodiments of methods of interpreting and/or processing floating-point data elements according to one or more extended range floating-point formats, embodiments of processors to interpret and/or process floating-point data elements according to one or more extended range floating-point formats, embodiments of systems incorporating one or more processors to interpret and/or process floating-point data elements according to one or more extended range floating-point formats, embodiments of floating-point instructions to utilize one or more extended range floating-point formats, and embodiments of programs or machine-readable mediums storing or otherwise providing floating-point instructions to utilize one or more extended range floating-point formats. In the following description, numerous specific details are set forth (e.g., specific instruction operations, floating-point formats, processor configurations, microarchitectural details, sequences of operations, etc.). However, embodiments may be practiced without these specific details. In other instances, well-known circuits, structures, and techniques have not been shown in detail to avoid obscuring the understanding of the description.

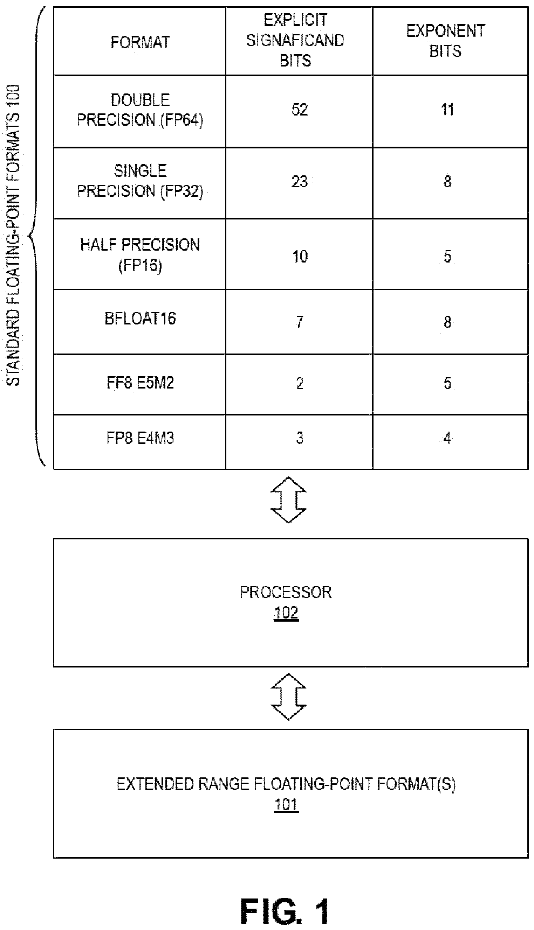

**FIG. 1** is a table listing several examples of standard floating-point formats 100, one or more extended range floating-point formats 101, and a processor 102 operative to interpret and/or process floating-point data elements according to both the standard floating-point formats 100 and the one or more extended range floating-point formats 101.

Six example standard floating-point formats are shown in different rows. The number of explicit significand bits and the number exponent bits are listed in columns for these six standard floating-point formats. A double-precision floating-point format (sometimes called FP64) is a 64-bit format that includes one sign bit, fifty-three significand bits (fifty-two of which are explicit and one of which is implicit), and eleven exponent bits. A single-precision floating-point format (sometimes called FP32) is a 32-bit format that includes one sign bit, twenty-four significand bits (twenty-three of which are explicit and one of which is implicit), and eight exponent bits. A half-precision floating-point format (sometimes called FP16) is a 16-bit format that includes one sign bit, eleven significand bits (ten of which are explicit and one of which is implicit), and 5 exponent bits. A bfloat16 or bf16 floating-point format is a 16-bit format that includes one sign bit, eight significand bits (seven of which are explicit and one of which is implicit), and eight exponent bits. An FP8 E5M2 format is an 8-bit format that includes one sign bit, three significand bits (two of which are explicit and one of which is implicit), and five exponent bits. An FP8 E4M3 format is an 8-bit format that includes one sign bit, four significand bits (three of which are explicit and one of which is implicit), and four exponent bits. Other standard floating-point formats are also known, such as, for example, extended double-precision floating-point format, tensor float 32 floating-point format (sometimes called TF32), etc. TF32 is a floating-point format that is not byte aligned and has one sign bit, eleven significand bits (ten of which are explicit and one of which is implicit), and eight exponent bits.

The processor 102 may be operative to interpret and/or process floating-point data elements according to and/or consistent with one or more of these standard floating-point formats 100. For example, for a 32-bit single-precision floating-point format, the processor may understand or know which 8 bits are exponent bits, which 23 bits are explicit significand bits, how denormal (also referred to as subnormal) values are represented, how infinite values are represented, and so on.

Now, one limitation to these standard floating-point formats is that they each have a respective fixed number of exponent bits. The number of exponent bits largely determines the range or extent of the values that the floating-point data elements can represent. Generally, formats with more exponent bits have a greater range or extent than formats with less exponent bits. For example, the FP64 format can represent larger and smaller numbers than the FP32 format. Often, the minimum or smallest exponent capable of being encoded in the exponent bits (e.g., exponent bits that are all zeroes) is used to indicate underflow and/or a denormal. As a result, values too small to be represented in a given format typically are interpreted or processed as denormals. Often, the maximum or largest exponent capable of being encoded in the exponent bits (e.g., exponent bits that are all ones) is used to indicate overflow and/or an infinity. For example, exponent bits that are all ones and significand bits that are all zeroes may be used to represent overflow and/or infinity. Also, exponent bits that are all ones and significand bits that are not all zeroes may be used to represent Not a Number (NaN).

One challenge is that current approaches used to process denormal tend to have certain drawbacks. For example, one way to process the denormals is to implement circuitry or hardware capable of processing the denormals. However, such circuitry or hardware tends to be costly in terms of additional die area and/or additional power consumption and/or tends to add latency which can reduce performance. As a result, many widely used general-purpose processors and other processors do not include circuitry or hardware capable of processing the denormals. Another way to process the denormals is to trap the denormals and process them in software or microcode. However, such an approach tends to be undesirably slow and to reduce performance. Furthermore, a wide variety of different types of applications encounter denormals and for some of these applications the ability to process such very small numbers efficiently is needed. One such example is in training for machine learning and artificial intelligence where the ability to efficiently process very small numbers is often needed to achieve convergence in the training. Consequently, new and different ways to process small numbers would be useful.

In some embodiments, the processor 102 may also be operative to interpret and process floating-point data elements according to the one or more extended range floating-point formats 101. Any one or more of the extended range floating-point formats discussed further below are suitable. Advantageously, the extended range floating-point formats may provide an extended range or larger range than that provided by the corresponding standard floating-point format. In some embodiments, the extended range may extend the range of the smallest numbers representable. Advantageously, this may allow small numbers, which would otherwise be denormals, to be processed more efficiently and without the challenges and drawbacks associated with processing denormals. In other embodiments, the extended range may extend the range of the largest numbers representable. In still other embodiments, the extended range may extend the range of both the smallest numbers representable and the largest numbers representable.

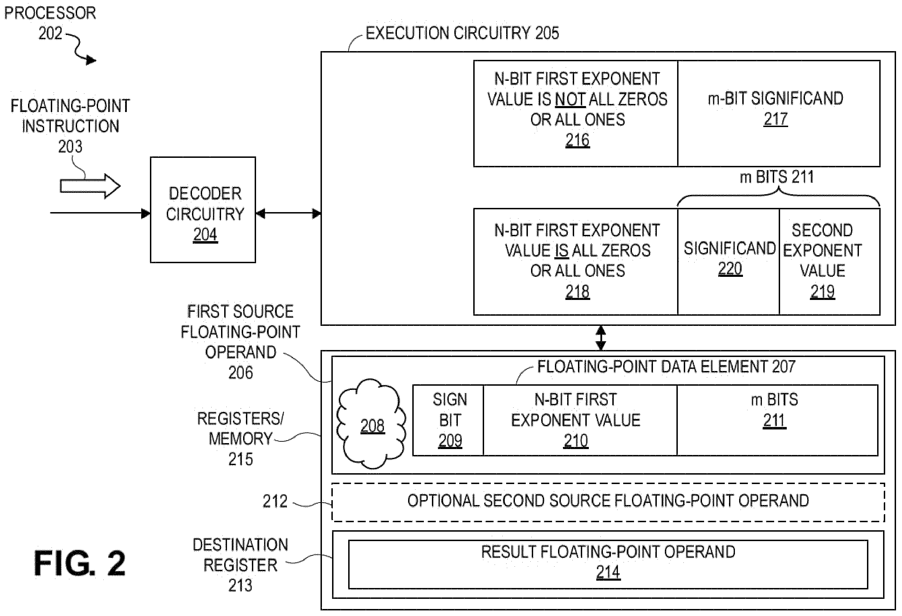

**FIG. 2** is a block diagram of an embodiment of a processor 202 to perform a floating-point instruction 203 to process floating-point data elements according to an extended floating-point range. In some embodiments, the processor may represent a general-purpose processor (e.g., a general-purpose microprocessor or central processing unit (CPU) of the type used in desktop, laptop, or other computers). Alternatively, the processor may represent a special-purpose processor. Examples of suitable special-purpose processors include, but are not limited to, coprocessors, machine-learning processors, artificial intelligence processors, graphics processors, and digital signal processors (DSPs). The processor may have any of various complex instruction set computing (CISC) architectures, reduced instruction set computing (RISC) architectures, very long instruction word (VLIW) architectures, hybrid architectures, other types of architectures, or have a combination of different architectures (e.g., different cores may have different architectures). In some embodiments, the processor may include (e.g., be disposed on) at least one integrated circuit or semiconductor die.

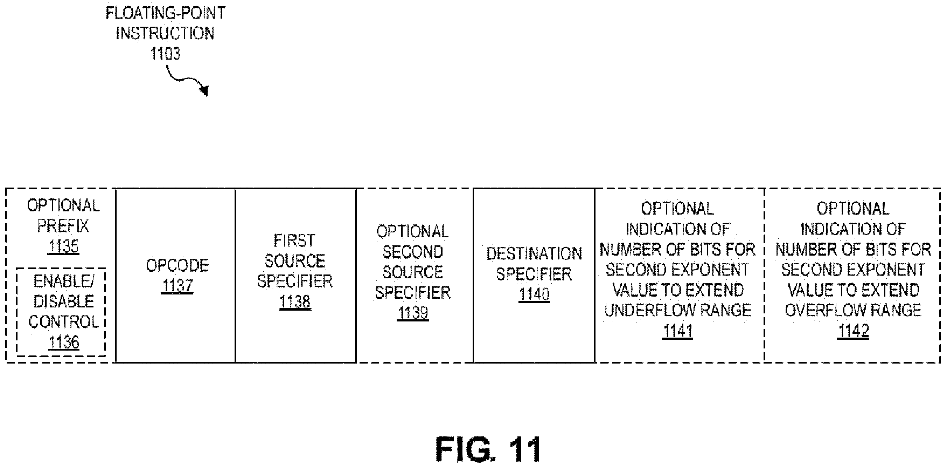

The processor may be coupled to receive a floating-point instruction 203. The floating-point instruction may represent a macroinstruction, machine code instruction, or instruction of an instruction set of a processor. The floating-point instruction may be in any suitable format, such as, for example, the format described with reference to **FIG. 11** or other formats below. More detailed examples of at least one instruction format for the instruction will be detailed later. The instruction includes one or more fields for an opcode. In some examples, the opcode at least partially or fully specifies the operation of the instruction to be performed (e.g., floating-point format conversion, addition, multiplication, etc.).

The instruction may explicitly specify (e.g., through one or more fields or a set of bits), or otherwise indicate (e.g., implicitly indicate), at least a first source floating-point operand 206. The first source floating-point operand may have at least a floating-point data element 207. In various embodiments, the floating-point data element may be an 8-bit, 16-bit, 32-bit, or 64-bit floating-point data element (e.g., having a number of exponent bits as shown in **FIG. 1**). In various embodiments, the first source floating-point operand may be a scalar operand only having the floating-point data element, or the first source floating-point operand may be a vector operand having the floating-point data element among a vector of floating-point data elements, or the first source floating-point operand may be a matrix operand having the floating-point data element among a matrix of floating-point data elements. For simplicity of the description, only the floating-point data element is shown, although the concepts described herein may optionally apply to other floating-point data elements of a vector or matrix. In some embodiments the instruction may optionally specify or otherwise indicate an optional second source floating-point operand 212 (e.g., a scalar, vector, or matrix operand like the first source floating-point operand). The first and optional second source floating-point operands may be stored in registers and/or memory 215. The instruction may also specify or otherwise indicate a destination register 213 where a result floating-point operand 214 is to be stored. As one example, the instruction may have source and/or destination fields or identifiers to specify or otherwise indicate such registers/memory locations for these operands. Alternatively, one or more of these registers/memory locations may optionally be implicit to the instruction (e.g., implicit to the opcode). For example, a source/destination register may be implicitly or impliedly understood to be used for both the first source floating-point operand and the result floating-point operand.

The destination register 213, and optionally one or more registers used to store the at least one source floating-point operand, may represent on-die (or on integrated circuit) storage locations to store data. These registers may represent architectural registers or architecturally-visible registers that are visible to software and/or a programmer and/or the registers indicated by instructions of the instruction set of the processor to identify operands. These architectural registers are contrasted to non-architectural registers in a microarchitecture (e.g., temporary registers, reorder buffers, retirement registers, etc.). The registers may be implemented in different ways in different microarchitectures and are not limited to any particular type of design. Examples of suitable types of registers include, but are not limited to, dedicated physical registers, dynamically allocated physical registers using register renaming, and combinations thereof. Example register types include scalar registers (e.g., general-purpose registers (GPRs)), packed data or vector registers, tile registers used to store matrices or parts of matrices, and so on.

The decoder circuitry 204 may be able or operative to decode the floating-point instruction into one or more lower-level control signals or operations. In some examples, this decoding includes generating a plurality of micro-operations to be performed by execution circuitry 205. For some instruction encodings, the decoder circuitry may also optionally decode instruction prefixes. In some embodiments, the decoder circuitry may include at least one input structure (e.g., a port, interconnect, or interface) coupled to receive the floating-point instruction, an instruction recognition and decoder circuitry coupled therewith to recognize and decode the floating-point instruction, and at least one output structure (e.g., a port, interconnect, or interface) coupled therewith to output the one or more lower-level control signals or operations or decoded instructions. The instruction recognition and decoder circuitry may be implemented using various approaches including, but not limited to, microcode read only memories (ROMs), look-up tables, hardware implementations, programmable logic arrays (PLAs), other mechanisms suitable to implement decoder circuitry, and combinations thereof. In some embodiments, the decoder circuitry may be included on a die, integrated circuit, or semiconductor substrate.

Execution circuitry 205 is coupled with the decoder circuitry 204 (e.g., to receive the one or more lower-level control signals or operations). The execution circuitry is also coupled with the registers/memory 215 (e.g., to receive the first and optional second source floating-point operands and to store the result floating-point operand). The execution circuitry is to able or operative to perform operations corresponding to the floating-point instruction 203 (e.g., as specified by an opcode of the floating-point instruction, as specified by control bits in a floating-point control register, etc.).

The execution circuitry 205 may receive the floating-point data element 207. The floating-point data element may have a sign bit 209, an N-bit first exponent value 210 (e.g., where N is one of the numbers of exponent bits shown in **FIG. 1**), and M additional bits 211. The M bits are separate and distinct bits from those used for the N-bit first exponent value. N and M may be integers, such as, for example, having the values shown for the number of exponent bits and the number of explicit significand bits shown in **FIG. 1**. These are all explicitly encoded bits in the floating-point data element (e.g., the 8-bit, 16-bit, 32-bit, or 64-bit floating-point data element). The floating-point data element may also have an implicit most significant significand bit or J-bit 208 which is not explicitly encoded in the bits of the floating-point data element.

In some embodiments, the execution circuitry may be operative to interpret and/or process and/or handle the M bits 211 based at least in part on the N-bit first exponent value 210 (e.g., based on its binary value). As shown within the execution circuitry in the illustration, in some embodiments, when the N-bit first exponent value 216 is not all zeroes and/or a minimum binary value (e.g., is not 00000, 00000000, 00000000000, etc.) or all ones and/or a maximum binary value (e.g., is not 11111, 11111111, 11111111111, etc.), then the M bits 211 may be interpreted and/or processed as an M-bit significand 217. In this case, the N-bit first exponent value may be the actual single exponent of the floating-point data element. Typically, such an interpretation may conform to and/or be consistent with the floating-point data element 207 having a standard floating-point format, such as, for example, one of those described for **FIG. 1**. For example, in the case of the floating-point data element 207 having a double precision or FP64 format, when the eleven least significant bits of the floating-point data element corresponding to the eleven exponent bits are not all zeroes or all ones (e.g., not 00000000000 and not 11111111111), then the execution circuitry may interpret the contiguously next more significant fifty-two bits as a 52-bit significand (e.g., the explicit significand, notwithstanding that there is an implicit most significand bit or J-bit). This may be done similarly for the other standard formats of **FIG. 1**.

Conversely, as shown further below within the execution circuitry in the illustration, in some embodiments, when the N-bit first exponent value 218 is all zeroes and/or a minimum binary value (e.g., is 00000, 00000000, 00000000000, etc.) or is all ones and/or a maximum binary value (e.g., is 11111, 11111111, 11111111111, etc.), then the M bits 211 may be interpreted and/or processed as including an at least one bit second exponent value 219 in at least one of the M bits 211, and an at least one bit significand 220 (e.g., an explicit significand) in at least one other of the M bits 211. This may be true when the M bits are not all zeroes. The at least one bit second exponent value may either be an actual exponent or may be a value that when combined with or applied to an actual exponent is an exponent. For example, in the case of the floating-point data element 207 otherwise having a double precision or FP64 format, when the eleven least significant bits of the floating-point data element corresponding to the eleven exponent bits are all zeroes or all ones (e.g., are 00000000000 or 11111111111), then the execution circuitry may interpret the contiguously next more significant fifty-two bits as having both the second exponent value 219 and the significand 220 (e.g., the explicit significand). This may be done similarly for the other standard formats of **FIG. 1**. Such an interpretation does not conform to, and is not consistent with, the floating-point data element 207 having one of the standard floating-point formats described for **FIG. 1**. Conventionally, the floating-point data element conforming to one of the standard floating-point formats described for **FIG. 1** would not have a second exponent value. Rather, such an interpretation corresponds to an extended exponent range format used when the N-bit first exponent value 210 of the floating-point data element 207 has a special value (e.g., all zeroes, all ones, or either all zeroes or all ones).

In the case of the N-bit first exponent value being all zeroes, this may effectively represent redefining the meaning or interpretation of what would otherwise be significand bits (e.g., the least significant of the significand bits) to form the second exponent value to allow smaller floating-point numbers to be expressed than would be otherwise possible for the associated standard floating-point format without the second exponent value. In the case of the N-bit first exponent value being all ones, this may effectively represent leveraging redundant bits of special floating-point numbers (e.g., infinity and/or Not a Number (NaN)) to form the second exponent value to allow larger floating-point numbers to be expressed than would be otherwise possible for the associated standard floating-point format without the second exponent value.

In various embodiments, the at least one bit second exponent value 219 may be two, three, four, five, six, or more bit second exponent value. In various embodiments, the at least one bit significand 220 may be a two, three, four, five, six, or more bit significand. In some embodiments, the at least one bit second exponent value may optionally have enough bits to be able to shift or cover from at least a majority to all the bits of the at least one bit significand. The at least one bit second exponent value having at least $\log^2$(significand bits)+1 number of bits will generally allow the at least one bit significand to shift or cover all the bits of the at least one bit significand. In some embodiments, the at least one bit significand 220 may optionally have from at least a majority to all remaining of the M bits 211 not used for the at least one bit second exponent value 219. Often, it may be advantageous for the at least one bit second exponent value 219 and the at least one bit significand 220 to collectively utilize from at least a majority to all of the M bits 211 in order to achieve a relatively more expanded exponent range and/or more precision, although it is also possible to leave some of the bits unused for either purpose. There is utility in using one or more of the bits even if not all of them. Also, it is contemplated that one or more of the M bits may optionally be used for another purpose (e.g., to indicate infinity, to indicate Not a Number (NaN), to provide other information).

The ability to utilize the alternate meaning or interpretation of the M bits as including the second exponent value 219 (e.g., instead of just being the M-bit significand 217) may either be always enabled (e.g., built or baked into the circuitry) or configurable so that it can be either enabled or disabled. When configurable, the configurability may be provided in different ways in different embodiments. In some embodiments, the configurability may be provided via one or more registers. For example, there may be one or more bits in a model specific register, processor configuration register, processor control register, or other such register to enable or disable the feature. Representatively, such a register may allow the feature to be enabled or disabled on a multiple thread, multiple cores, or whole processor basis. As another example, there may be one or more bits in a floating-point control register or the like to enable or disable the feature. Representatively, such a register may allow the feature to be enabled or disabled on thread-by-thread basis. In other embodiments, the instruction may have one or more bits to enable or disable the feature. As one example, an opcode of the instruction may enable or disable the feature (e.g., certain opcodes may enable the feature while other opcodes may disable the feature). As another example, an instruction may have a prefix to enable or disable the feature (e.g., an instruction with a prefix may enable the feature while an instruction without the prefix may disable the feature, or the opposite). As yet another example, an instruction may have an immediate or other field or set of one or more bits to enable or disable the feature (e.g., a first value of the immediate, field, or set of one or more bits may enable the feature while a second value may disable it).

Also, the number of bits of the at least one bit second exponent value, the number of bits of the at least one bit significand, or both, may either be fixed/static (e.g., built or baked into the circuitry) or dynamically variable, flexible, or configurable. When configurable, the configurability may be provided in different ways in different embodiments. In some embodiments, the configurability may be provided via one or more registers. For example, there may be one or more bits in a model specific register, processor configuration register, processor control register, or other such register to specify or configure one or more of these numbers of bits. Representatively, such a register may allow the number of bits to be configured on a multiple thread, multiple cores, or whole processor basis. As another example, there may be one or more bits in a floating-point control register or the like to specify or configure one or more of these numbers of bits. Representatively, such a register may allow the number of bits to be configured on a thread-by-thread basis. In other embodiments, the instruction may have one or more bits to specify or configure one or more of these numbers of bits. For example, an instruction may have a prefix to configure the number of bits. As example, an instruction may have an immediate or other field or set of one or more bits to configure the number of bits (e.g., a value of the immediate, other field, or other set of one or more bits may specify the number of bits).

In some embodiments, the extended range format is not a posit format. For example, as opposed to a posit format, the N-bit first exponent value may have the same number of bits in both interpretations and may have a fixed number of bits irrespective of the particular values of the bits of the floating-point number, rather than a number of bits that depends upon the particular values of the bits of the floating-point number (e.g., a flexible number of bits in the regime depending upon the particular values of the bits). Also, as opposed to a posit format, the extended range format may not have a regime.

Although interpretation of only the single floating-point data element has been described, it is to be appreciated that other floating-point data elements of the first and optional second source floating-point operands may be interpreted analogously.

One possible advantage of the extended range floating-point format is an ability to efficiently provide extended range for floating-point numbers (e.g., an extended range or larger range than that provided by the associated standard floating-point format). In one aspect, the extension may be on the underflow side to provide additional range before small numbers become denormals, which may also help to avoid the challenges and drawbacks associated with processing denormals. This may potentially offer advantages especially in machine learning and artificial intelligence. In another aspect, the extension may be on the overflow side to provide additional range before numbers become infinite. Another possible advantage of the extended range floating-point format is that it is generally backwards compatible and/or interchangeable with the associated standard floating-point formats and hardware. For example, if floating-point numbers are encoded according to the extended range floating-point format and put into standard floating-point format operations and circuitry, then the outputs will generally still be correct. Another possible approach is to use a posit encoding, but these posit encodings are not backwards compatible and/or interchangeable with the standard floating-point formats of FIG. 1 and pose certain other challenges.

In some embodiments, a floating-point data element with a second exponent value can also be processed natively on conventional floating-point data processing hardware. For example, in the case of an N-bit first exponent value of all zeroes, the least significant bit(s) used for the at least one bit second exponent value may optionally be left alone and treated as part of the significand. This may either represent a small error value which may be acceptable for the implementation or may even be used to introduce stochastic rounding which may be beneficial for some applications like artificial intelligence training. In some embodiments, conventional floating-point data processing hardware may be altered in minor ways to allow a floating-point data element with a second exponent value to be processed. For example, in the case of an N-bit first exponent value of all zeroes, conventional floating-point data processing hardware may be adapted to include logic to zero out the least significant bit(s) used for the at least one bit second exponent value. This may sacrifice some precision but may be acceptable for the implementation.

The execution circuitry may also be operative to perform one or more floating-point operation(s) specified by and/or corresponding to the instruction on the at least one source floating-point operand (e.g., the first source floating-point operand and the optional second source floating-point operand) to generate the result floating-point operand 214. This may be based on the interpretation of the M bits as described above. Examples of suitable operations include, but are not limited to: (1) scalar, vector, or matrix floating-point format conversion (e.g., conversion from one floating-point format (e.g., FP64) to another (e.g., FP32)); (2) scalar, vector, or matrix addition (e.g., addition of two scalar values, addition of corresponding elements of two vectors); (3) scalar, vector, or matrix multiplication (e.g., multiplication of two scalar values, multiplication of corresponding elements of two vectors, multiplication of two matrices); (4) scalar, vector, or matrix multiplication and accumulation (e.g., multiplication of two scalar values and accumulation of the product with a third scalar value, multiplication of corresponding elements of two vectors and accumulation of the products with corresponding elements of a third vector, multiplication of corresponding elements of two matrices and accumulation of the products with corresponding elements of a third matrix). These are just a few illustrative examples of suitable types of operations. A wide variety of other types of arithmetic, logical, or other operations performed on floating-point data elements are also suitable (e.g., absolute value, dot product, rounding to integral values, and so on). The vector operations may either be masked/predicated or unmasked/unpredicated. By way of example, an unmasked vector operation may include performing an operation (e.g., addition, multiplication, etc.) on each pair of corresponding (e.g., in the same relative bit positions) floating-point data elements of first and second source floating-point vectors to generate a result floating-point vector having the results of the operations (e.g., the sums of the corresponding pairs of floating-point data elements, the products of the corresponding pairs of floating-point data elements, etc.). The masked vector operation may be similar but may only be performed on those corresponding pairs of floating-point data elements for which a corresponding mask bit or mask element of a mask operand is unmasked or a has a first value as opposed to being masked or having a second value.

The execution circuitry 205 may store the result floating-point operand 214 in the destination register 213. For example a single result floating-point data element may be stored in a scalar general-purpose register, or a vector of result floating-point data elements may be stored in a vector, packed, or SIMD register, or a matrix of result floating-point data elements may be stored in a tile storage.

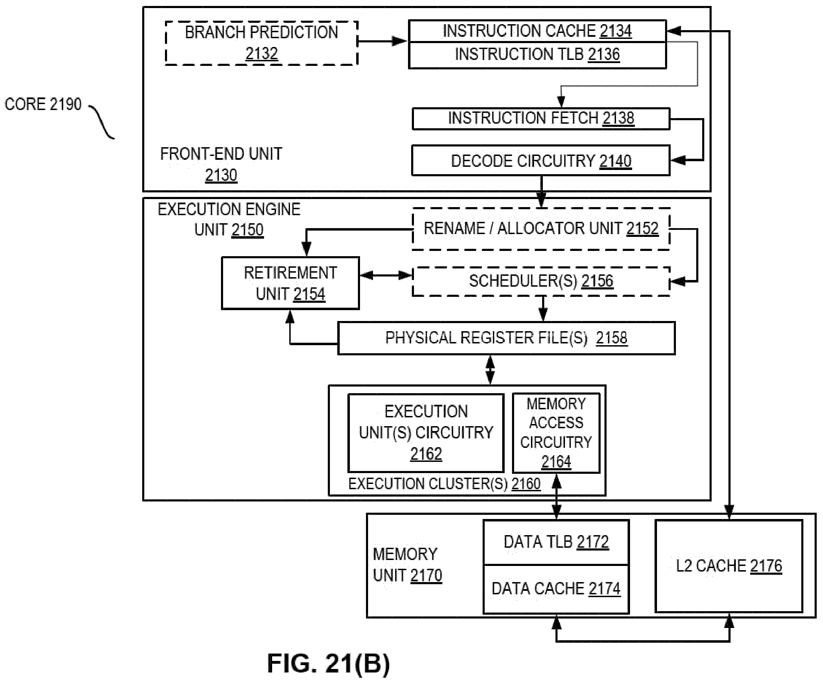

In some embodiments, the execution circuitry may be a floating-point unit, a floating-point arithmetic unit, a floating-point arithmetic logic unit, a floating-point multiplier, a floating-point adder, or the like. In some embodiments, the execution circuitry may include specific or particular logic to perform the instruction. By way of example, the execution circuitry may include floating-point element processing circuitry (e.g., exponent processing circuitry (e.g., an exponent adder), circuitry to subtract or remove an exponent bias from an exponent, circuitry to evaluate a value of the N-bit first exponent value (e.g., if it is all zeroes or all ones), etc.). In some embodiments, the execution unit may include one or more input structures (e.g., a port, interconnect, or interface) coupled to receive the first source floating-point operand 206, circuitry coupled therewith to receive and process the first source floating-point operand and generate the result operand, and one or more output structures (e.g., a port, interconnect, or interface) coupled therewith to output the result floating-point operand 214. Other example execution circuitry includes execution cluster(s) 2160 shown in **FIG. 21(B),** etc.

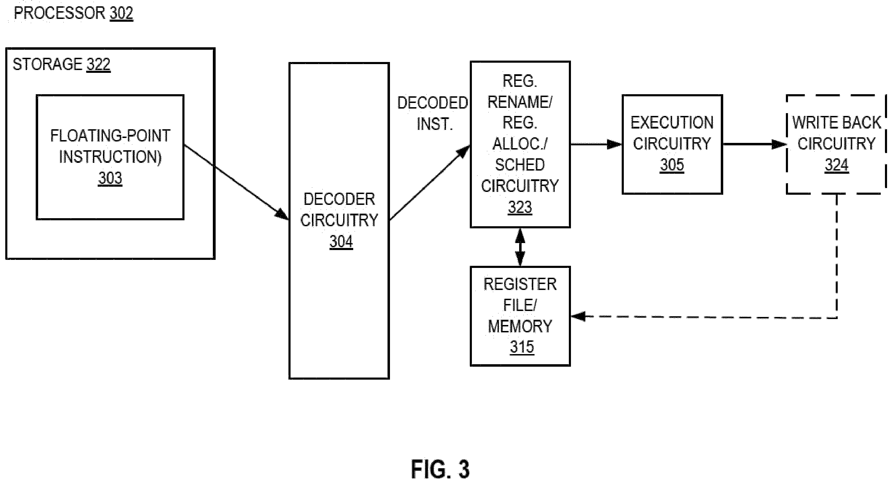

**FIG.** 3 is a block diagram of a more detailed example embodiment of a processor 302 to perform a floating-point instruction 303 to process floating-point data elements according to an extended floating-point range. The processor includes decoder circuitry 304 to decode the floating-point instruction, execution circuitry 305 to perform operations corresponding to the floating-point instruction, and registers and/or memory 315 to store operands for the floating-point instruction. Aside from aspects related to the additional components of the processor, and unless otherwise specified, the floating-point instruction 303, the decoder circuitry 304, the execution circuitry 305, and the registers/memory 315 may optionally be the same as or similar to the floating-point instruction 203, the decoder circuitry 204, the execution circuitry 205, and the registers/memory 215, respectively, previously described for **FIG. 2**. To avoid obscuring the description, the different and/or additional aspects of the embodiment of **FIG. 3** will primarily be described, without repeating all the aspects that may optionally be the same as or like those already described for **FIG. 2**.

An optional storage 322 may store the floating-point instruction. By way of example, the storage may be a cache (e.g., an instruction cache, a unified cache) or memory coupled with the processor.

The decoder circuitry 304 may receive and decode the floating-point instruction as previously described. For example, the decoder circuitry may optionally be coupled with the storage via an optional fetch circuitry (not shown) to receive the instruction.

In some examples, optional register renaming, register allocation, and/or scheduling circuitry 323 may provide functionality for one or more of: (1) renaming logical operand values to physical operand values (e.g., a register alias table in some examples); (2) allocating status bits and flags to the decoded instruction; and (3) scheduling the decoded instruction for execution by execution circuitry out of an instruction pool (e.g., using a reservation station in some examples).

The registers/memory 315 may store operands of the floating-point instruction as previously described. The various numbers and types of operands are still possible.

The execution circuitry 305 is coupled with the decoder circuitry 304 and the registers/memory 315 via the intervening register renaming, register allocation, and/or scheduling circuitry 323. The execution circuitry 305 may perform operations corresponding to the floating-point instruction as previously described. Example execution circuitry includes execution cluster(s) 2160 shown in **FIG. 21(B),** etc.

Optional retirement/write back circuitry 324 may architecturally commit the destination register into the registers/memory 315 and commit the floating-point instruction.

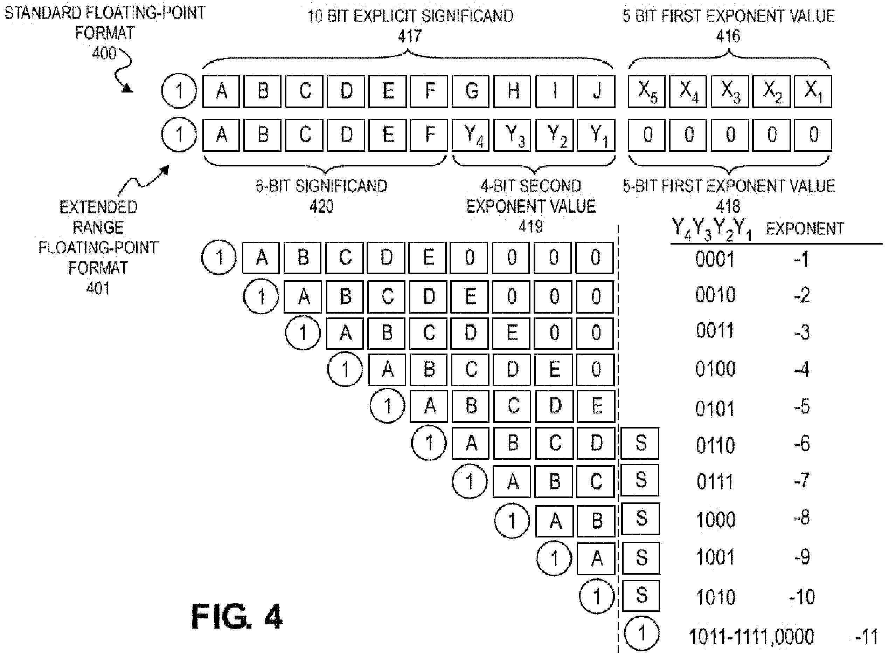

**FIG.** 4 is a diagram illustrating a first example embodiment of a floating-point data element being interpreted according to either a standard floating-point format 400 or an extended exponent range floating-point format 401. In each of the standard and extended exponent range floating-point formats, the leftmost bit in the illustration is the implicit most significant bit (MSB) of the significand or J-bit, which is not explicitly encoded. Also, for simplicity of illustration, the sign bit is not shown for either the standard and extended exponent range floating-point formats, since the sign bit may be interpreted and used in the same conventional way for both formats.

As shown for the standard floating-point format 400, execution circuitry may interpret 10 bits (A-J) as a 10-bit explicit significand 417, when a 5-bit first exponent value (X5-X1) 416 is not all zeroes or all ones (e.g., X5-X1 is not 00000 or 11111). This corresponds to a standard half precision (FP16) floating-point format.

As shown for the extended exponent range floating-point format 401, execution circuitry may interpret the same corresponding 10 bits as including a 4-bit second exponent value (Y4-Y1) 419 in the four least significant of these 10 bits (e.g., corresponding in position to GHIJ), and a 6-bit significand 420 in the six most significant bits (A-F), when a 5-bit first exponent value 418 is all zeroes (i.e., 00000). In this case, the 6-bit significand includes all the 10 bits not used for the 4-bit second exponent value (Y4-Y1). The execution circuitry is to use an exponent encoded in the 4-bit second exponent value to shift, move, or otherwise interpret or identify the position of the binary point relative to the 6-bit significand (e.g., which, since the 5-bit first exponent value is all zeroes, represents a denormal number).

The lower portion of the diagram illustrates the application of different exponents to eleven bits (for this FP16-based embodiment) including the implicit MSB of the significand, the six explicit bits of the significand, and one zero for each of the 4-bit exponent value bits. A table shows one example of how the 4-bit second exponent values (Y4-Y1) may be mapped to the different exponents, although there are numerous different ways in which this may be done. These exponents correspond to different shifts or movements of the binary point. Each progressively more negative exponent may cause the execution circuitry to shift out the next least significant bit. For example, the exponent of -2 may cause the execution circuitry to shift out bit E, the exponent of -7 may cause the execution circuitry to shift out bit D, and so on. For exponents of -1 to -4, respectively, there is four, three, two, and one bit less precision than for standard denormal values, but for the remaining exponents the number of bits of precision is the same as for standard denormals. In some embodiments, the 4-bit second exponent value (Y4-Y1) has enough bits to be able to map to any one of at least ten, or in some cases eleven, different exponents, which may allow the execution circuitry to separately shift out each the at least ten bits A-J, or in some cases each of the ten bits A-J and also the implicit MSB of the significand. In this example, eleven different 4-bit second exponent values (Y4-Y1) are mapped to eleven different negative and non-zero exponents ranging from -1 to -11.

In some embodiments, for the bits of the 6-bit explicit significand and the implicit MSB of the significand, the most significant bit shifted out may be shifted into the sticky bit (S). For example, the exponent of -6 may cause the execution circuitry to shift bit E into the sticky bit (S), the exponent of -7 may cause the execution circuitry to shift bit D into the sticky bit (S), the exponent of -11 (e.g., when the 4-bit second exponent value (Y4-Y1) has a give value in this example one of 1011-1111 or 0000) may cause the execution circuitry to shift out all of the bits of the 6-bit significand and shift the implicit MSB of the significand into the sticky bit (S), and so on. For example, since the implicit MSB of the significand is set to a value of binary one, the sticky bit may be set to a value of binary one, for an exponent of -11. In some embodiments, additional bits (e.g., round bit, guard bit) may optionally also be calculated based on bits shifted out, although this is not required. The illustration is just one possible example. In another embodiment, the F bit could be represented in the coding and the F could be present in other second exponent cases and ultimately form part of the sticky bit.

In some embodiments, the application of these exponents (e.g., the shifting) may be implemented using existing regular range floating-point datapaths as opposed to conventional circuitry/hardware to handle denormals in hardware. There may be a small reduction in precision compared to rigorously computed denormal numbers under certain conditions (e.g., when the extended exponent is very small).

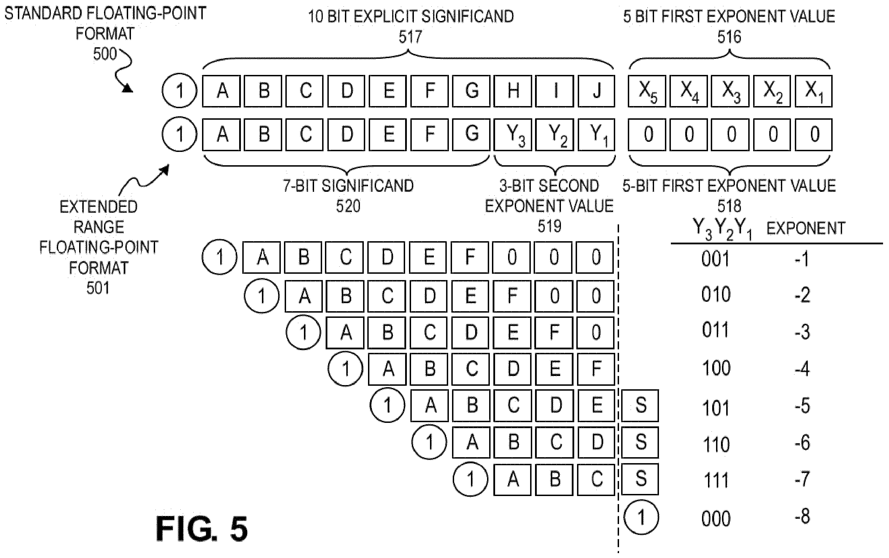

FIG. 5 is a diagram illustrating a second example embodiment of a floating-point data element being interpreted according to either a standard floating-point format 500 or an extended exponent range floating-point format 501. Aside from a few different and/or additional aspects which will be described below, and unless otherwise specified, this second example embodiment may optionally be like the first example embodiment already described for FIG. 4. To avoid obscuring the description, the different and/or additional aspects of the second example embodiment of FIG. 5 will primarily be described, without repeating all the aspects that may optionally be similar to those already described for FIG. 4.

As shown for the standard floating-point format 500, execution circuitry may interpret 10 bits (A-J) as a 10-bit explicit significand 517, when a 5-bit first exponent value (X5-X1) 516 is not all zeroes or all ones (e.g., X5-X1 is not 00000 or 11111). This corresponds to a standard half precision (FP16) floating-point format.

As shown for the extended exponent range floating-point format 501, execution circuitry may interpret the same corresponding 10 bits as including a 3-bit second exponent value (Y3-Y1) 519 in the three least significant of these 10 bits (e.g., corresponding in position to HIJ), and a 7-bit significand 520 in the seven most significant bits (A-G), when a 5-bit first exponent value 518 is all zeroes (i.e., 00000). The execution circuitry is to use an exponent encoded in the 3-bit second exponent value to ft, move, or otherwise interpret or identify the position of the binary point relative to the 7-bit significand (e.g., which, since the 5-bit first exponent value is all zeroes, represents a denormal number).

The lower portion of the diagram illustrates the application of different exponents to eleven bits (for this FP16-based embodiment) including the implicit MSB of the significand, the seven explicit bits of the significand (A-J), and one zero for each of the 3-bit exponent value bits. A table shows one example of how the 3-bit second exponent values (Y3-Y1) may be mapped to the different exponents, although there are numerous different ways in which this may be done.

In this second example embodiment, the 3-bit second exponent value (Y3-Y1) does not have enough bits to be able to map to any one of eleven different exponents to allow the execution circuitry to separately shift out each of the ten bits A-J and the implicit MSB of the significand. Rather, the 3-bit second exponent value is only able to encode eight different values. In this second example embodiment, these eight different values are mapped to eight corresponding different negative and non-zero exponents ranging from -1 to -8.

As previously described, for the bits of the 7-bit explicit significand, the most significant bit shifted out may be shifted into the sticky bit (S). For example, the exponent of -5 may cause the execution circuitry to shift bit F into the sticky bit (S), the exponent of -6 may cause the execution circuitry to shift bit E into the sticky bit (S), and the exponent of -7 may cause the execution circuitry to shift bit D into the sticky bit (S). In this example, for an exponent of -8, since no additional exponent values can be encoded in the 3-bit second exponent value, a hard underflow condition happens, and the implicit MSB of the significand may be used to set the sticky bit. Alternatively, the eight 3-bit second exponent values may optionally be mapped to different exponents, including exponents of other values besides exponents ranging from -1 to -8, if desired.

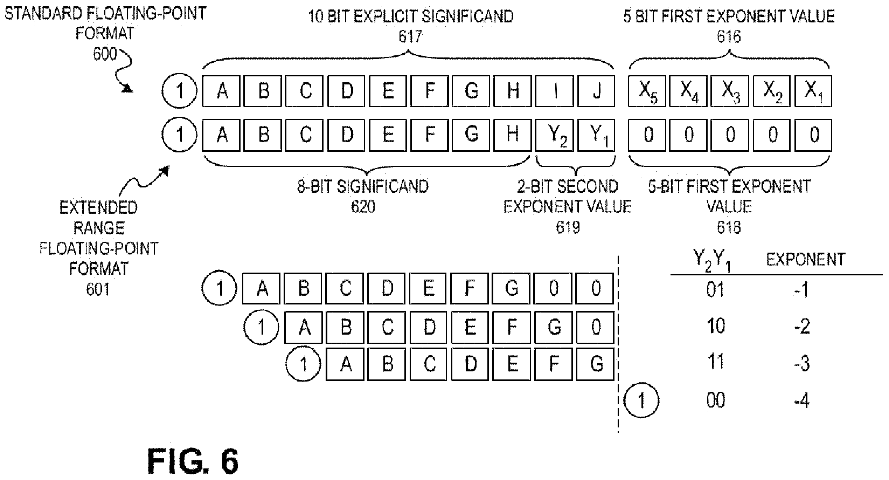

FIG. 6 is a diagram illustrating a third example embodiment of a floating-point data element being interpreted according to either a standard floating-point format 600 or an extended exponent range floating-point format 601. Aside from a few different and/or additional aspects which will be described below, and unless otherwise specified, this third example embodiment may optionally be similar to the first and second example embodiments already described for **FIGs. 4-5.** To avoid obscuring the description, the different and/or additional aspects of the third example embodiment of **FIG. 6** will primarily be described, without repeating all the aspects that may optionally be similar to those already described for **FIGs. 4-5.**

As shown for the standard floating-point format 600, execution circuitry may interpret 10 bits (A-J) as a 10-bit explicit significand 617, when a 5-bit first exponent value (X5-X1) 616 is not all zeroes or all ones (e.g., X5-X1 is not 00000 or 11111). This corresponds to a standard half precision (FP16) floating-point format.

As shown for the extended exponent range floating-point format 601, execution circuitry may interpret the same corresponding 10 bits as including a 2-bit second exponent value (Y2-Y1) 619 in the two least significant of these 10 bits (e.g., corresponding in position to IJ), and an 8-bit significand 620 in the eight most significant bits (A-G), when a 5-bit first exponent value 618 is all zeroes (i.e., 00000). The execution circuitry is to use an exponent encoded in the 2-bit second exponent value to ft, move, or otherwise interpret or identify the position of the binary point relative to the 8-bit significand (e.g., which, since the 5-bit first exponent value is all zeroes, represents a denormal number).

The lower portion of the diagram illustrates the application of different exponents to eleven bits (for this FP16-based embodiment) including the implicit MSB of the significand, the seven explicit bits of the significand (A-J), and one zero for each of the 2-bit exponent value bits. A table shows one example of how the 2-bit second exponent values (Y2-Y1) may be mapped to the different exponents, although there are different ways in which this may be done.

In this third example embodiment, the 2-bit second exponent value (Y3-Y1) does not have enough bits to be able to map to any one of eleven different exponents to allow the execution circuitry to separately shift out each of the ten bits A-J and the implicit MSB of the significand. Rather, the 2-bit second exponent value is only able to encode four different values. In this second example embodiment, these four different values are mapped to four corresponding different negative and non-zero exponents ranging from -1 to -4. In this example, for an exponent of -4, since no additional exponent values can be encoded in the 2-bit second exponent value, a hard underflow condition happens, and the implicit MSB of the significand may be used to set the sticky bit. Alternatively, the eight 2-bit second exponent values may optionally be mapped to different exponents, including exponents of other values besides exponents ranging from -1 to -4, if desired.

Approaches like those described above may be applied to other standard floating-point formats (e.g., double precision (FP64), single precision (FP32), Bfloat16, etc.). The number of bits used for the second exponent value may vary. A number of bits equal to or greater than ceiling(log2(significand bits) where ceiling takes the next higher integer number of bits, or equal to or greater than floor(log2(significand bits)+1) where floor takes the next lower integer number of bits, will generally allow the extended exponent range to cover the entire mantissa (e.g., as shown in **FIG. 4**). Or, if the extended exponent range is less than this, a hard underflow may occur over part of the mantissa (e.g., as shown in **FIGs. 5-6**).

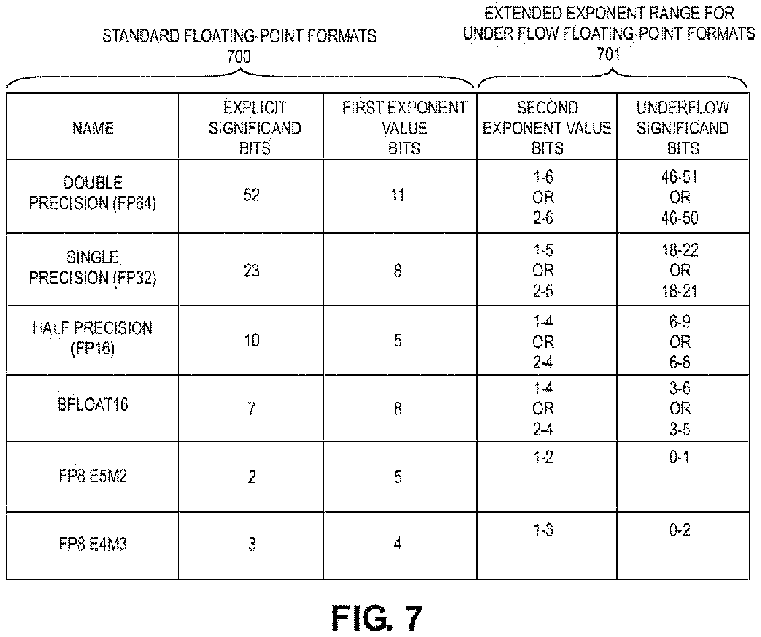

**FIG. 7** is a table listing several examples of standard floating-point formats 700 and extended exponent range for underflow floating-point formats 701. For the standard floating-point formats, the first column lists the name of the format, a second column lists the number of explicit significand bits, and a third column lists the number of first exponent value bits. For the extended exponent range for underflow floating-point formats, a fourth column lists the number of second exponent value bits, and a fifth column lists the underflow significand bits.

A first row lists a 64-bit double-precision (FP64) floating-point format having 52 explicit significand bits and 11 first exponent value bits and the corresponding extended exponent range format having from 1-6 (or optionally 2-6) second exponent value bits and from 46-51 (or optionally 46-50) underflow significand bits. A second row lists a 32-bit single-precision (FP32) floating-point format having 23 explicit significand bits and 8 first exponent value bits and the corresponding extended exponent range format having from 1-5 (or optionally 2-5) second exponent value bits and from 18-22 (or optionally 18-21) underflow significand bits. A third row lists a 16-bit half-precision (FP16) floating-point format having 10 explicit significand bits and 5 first exponent value bits and the corresponding extended exponent range format having from 1-4 (or optionally 2-4) second exponent value bits and from 6-9 (or optionally 6-8) underflow significand bits.

A fourth row lists a 16-bit Bfloat16 floating-point format having 7 explicit significand bits and 8 first exponent value bits and the corresponding extended exponent range format having from 1-4 (or optionally 2-4) second exponent value bits and from 3-6 (or optionally 3-5) underflow significand bits. A fifth row lists an 8-bit FP8 E5M2 floating-point format having 2 explicit significand bits and 5 first exponent value bits and the corresponding extended exponent range format having from 1-2 second exponent value bits and from 0-1 underflow significand bits. A sixth row lists an 8-bit FP8 E4M3 floating-point format having 3 explicit significand bits and 4 first exponent value bits and the corresponding extended exponent range format having from 1-3 second exponent value bits and from 0-2 underflow significand bits.

Standard floating-point formats specify certain special exponent and significand values used to represent infinity and Not a Number (NaN). Generally, infinity is represented by the largest biased exponent allowed by the format and a significand of zero. Generally, both signaling and quite types of NaNs are represented by the largest biased exponent allowed by the format and a significand that is non-zero. The bit pattern of the significand for a signaling NaN has the most significant bit set to zero and at least one of the remaining bits set to one. The bit pattern of the significand for a quiet NaN has the most significant bit set to one. By way of example, for single-precision floating-point values (with the least significant (rightmost) twenty three bits being the significand, the next most significant eight bits being the exponent, and most significant (leftmost) bit being the sign bit: (1) positive infinity may be represented by the bit pattern 7F800000 (0111111110000000000000000000000); (2) negative infinity may be represented by the bit pattern FF800000 (1111111110000000000000000000000); (3) a signaling NaN may be represented by any bit pattern between 7F800001 (0111111110000000000000000000001) and 7FBFFFFF (0111111110111111111111111111111) or between FF800001 (1111111110000000000000000000001) and FFBFFFFF (1111111110111111111111111111111); and (4) a quiet NaN may be represented by any bit pattern between 7FC00000 (0111111111000000000000000000000) and 7FFFFFFF (0111111111111111111111111111111) or between FFC00000 (1111111111000000000000000000000) and 1111111111111111111111111111111.

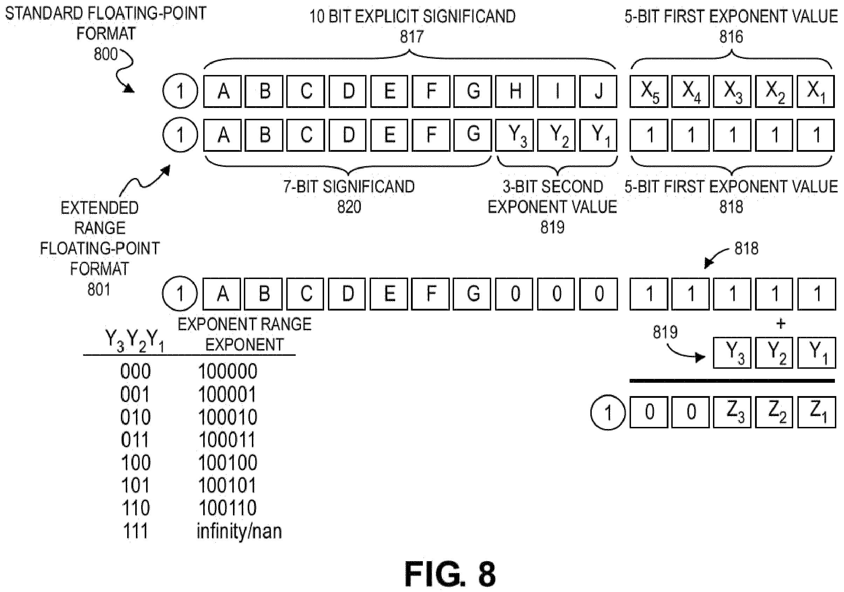

FIG. 8 is a diagram illustrating an example embodiment of a floating-point data element being interpreted according to either a standard floating-point format 800 or an extended exponent range floating-point format 801. In each of the standard and extended exponent range floating-point formats, the leftmost bit in the illustration is the implicit most significant bit (MSB) of the significand or J-bit, which is not explicitly encoded. Also, for simplicity of illustration, the sign bit is not shown for either the standard and extended exponent range floating-point formats, since the sign bit may be interpreted and used in the same conventional way for both formats.

As shown for the standard floating-point format 800, execution circuitry may interpret 10 bits (A-J) as a 10-bit explicit significand 817, when a 5-bit first exponent value (X5-X1) 816 is not all zeroes or all ones (e.g., X5-X1 is not 00000 or 11111). This may correspond to a standard half precision (FP16) floating-point format. Generally, according to standard floating-point formats, when the 5-bit first exponent value is all ones this would designate either infinity, if the 7-bit significand is all zeros, or a NaN if the 7-bit significand is not all zeros. Instead, in some embodiments, the 5-bit first exponent value is all ones may be used to invoke the extended range floating-point format for overflow.

As shown for the extended exponent range floating-point format 801, execution circuitry may interpret the same corresponding 10 bits as including a 3-bit second exponent value (Y3-Y1) 819 in the three least significant of these 10 bits (e.g., corresponding in position to HIJ), and a 7-bit significand 820 in the seven most significant bits (A-G), when a 5-bit first exponent value 818 is all ones (i.e., 11111). In this case, the 7-bit significand includes all more significant of the 10 bits not used for the 3-bit second exponent value (Y3-Y1). The 3-bit second exponent value and the 7-bit significant together include all the bits of the 10-bit explicit significand. This 3-bit second exponent value is just one example. Other embodiments may have either fewer or more bits for the second exponent value. In some cases, since when using the standard floating-point format the significand bits 817 would largely be ignored for first exponent values of all ones (other than in some NaN implementations), it is contemplated that in some implementations it may be appropriate for the second exponent value may optionally have around the same number of bits as the N-bit first exponent field thereby providing significant extended range.

The lower portion of the diagram illustrates how execution circuitry is to use both the 3-bit second exponent value and the 5-bit first exponent value to determine an extended range exponent to use to shift, move, or otherwise interpret or identify the position of the binary point relative to a significand including the 7-bit significand and the implicit most significant bit or J-bit of the significand. As shown, in some embodiments, the execution circuitry may add or otherwise combine the 3-bit second exponent value 819 and the 5-bit first exponent value 818. This may allow an extended range exponent to have additional values or a range that is based on not only the first exponent value 818 but also the second exponent value 819. A table shows one example of how the 3-bit second exponent values (Y3-Y1) 819 when added to the 5-bit first exponent value "11111" 818 may sum to different extended range exponents. In this example, Y3Y2Y1 equal to "000" means to add a value of one to the 5-bit first exponent value "11111" to obtain the extended range exponent value of "100000", Y3Y2Y1 equal to "001" means to add a value of two to the 5-bit first exponent value "11111" to obtain the extended range exponent value of "100001", and so on. This is just one illustrative example of a possible mapping. Other mappings are also contemplated. For example, Y3Y2Y1 equal to "000" may mean infinity instead of "111" and Y3Y2Y1 equal to "001" may means to add a value of one to the 5-bit first exponent value "11111" to obtain the extended range exponent value of "100000", and so on. The meaning of the mappings may be according to various conventions. A small adder or other arithmetic circuit may be incorporated to add or otherwise combine the second exponent value 819 with the first exponent value.

Infinity and NaN may still be supported for the extended range format, and in fact may be coded as several different values, which may make it easier to modify the datapath of the FP multiplier or ALUs designed to handle this format. This can be done in different ways. In some embodiments, if the first exponent value (e.g., the 5-bit first exponent value 818) is all ones, and the second exponent value (e.g., the 3-bit second exponent value 819) is a certain value (e.g., in one example all ones), then the significant bits not used for the second exponent value (e.g., the 7-bit significand 820) having a certain first value (e.g., all zeroes as one possible example) may represent infinity or else the significant bits not used for the second exponent value (e.g., the 7-bit significand 820) having a certain second value (e.g., all ones as one possible example) may represent not-a-number (NaN).

In the multiplier, the exponent handling circuitry may be increased by 1-bit width. For example, in the case of FP16 where the exponent has 5 bits, the exponent handling circuitry may have a width of 6 bits to handle the additional exponent range (e.g., the first exponent value plus the second exponent value). In both the input and output side, additional checks may be performed on exceptions and errors. The impact on the ALU is similar, with a small adder to modify the exponent, and additional input and output checks.

If a number with this extended range format were input into a standard IEEE754 operator, the output result would be unaffected, for example, an overflow condition in the new format may just be processed as an infinity or NaN in the standard operator. When dealing with out-of-range numbers, or where one number is out of range and another is in range, rounding behavior may not follow IEEE754 convention, although the number will have a small maximum error in the range of the mantissa that is still generally more accurate than a number coded as an infinity.

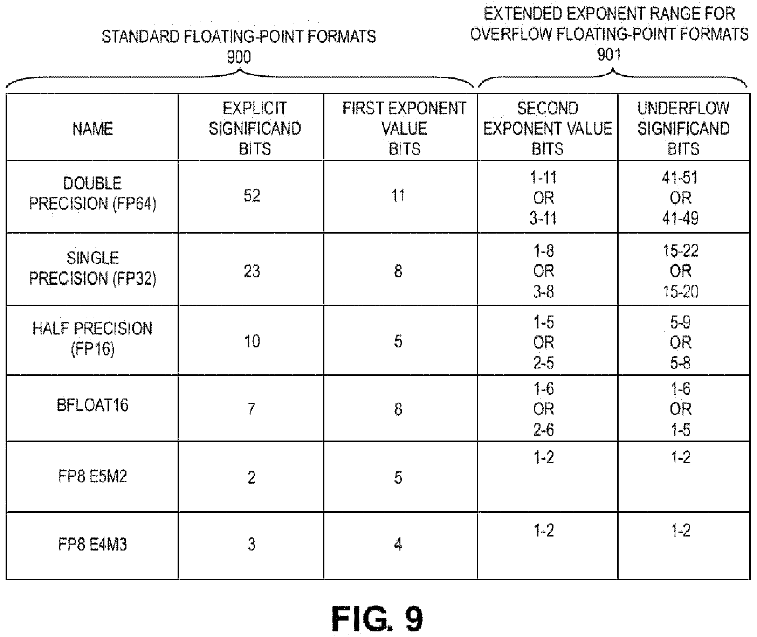

FIG. 9 is a table listing several examples of standard floating-point formats 900 and extended exponent range for overflow floating-point formats 901. For the standard floating-point formats, the first column lists the name of the format, a second column lists the number of explicit significand bits, and a third column lists the number of first exponent value bits. For the extended exponent range for underflow floating-point formats, a fourth column lists the number of second exponent value bits, and a fifth column lists the underflow significand bits.

A first row lists a 64-bit double-precision (FP64) floating-point format having 52 explicit significand bits and 11 first exponent value bits and the corresponding extended exponent range format having from 1-11 (or optionally 3-11) second exponent value bits and from 41-51 (or optionally 41-49) underflow significand bits. A second row lists a 32-bit single-precision (FP32) floating-point format having 23 explicit significand bits and 8 first exponent value bits and the corresponding extended exponent range format having from 1-8 (or optionally 3-8) second exponent value bits and from 15-22 (or optionally 15-20) underflow significand bits. A third row lists a 16-bit half-precision (FP16) floating-point format having 10 explicit significand bits and 5 first exponent value bits and the corresponding extended exponent range format having from 1-5 (or optionally 2-5) second exponent value bits and from 5-9 (or optionally 5-8) underflow significand bits.

A fourth row lists a 16-bit Bfloat16 floating-point format having 7 explicit significand bits and 8 first exponent value bits and the corresponding extended exponent range format having from 1-6 (or optionally 2-6) second exponent value bits and from 1-6 (or optionally 1-5) underflow significand bits. A fifth row lists an 8-bit FP8 E5M2 floating-point format having 2 explicit significand bits and 5 first exponent value bits and the corresponding extended exponent range format having from 1-2 second exponent value bits and from 1-2 underflow significand bits. A sixth row lists an 8-bit FP8 E4M3 floating-point format having 3 explicit significand bits and 4 first exponent value bits and the corresponding extended exponent range format having from 1-2 second exponent value bits and from 1-2 underflow significand bits.

As discussed above, the ability to utilize the alternate meaning or interpretation of the M bits as including a second exponent value (e.g., instead of just being the M-bit significand) may either be always enabled (e.g., built or baked into the circuitry) or configurable so that it can be either enabled or disabled. Also, the number of bits of the at least one bit second exponent value, the number of bits of the at least one bit significand, or both, may either be fixed/static (e.g., built or baked into the circuitry) or dynamically variable, flexible, or configurable. Also, different numbers of such bits may optionally be provided to extend the underflow range (e.g., when the N-bit first exponent value is all zeroes) and to extend the overflow range (e.g., when the N-bit first exponent value is all ones).

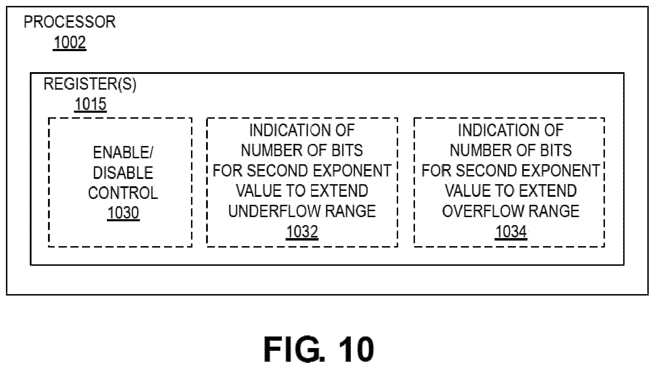

FIG. 10 is a block diagram of an embodiment of a processor 1002 having one or more registers 1015 to store information associated with an extended floating-point range. In some embodiments, the information may include an enable and/or disable control that is operable to enable and/or disable use of the extended floating-point range. This may represent a different mode of operation in which floating-point data elements are or are not interpreted according to the extended floating-point range format. In some embodiments, the information may include an indication of a number of bits to use for the second exponent value to extend an underflow range (e.g., when the N-bit first exponent value is all zeroes). In some embodiments, the information may include an indication of a number of bits to use for the second exponent value to extend an overflow range (e.g., when the N-bit first exponent value is all ones). The number of bits to use for the second exponent value may be indicated in different ways. One way is to indicate the number of bits to use for the second exponent value directly. Another way is to indicate the number of bits to use for the corresponding significand (e.g., significand 220) if the number of bits to use for the second exponent value can be calculated as M bits minus the indicated number of bits to use for the corresponding significand. If desired, there may optionally be specification of both the number of bits to use for the second exponent value and the number of bits to use for the corresponding significand. Such information may also optionally be stored differently for different types of floating-point data elements (e.g., FP64, FP32, FP16, bfloat16, E5M2, E4M3, etc.).

Such information may be stored in bits or fields of the registers 1015. Examples of suitable registers include, but are not limited to, a processor configuration and/or control register (e.g., a model specific register), a floating-point configuration and/or control register, a dedicated register, or any combination thereof. Generally, storing such information in the processor configuration and/or control register may allow the information to be configured on a multiple thread, multiple cores, or whole processor basis. Storing such information in the floating-point configuration and/or control register may allow the information to be configured on thread-by-thread basis. Examples of suitable floating-point configuration and/or control registers include, but are not limited to, the MCSCR in Intel® Architecture and the Floating-point Control Register (FPCR) in Aarch64 of the ARM Architecture. The floating-point configuration and/or control register may also optionally store other information to control floating point processing, such as, for example, rounding mode information, flush to zero information, denormal handling information, and the like.

**FIG. 11** is a block diagram of an embodiment of a floating-point instruction 1103 to indicate information associated with an extended floating-point range. Providing the enable/disable control and the numbers of bits to use for the extended floating-point range may allow such information to be provided on a per-instruction or instruction-level basis.

The instruction format includes an operation code or opcode 1137. The opcode may represent a plurality of bits or one or more fields that are operable to identify the instruction and/or the operation to be performed.

The instruction format includes a first source specifier 1138 to explicitly specify a register or memory address information for a first source floating-point operand, an optional second source specifier 1139 to explicitly specify a register or memory address information for a second source floating-point operand, and a destination specifier 1140 to explicitly specify a register or memory address information to be used as a destination where a result floating-point operand is to be stored. Alternatively, one or more of these specifiers may optionally be implicit (e.g., a source/destination register may be used and only specified through one specifier).

In some embodiments, the instruction may have an optional prefix 1135. As shown, in some embodiments, the optional prefix may include an optional enable and/or disable control 1136 that is operable to enable and/or disable use of the extended floating-point range (e.g., an instruction with the opcode 1137 and the prefix 1135 may enable use of the extended floating-point range, whereas an instruction with the opcode 1137 but without the prefix 1135 may disable use of the extended floating-point range, or the opposite is also possible). Alternatively, in other embodiments, the enable and/or disable control 1136 may instead be part of the opcode 1137 (e.g., certain instructions with certain opcodes may use of the extended floating-point range, whereas other instructions with other opcodes may disable or at least not use the extended floating-point range). In still other embodiments, the enable and/or disable control 1136 may instead be specified elsewhere (e.g., in one or more registers as previously described).

In some embodiments, the instruction may have one or more fields or bits (e.g., an immediate) to provide an optional indication of a number of bits to use for the second exponent value to extend an underflow range (e.g., when the N-bit first exponent value is all zeroes). In some embodiments, the instruction may have one or more fields or bits (e.g., an immediate) to provide an optional indication of a number of bits to use for the second exponent value to extend an overflow range (e.g., when the N-bit first exponent value is all ones). As discussed above, the number of bits to use for the second exponent value may be indicated in different ways. One way is to indicate the number of bits to use for the second exponent value directly. Another way is to indicate the number of bits to use for the corresponding significand (e.g., significand 220) if the number of bits to use for the second exponent value can be calculated as M bits minus the indicated number of bits to use for the corresponding significand. If desired, there may optionally be specification of both the number of bits to use for the second exponent value and the number of bits to use for the corresponding significand.

The illustrated instruction format shows examples of the types of fields that may be included in an embodiment of a floating-point instruction. Alternate embodiments may include a subset of the illustrated fields or may add additional fields. The illustrated order/arrangement of the fields is not required, but rather the fields may be rearranged. Fields need not include contiguous sequences of bits but rather may be composed of non-contiguous or separated bits. In some embodiments, the instruction format may use any of the other instruction formats or encoding schemes mentioned further below.

**FIGs. 10-11** illustrate several possible approaches to provide information associated with an extended floating-point range. Other embodiments may provide such information by storing some information in one or more registers and providing other information via the floating-point instruction.

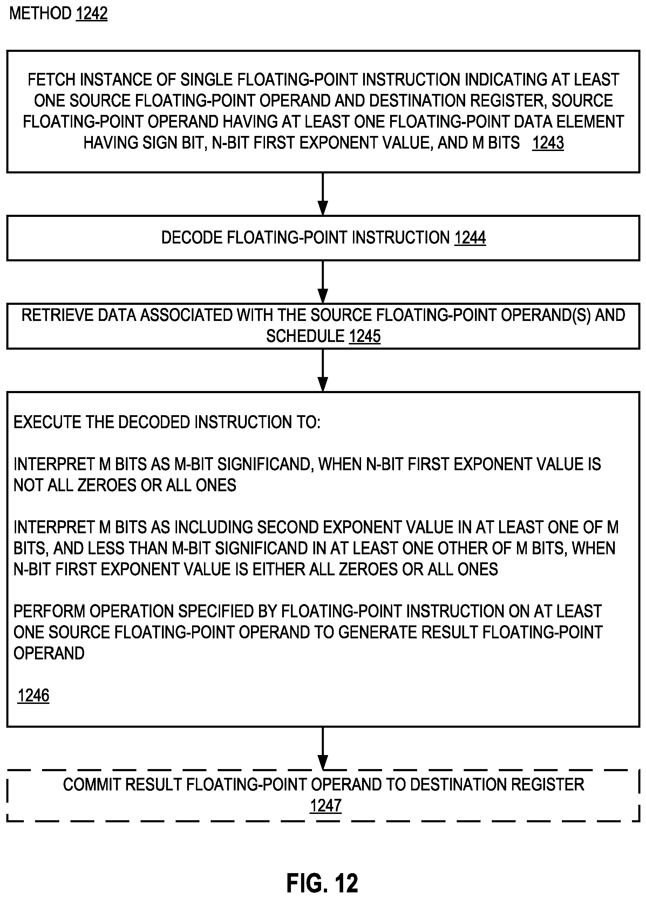

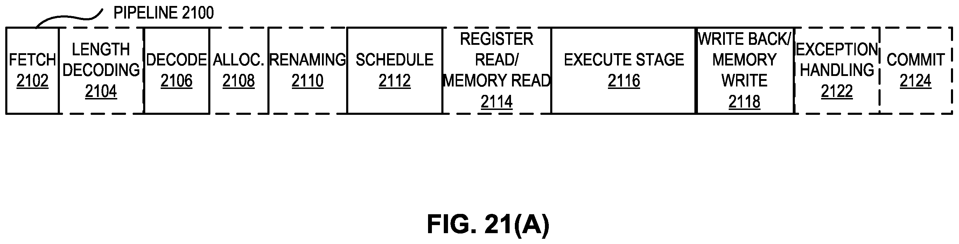

**FIG. 12** illustrates an example embodiment of a method 1242 performed by a processor to process a floating-point instruction. By way of example, the processor shown in **FIG. 2**, the processor core as shown in **FIG. 21(B)**, a pipeline as detailed below, etc., may perform this method. The components, features, and specific optional details described herein for the processor shown in **FIG. 2**, the processor core as shown in **FIG. 21(B)**, a pipeline as detailed below, etc., also optionally apply to the method. Alternatively, the method may be performed by and/or within similar or different processors. Moreover, the processor shown in **FIG. 2** may perform methods the same as, similar to, or different than the method of **FIG. 12**.

At 1243, an instance of single floating-point instruction (e.g., the floating-point instruction 203) is fetched. In some examples, the instruction is fetched from an instruction cache. The instruction may explicitly specify, or otherwise indicate, at least a first source floating-point operand. The first source floating-point operand may have at least a first floating-point data element. The first floating-point data element may have a sign bit, an N-bit first exponent value, and M additional bits. In some embodiments the instruction may optionally specify or otherwise indicate an optional second source floating-point operand. The instruction may also specify or otherwise indicate a destination register where a result floating-point operand is to be stored. These operands, and the ways they are indicated, may be the same as or similar to what is described elsewhere herein (e.g., as previously described for **FIG. 2**).

The fetched floating-point instruction may be decoded at 1244. For example, the fetched floating-point instruction may be decoded by decoder circuitry such as decoder circuitry 204 or decode circuitry 2140 detailed herein.

At least the first floating-point data element, and any others associated with the first source floating-point operand and the optional second source floating-point operand may be retrieved when the decoded instruction is scheduled at 1245. For example, when one or more of the source operands are memory operands, the data from the indicated memory location may be retrieved.

At 1246, the decoded instruction is executed by execution circuitry (hardware) such as execution circuitry 205 shown in **FIG. 2**, or execution cluster(s) 2160 shown in **FIG. 21(B)**. This may include performing operations corresponding to and/or according to the floating-point instruction.

In some embodiments, these operations may include interpreting and/or processing and/or handling the M bits of the first floating-point data element based at least in part on the N-bit first exponent value of the first floating-point data element. In some embodiments, these operations may include interpreting and/or processing and/or handling the M bits of the first floating-point data element as an M-bit significand, when the N-bit first exponent value is not all zeroes or all ones. For example, in some embodiments, this may include interpreting and/or processing and/or handling the first floating-point data element according to one of the standard floating-point formats described for **FIG. 1**.

In some embodiments, these operations may include interpreting and/or processing and/or handling the M bits as including an at least one bit second exponent value in at least one of the M bits, and an at least one bit significand in at least one other of the M bits, when the N-bit first exponent value is either all zeroes or all ones. This may be done as described elsewhere herein (e.g., for **FIG. 2**, **FIGs. 4-6**, **FIG. 8**, etc.) For example, when the N-bit first exponent value is all zeroes, the at least one bit significand may be used to shift the at least one bit significand and/or identify a position of a binary point for the at least one bit significand. As another example, when the N-bit first exponent value is all ones, the at least one bit second exponent value may be added to the N-bit first exponent value and/or otherwise combined with the N-bit first exponent value and/or otherwise used with the N-bit first exponent value to provide additional exponent values or range to the first floating-point data element. Other floating-point data elements in the source operations may optionally be interpreted and/or processed and/or handled similarly.

The operations may also include performing an operation specified by the instruction on at least the first source floating-point operand, and in some cases the optional second source floating-point operand, to generate a result floating-point operand. The operation may be performed according to how the floating-point data elements are interpreted, as described above. The operation may be one of the types previously described (e.g., scalar, vector, or matrix floating-point format conversion, scalar, vector, or matrix addition, scalar, vector, or matrix multiplication, etc.)

In some examples, the instruction is committed or retired at 1247. This may cause the result floating-point operand to be stored in the destination register (e.g., a renamed register committed to an architectural register).

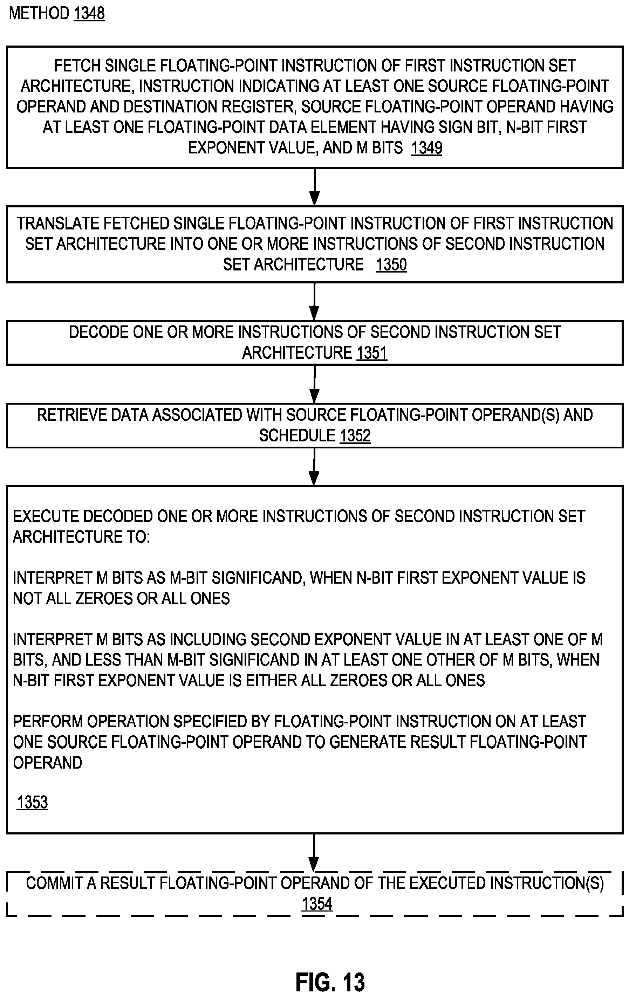

**FIG. 13** illustrates an example embodiment of a method 1348 to process a floating-point instruction using emulation or binary translation. For example, the processor shown in **FIG. 2**, the processor core as shown in **FIG. 21(B),** a pipeline as detailed below, etc., may perform this method. The components, features, and specific optional details described herein for the processor shown in **FIG. 2**, the processor core as shown in **FIG. 21(B),** a pipeline as detailed below, etc. also optionally apply to the method. Alternatively, the method may be performed by and/or within similar or different processors. Moreover, the processor of **FIG. 2** may perform methods the same as, similar to, or different than the method of **FIG. 13.**

An instance of a single floating-point instruction (e.g., the floating-point instruction 203) of a first instruction set architecture is fetched at 1349. In some examples, the instruction is fetched from an instruction cache. The instruction may explicitly specify, or otherwise indicate, at least a first source floating-point operand. The first source floating-point operand may have at least a first floating-point data element. The first floating-point data element may have a sign bit, an N-bit first exponent value, and M additional bits. In some embodiments the instruction may optionally specify or otherwise indicate an optional second source floating-point operand. The instruction may also specify or otherwise indicate a destination register where a result floating-point operand is to be stored. These operands, and the ways they are indicated, may be the same as or similar to what is described elsewhere herein (e.g., as previously described for **FIG. 2**).

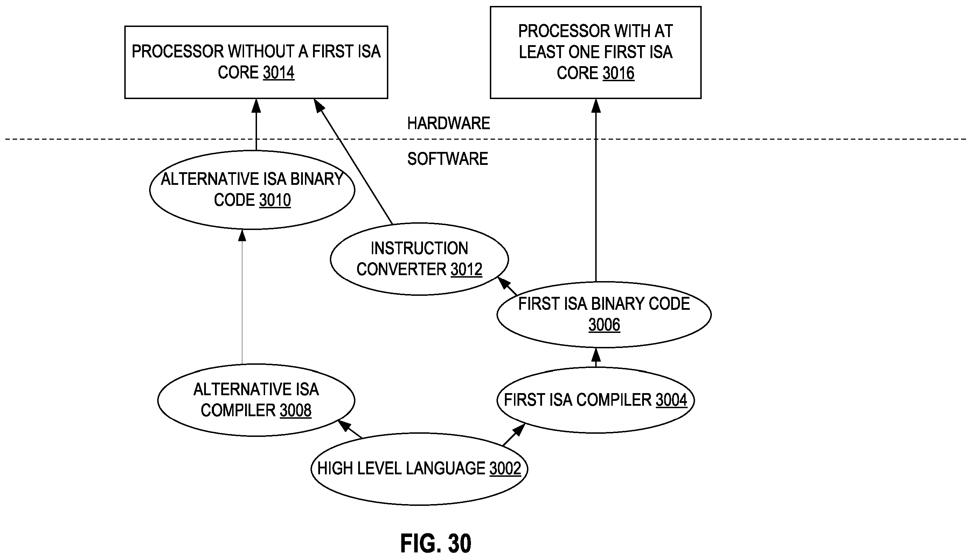

The fetched single floating-point instruction of the first instruction set architecture is translated into one or more instructions of a second instruction set architecture at 1350. This translation may be performed by a translation and/or emulation layer of software in some examples. In some examples, this translation may be performed by an instruction converter 3012 as shown in **FIG. 30**. In some examples, the translation may be performed by hardware translation circuitry.

The one or more translated instructions of the second instruction set architecture are decoded at 1351. For example, the translated instructions may be decoded by decoder circuitry such as decoder circuitry 204 or decode circuitry 2140 detailed herein. In some examples, the operations of translation 1350 and decoding 1351 may optionally be merged.

At least the first floating-point data element, and any others associated with the first source floating-point operand and the optional second source floating-point operand may be retrieved when the decoded instruction is scheduled at 1352. For example, when one or more of the source operands are memory operands, the data from the indicated memory location is retrieved.

At 1353, the decoded instruction(s) of the second instruction set architecture is/are executed by execution circuitry (hardware) such as execution circuitry 205 shown in **FIG. 3**, or execution cluster(s) 2160 shown in **FIG. 21(B)**, to perform the operation(s) indicated by and/or corresponding to the single floating-point instruction of the first instruction set architecture.

In some embodiments, these operations may include interpreting and/or processing and/or handling the M bits of the first floating-point data element based at least in part on the N-bit first exponent value of the first floating-point data element. In some embodiments, these operations may include interpreting and/or processing and/or handling the M bits of the first floating-point data element as an M-bit significand, when the N-bit first exponent value is not all zeroes or all ones. For example, in some embodiments, this may include interpreting and/or processing and/or handling the first floating-point data element according to one of the standard floating-point formats described for **FIG. 1**.

In some embodiments, these operations may include interpreting and/or processing and/or handling the M bits as including an at least one bit second exponent value in at least one of the M bits, and an at least one bit significand in at least one other of the M bits, when the N-bit first exponent value is either all zeroes or all ones. This may be done as described elsewhere herein (e.g., for **FIG. 2**, **FIGs. 4-6**, **FIG. 8**, etc.) For example, when the N-bit first exponent value is all zeroes, the at least one bit significand may be used to shift the at least one bit significand and/or identify a position of a binary point for the at least one bit significand. As another example, when the N-bit first exponent value is all ones, the at least one bit second exponent value may be added to the N-bit first exponent value and/or otherwise combined with the N-bit first exponent value and/or otherwise used with the N-bit first exponent value to provide additional exponent values or range to the first floating-point data element. Other floating-point data elements in the source operations may optionally be interpreted and/or processed and/or handled similarly.

The operations may also include performing an operation specified by and/or corresponding to the single first floating-point instruction on at least the first source floating-point operand, and in some cases the optional second source floating-point operand, to generate a result floating-point operand. The operation may be performed according to how the floating-point data elements are interpreted, as described above. The operation may be one of the types previously described (e.g., scalar, vector, or matrix floating-point format conversion, scalar, vector, or matrix addition, scalar, vector, or matrix multiplication, etc.)

In some examples, the decoded instruction(s) of the second instruction set architecture are committed or retired at 1354. This may cause the result floating-point operand to be stored in an architectural storage location used for and/or corresponding to the destination register (e.g., a renamed register committed to an architectural register).

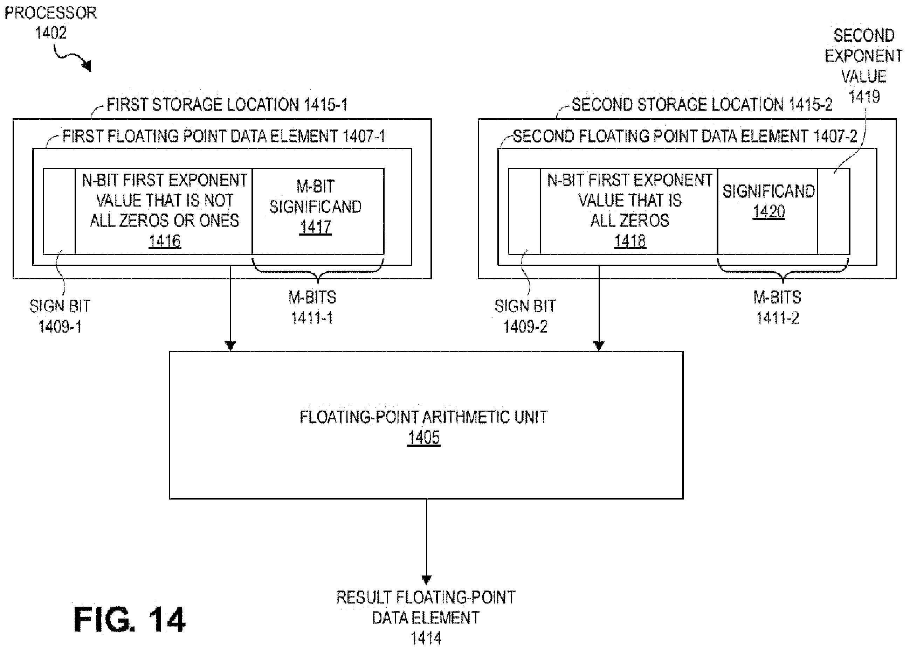

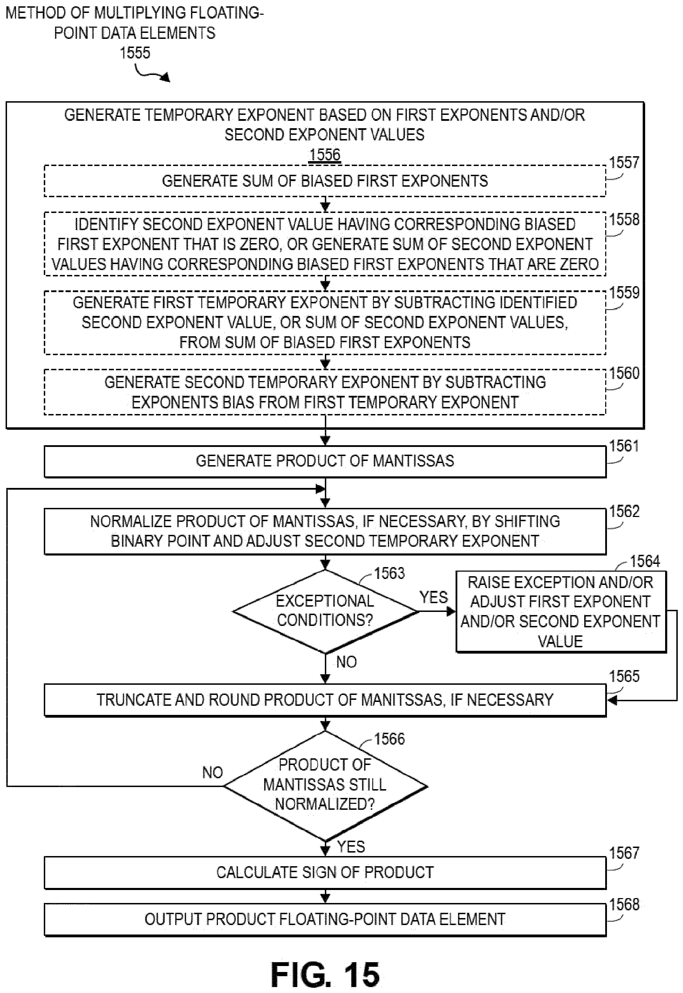

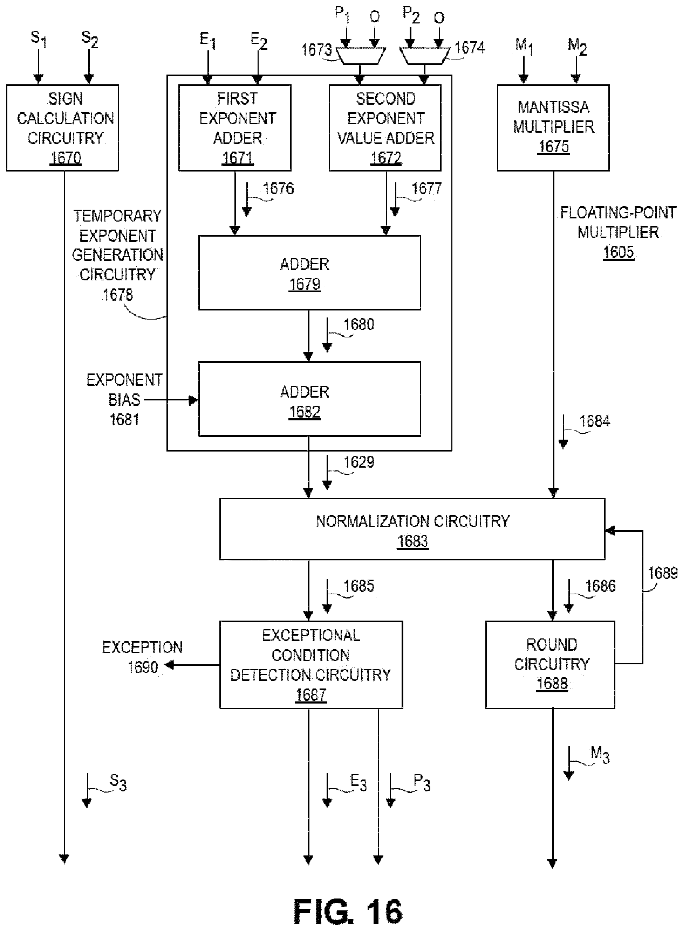

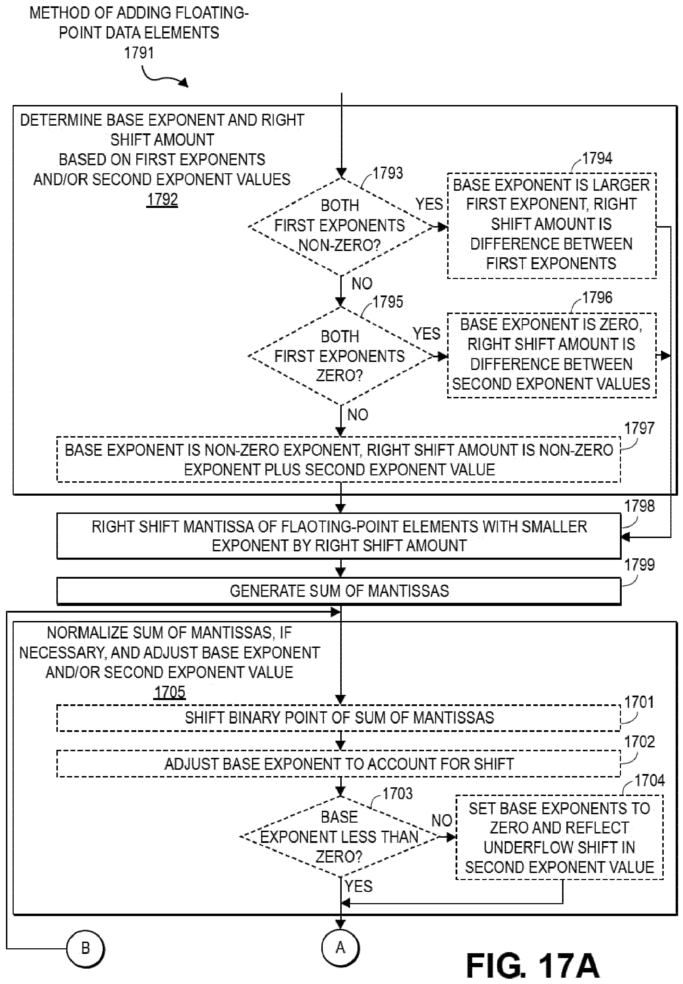

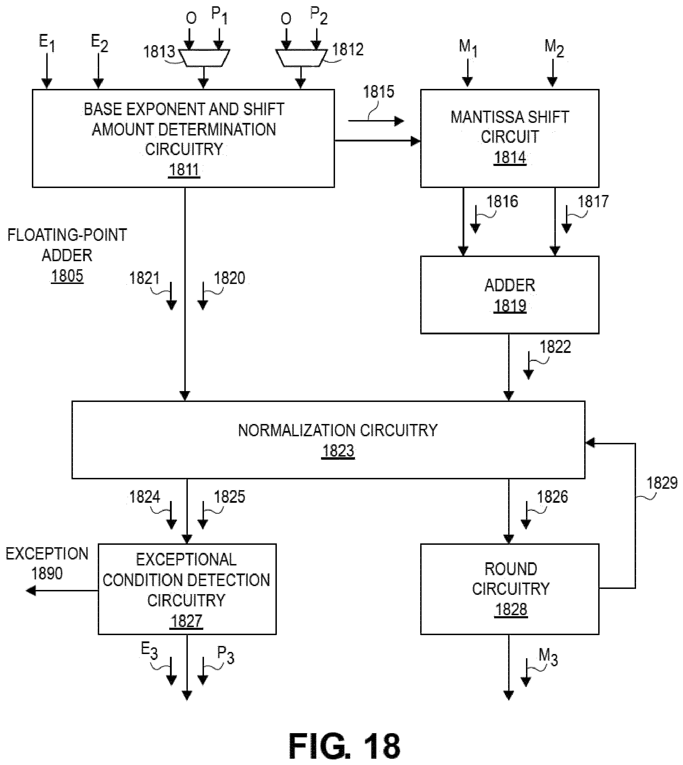

**FIG. 14** is a block diagram of an example embodiment of a processor 1402 having a floating-point arithmetic unit 1405 to perform an arithmetic operation on a first floating-point data element 1407-1 and a second floating-point data element 1407-2. In some embodiments, the processor may perform the method of **FIG. 15** and/or the method of **FIGs. 17A-B**. In some embodiments, the processor may include the floating-point multiplier of **FIG. 16** and/or the floating-point adder of **FIG. 18**.

The processor has a first storage location 1415-1 to store the first floating-point data element. The processor has a second storage location 1415-2 to store the second floating-point data element. Examples of suitable storage locations include, but are not limited to, registers (e.g., general-purpose or other scalar registers, and vector, packed or single-instruction, multiple-data

(SIMD) registers), caches, scratchpads, and combinations thereof. Alternatively, one or more of the first and second floating-point data elements may optionally be stored outside of the processor (e.g., in system memory).

The first floating-point data element 1415-1 has a sign bit 1409-1, an N-bit first exponent value 1416 that is not all zeroes or all ones, and M bits 1411-1 that are and/or represent an M-bit significand 1417. The second floating-point data element 1407-2 has a same total number of bits as the first floating-point data element. The second floating-point data element has a sign bit 1409-2 and an N-bit first exponent value 1418 that is all zeroes, and M bits 1411-1 that include a less than M-bit significand 1420 and a second exponent value 1419. In some embodiments, the second exponent value 1419 may have one or more characteristics as previously described for the second exponent value 219 and/or the 4-bit second exponent value 419 and/or the 3-bit second exponent value 519 and/or the 2-bit second exponent value 619. In some embodiments, the second exponent value 1419 and the significand 1420 may have one of the sizes mentioned for **FIG. 7**.

The floating-point arithmetic unit 1405 is coupled with the first and second storage locations (e.g., to receive the first and second floating-point data elements). In some embodiments, the floating-point arithmetic unit may have characteristics previously described for the execution circuity 205. The floating-point arithmetic unit is to perform an arithmetic operation on the first floating-point data element and the second floating-point data element to generate a result floating-point data element 1414. In some embodiments, the arithmetic operation is multiplication. In other embodiments, the arithmetic operation is addition. In some embodiments, performing the arithmetic operation may include using the second exponent value 1419 to identify a position of a binary point relative to the significand 1420. In some embodiments, performing the arithmetic operation may include using the second exponent value 1419 to represent the second floating-point data element 1407-2 as a smaller numerical value than can be represented by the N-bit first exponent value 1418.

**FIG. 15** is a block flow diagram of an example embodiment of a method 1555 of multiplying first and second floating-point data elements, when at least one of the first and second floating-point data elements utilizes a second exponent value (e.g., the second exponent value 219 and/or the 4-bit second exponent value 419 and/or the 3-bit second exponent value 519 and/or the 2-bit second exponent value 619). **FIG. 16** is a block diagram of an example embodiment of a floating-point multiplier 1605 capable of multiplying first and second floating-point data elements, when at least one of the first and second floating-point data elements utilizes a second exponent value (e.g., the second exponent value 219 and/or the 4-bit second exponent value 419 and/or the 3-bit second exponent value 519 and/or the 2-bit second exponent value 619). To streamline the description, the method of **FIG. 15** will be described with reference to the floating-point multiplier 1605 **FIG. 16**. However, the method of **FIG. 15** may alternatively be performed by floating-point multiplier similar to or different than that of **FIG. 16**. Moreover, the floating-point multiplier of **FIG. 16** may perform methods the same as, similar to, or different than that of **FIG. 15**. By way of example, the method 1555 may be performed in response to and/or as part of the operation of an instruction having an opcode indicating that floating-point multiplication is to be performed, and one or more instructions or control signals decoded from the instruction may be used to control the floating-point multiplier 1605 to perform the method.

To aid in the description of certain concepts, the first floating-point data element (X1) may have a sign (S1) a mantissa (M1), a first exponent (E1), in some cases optionally a second exponent value (P1). For example, the mantissa (M1) may be the m-bit significand 217 and the second exponent value (P1) may not exist for X1 if E1 is not all zeroes or all ones, or the mantissa (M1) may be the significand 220 and the second exponent value (P1) may exist, if E1 is all zeroes. Likewise, the second floating-point data element (X2) may have a sign (S2) a mantissa (M2), a first exponent (E2), in some cases optionally a second exponent value (P2). For example, the mantissa (M2) may be the m-bit significand 217 and the second exponent value (P2) may not exist for X2 if E2 is not all zeroes or all ones, or the mantissa (M2) may be the significand 220 and the second exponent value (P2) may exist, if E2 is all zeroes. A product floating-point data element (X3) resulting from multiplying X1 and X2 may have a sign (S3) a mantissa (M3), a first exponent (E3), in some cases optionally a second exponent value (P3). For example, the mantissa (M3) may be the m-bit significand 217 and the second exponent value (P3) may not exist for X3 if E3 is not all zeroes or all ones, or the mantissa (M3) may be the significand 220 and the second exponent value (P3) may exist, if E3 is all zeroes.

At block 1556, a temporary (e.g., tentative subject to subsequent operations) exponent may be generated based on the first exponents (e.g., E1 and E2) and/or the second exponent values (e.g., P1 and/or P2). Referring to **FIG. 16**, a temporary exponent generation circuitry 1678 may be coupled to receive the first exponent E1 of X1, a second exponent E2 of X2, a second exponent value P1 when it is used for X1 (e.g., when E1 is all zeroes) via a first multiplexer 1673 and a second exponent value P2 when it is used for X2 (e.g., when E2 is all zeroes) via a second multiplexer 1674. When one or more of the floating-point data elements does not use a second exponent value the multiplexer may be controlled to output a zero value. The temporary exponent generation circuitry may be operative to generate a temporary exponent 1628 based on the first exponents (E1 and E2) and/or the second exponent values (P1 and P2).

Block 1556 of **FIG. 15** includes several optional sub-operations. At block 1557, a sum of biased exponents (e.g., E1 + E2) may be generated by adding the biased first exponent E1 of the first floating-point data element X1 and the biased first exponent E2 of the second floating-point data element X2. Referring to **FIG. 16**, a first exponent adder 1671 may be coupled to receive a first exponent E1 of X1 and a second exponent E2 of X2 and may be operative to add E1 and E2 in biased exponents and output a sum of biased exponents (e.g., E1 + E2) 1676. The first exponent adder may have a size suitable for adding the biased exponents (e.g., which may be based on the floating-point format).

At block 1558 of **FIG. 15**, a second exponent value may be identified if only one of the floating-point data elements utilizes the second exponent value (e.g., has a corresponding first exponent that is all zeros), or a sum of a second exponent values of the first and second floating-point data elements may be generated if both the first and second floating-point data elements utilize a second exponent value (e.g., both have corresponding first exponents that are all zeros). For example, this may include identifying second exponent P2 of X2 if E2 is zero and E1 is non-zero. As another example, this may include adding P1 and P2 to generate a sum of second exponent values (e.g., P1 + P2) if both E1 and E2 are zero. Referring to **FIG. 16**, a second exponent value adder 1672 may be coupled to receive the second exponent value (P1) when it is used for X1 (e.g., when E1 is all zeroes) via the first multiplexer 1673 and the second exponent value (P2) when it is used for X2 (e.g., when E2 is all zeroes) via the second multiplexer 1674. When one of the floating-point numbers does not use a second exponent value the multiplexer may be controlled to select and output a zero value. The second exponent value adder 1672 may add the second exponent value P1 (or zero if P1 is not used for X1) and the second exponent value P2 (or zero if P2 is not used for X2) and output a value 1677 that is either one of the second exponent values P1 or P2 or the sum of the second exponent values (e.g., P1 + P2). The second exponent value adder may have a size suitable for adding the second exponent values (e.g., 3-bit values, 4-bit values, and so on, as described above).

At block 1559 of **FIG. 15**, a first temporary exponent may be generated by subtracting either the identified second exponent value (e.g., P1), or the sum of the second exponent values (e.g., P1 + P2), from the sum of the biased first exponents (e.g., E1 + E2). In this embodiment, subtraction is performed, since the second exponent value(s) is used to extend the underflow range (e.g., as described for **FIGs. 4-7**) provided by the first exponent(s). In another embodiment, addition may be performed, if the second exponent value(s) are used to extend the overflow range (e.g., as described for **FIGs. 8-9**) provided by the first exponent(s). Referring to **FIG. 16**, an adder 1679 may be coupled to receive the sum of the biased first exponent 1676 and the output 1677, may be operative to perform the subtraction, and may output a first temporary exponent 1680.

At block 1560 of **FIG. 15**, a second temporary exponent may be generated by subtracting an exponent bias from the first temporary exponent. The exponent bias is subtracted from the first temporary exponent because the first temporary exponent is based on a sum of already biased exponents, which effectively adds the exponent bias twice, and so to achieve appropriate bias one of the two exponent biases should be subtracted. The exponent bias may be defined or specified according to the relevant floating-point standard for the floating-point data elements X1 and X2 (e.g., 127 for single precision (FP32), 1023 for double precision (FP64), and so on). By way of example, the second temporary exponent may represent (E1+E2-P1-P2-exponent bias) or (E1+E2-P1-exponent bias) or (E1+E2-P2-exponent bias). Referring to **FIG. 16**, an adder 1682 may be coupled to receive the first temporary exponent 1680 and an exponent bias 1681, may be operative to subtract the exponent bias from the first temporary exponent, and may be operative to output a second temporary exponent 1629.

At block 1561 of **FIG. 15**, a product of the mantissa of the first floating-point data element, and the mantissa of the second floating-point data element, may be generated. The mantissas that are multiplied may include the explicit mantissa bits as well as the hidden bits or J-bits (e.g., the product of the mantissas may be (1.M1 * 1.M2). As is typical for multiplication, the product of the mantissas may have more bits than each of the mantissas including their hidden or J-bits individually (e.g., approaching but less than twice as many depending on the number of mantissa bits carved out for the extended exponents. Referring to **FIG. 16**, a mantissa multiplier 1675 may be coupled to receive a mantissa M1 of X1 and a mantissa M2 of X2. The mantissa multiplier may be operative to multiply the mantissas and output a product of the mantissas 1684. The mantissa multiplier may have a size suitable for multiplying the mantissas (e.g., a 53b x 53b multiplier for double precision, a 24b x 24b multiplier for single precision, an 11b x 11b multiplier for half precision, an 8b x 8b multiplier for BFLOAT16, and so on).

At block 1562 of **FIG. 15**, the product of the mantissas may be normalized, as needed, by shifting the binary/radix point of the product of the mantissas, and adjusting the second temporary exponent (e.g., generated at block 1560) to account for the shift of the binary/radix point to generate a third temporary exponent. The product of the mantissas may be considered normalized when there is a single bit to the left of the radix/binary point, and that single bit is set to a value of binary one. For example, normalized floating-point numbers may have the form 1.0011, 1.1111, 1.1011, whereas non-normalized floating-point numbers may have forms such as 100.11, 11.111, 1101.1. Normalizing the product of the mantissas may include shifting the radix/binary by at least one bit position relative to the actual bit values, and adjusting the second temporary exponent to account for the shifting/repositioning of the radix/binary point. Each time the radix/binary point is moved one bit position to the left, the second temporary exponent may be incremented or increased by one. Conversely, each time the radix/binary point is moved one bit position to the right, the second temporary exponent may be decremented or decreased by one. For example, the number 100.11 may be normalized to $1.0011 \times 2^2$ by shifting the binary point two positions to the left and increasing the second temporary exponent by two. Referring to FIG. 16, normalization circuitry 1683 may be coupled to receive the product of the mantissas 1684 and the second temporary exponent 1629. The normalization circuitry may be operative to normalize the product of the mantissas and output a normalized product of the mantissas 1686. The normalization circuitry may also be operative to adjust the second temporary exponent accordingly and output a third temporary exponent 1685. By way of example, the normalization circuitry may use shift circuitry, multiplexers, or other circuitry to normalize the product of the mantissas and an increment/decrement circuitry or an adder to adjust the second temporary exponent.

At block 1563 of **FIG. 15,** a determination may be made whether any exceptional conditions exist. If an exceptional condition is determined to exist, the method may advance to block 1564. At block 1564, in some embodiments, the exponent of the product floating-point number may be adjusted to indicate the exceptional condition. Alternatively, in other embodiments, an exception may optionally be raised or otherwise signaled without indicating the exceptional condition in the exponent of the product floating-point number. By way of example, after raising or signaling the exception, software may take over by processing the floating-point numbers. Referring to **FIG. 16,** exceptional condition detection circuitry 1690 may be coupled to receive the third temporary exponent 1685. The exceptional condition detection circuitry may be operative to detect exceptional conditions. In some embodiments, the exceptional condition detection circuitry may be operative to raise or signal an exception 1690 without adjusting the third temporary exponent. In other embodiments, the exceptional condition detection circuitry may be operative to adjust the third temporary exponent to generate and output a first exponent E3 of the product floating-point data element X3 and in some cases optionally a second exponent value P3 of X3.

To further illustrate certain concepts, example ways of adjusting the exponent of the product floating-point number based on detected exceptional conditions will now be described, although the scope of the invention is not so limited. Some of these operations may also optionally be performed in different order.

The running exponent may be saturated if it overflows. For example, if the running exponent value is greater than the maximum exponent that can be represented for the floating-point format, then the first exponent value may be set to the maximum number (e.g., all ones to indicate infinity).

A check may be made whether the running exponent is zero or negative. If the running exponent is zero or negative, then the first exponent value may be set to zero (e.g., to indicate that the second exponent value is to be used), and the second exponent value may be calculated. If the running exponent is negative, this means that the second exponent value will be used to extend the range. By way of example, the second exponent value may be calculated by calculating the 2's compliment of the running exponent and adding one. The second exponent value is the amount of underflow plus 1, which can be determined by taking the 2's complement of the running exponent and adding one.

A check may be made whether the second exponent value overflows (e.g., if it exceeds the maximum shift its allowed to specify). For example, in the embodiment of **FIG. 4** if the second exponent value specifies a shift of more than eleven bits, then the second exponent value may be set to one of the values 1011-1111 or 0000 to indicate the maximum shift of eleven bits.

Referring again to **FIG. 15**, at block 1565, the product of the mantissas may be truncated to the appropriate number of bits and rounded, if needed. The product of the mantissas may have more bits than each of the mantissas including their hidden or J-bits (e.g., up to but less than twice as many depending on the number carved out for the extended exponent(s)). The less meaningful terminal bits of the product of the mantissas may be truncated down to the number of explicit significant bits for the floating-point format (e.g., 52 for double precision, 23 for single precision, 10 for half precision, 7 for BFLOAT16, and so on). Rounding may also be performed as needed. Different rounding approaches are known in the arts, such as, for example, round to nearest where ties round to the nearest even, round to nearest where ties round away from zero, round up towards positive infinity, round down towards negative infinity, round toward zero, and so on.

At block 1566, a determination may be made whether the product of the mantissas is still normalized. In some situations (e.g., for some numbers), the rounding may cause the rounded product of the mantissas to no longer be normalized. If the determination is that the product of the mantissas is not normalized, then the method may return to block 1562 and continue. Alternatively, if the determination is that the product of the mantissas is still normalized, then the method may advance to block 1567. Referring to **FIG. 16,** rounding circuitry 1688 may be coupled to receive the normalized product of the mantissas 1686. The rounding circuitry may be operative to truncate and round the normalized product of the mantissas. The rounding circuitry may be operative to determine whether the truncated and rounded product of the mantissas is still normalized. If not, the un-normalized truncated and rounded product of the mantissas may be returned along a return 1689 to the normalization circuitry. Otherwise, the round circuitry may output the mantissa (M3) of the product floating-point data element X3.

At block 1567 of **FIG. 15,** the sign of the product floating-point number may be calculated. Each of the original floating-point numbers has, as its most significant bit (MSB), a sign bit. Since floating-point numbers are interpreted as (-1) raised to the power of the sign bit, the sign bit may either be binary one to indicate that the floating-point number is positive or binary zero to indicate that the floating-point number is negative. The sign bits of the two original floating-point numbers may be used to determine the sign of the product floating-point number. The sign of the product floating-point number will be positive when the sign bits of the original floating-point numbers are the same sign (e.g., both are positive or both are negative), or negative when the sign bits of the original floating-point numbers are different (e.g., one is positive and the other is negative). Referring to **FIG. 16,** sign calculation circuitry 1670 may be coupled to receive the sign S1 of X1 and the sign S2 of X2 and may be operative to determine and output a sign S3 of the product floating-point data element. By way of example, the sign calculation circuitry may include exclusive OR (XOR) circuitry (e.g., an XOR gate).

At block 1568 of **FIG. 15,** the product floating-point data element X3 may be output. This may include outputting the sign S3, the first exponent E3, the mantissa M3, and in some cases optionally the second exponent value P3.

**FIGs. 17A-B** are a block flow diagram of an example embodiment of a method 1791 of adding first and second floating-point data elements, when at least one of the first and second floating-point data elements utilizes a second exponent value (e.g., the second exponent value 219 and/or the 4-bit second exponent value 419 and/or the 3-bit second exponent value 519 and/or the 2-bit second exponent value 619). **FIG. 18** is a block diagram of an example embodiment of a floating-point adder 1805 capable of adding first and second floating-point data elements, when at least one of the first and second floating-point data elements utilizes a second exponent value

(e.g., the second exponent value 219 and/or the 4-bit second exponent value 419 and/or the 3-bit second exponent value 519 and/or the 2-bit second exponent value 619). To streamline the description, the method of **FIGs. 17A-B** will be described with reference to the floating-point adder **FIG. 18.** However, the method of **FIGs. 17A-B** may alternatively be performed by a floating-point adder similar to or different than that of **FIG. 18.** Moreover, the floating-point adder of **FIG. 18** may perform methods the same as, similar to, or different than that of **FIGs. 17A-B.** By way of example, the method 1791 may be performed in response to and/or as part of the operation of an instruction having an opcode indicating that floating-point addition is to be performed, and one or more instructions or control signals decoded from the instruction may be used to control the floating-point adder 1805 to perform the method 1791.

To aid in the description of certain concepts, the first floating-point data element (X1) may have a sign (S1) a mantissa (M1), a first exponent (E1), in some cases optionally a second exponent value (P1). For example, the mantissa (M1) may be the m-bit significand 217 and the second exponent value (P1) may not exist for X1 if E1 is not all zeroes or all ones, or the mantissa (M1) may be the significand 220 and the second exponent value (P1) may exist, if E1 is all zeroes. Likewise, the second floating-point data element (X2) may have a sign (S2) a mantissa (M2), a first exponent (E2), in some cases optionally a second exponent value (P2). For example, the mantissa (M2) may be the m-bit significand 217 and the second exponent value (P2) may not exist for X2 if E2 is not all zeroes or all ones, or the mantissa (M2) may be the significand 220 and the second exponent value (P2) may exist, if E2 is all zeroes. A sum floating-point data element (X3) resulting from multiplying X1 and X2 may have a sign (S3) a mantissa (M3), a first exponent (E3), in some cases optionally a second exponent value (P3). For example, the mantissa (M3) may be the m-bit significand 217 and the second exponent value (P3) may not exist for X3 if E3 is not all zeroes or all ones, or the mantissa (M3) may be the significand 220 and the second exponent value (P3) may exist, if E3 is all zeroes.

At block 1792, a base exponent to be used to implement the addition, and a right shift amount, may be determined, based on the first exponents and/or the second exponent values of the first and second floating-point data elements. Referring to **FIG. 18,** a base exponent and right shift amount determination circuitry 1811 may be coupled to receive the first exponent (E1) of X1, the first exponent (E2) of the X2, the second exponent value (P1) when it is used for X1 (e.g., when E1 is all zeros), and the second exponent value (P2) when it is used for X2 (e.g., when E2 is all zeros). When P1 and/or P2 are not used their bits may instead be used for the mantissas M1 and/or M2, respectively. The circuitry 1811 may be operative to determine and output a base exponent 1821 and a right shift amount 1815 and in some cases a second exponent value 1820.

Block 1792 of **FIG. 17A** includes several optional sub-operations. At block 1793, a determination may be made whether both the first exponents are non-zero (e.g., both E1 and E2 are non-zero). If both first exponents are non-zero (e.g., the determination is "yes"), the method may advance to block 1794. At block 1794, the base exponent may be selected as the larger one of the first exponents (e.g., the larger one of E1 and E2), and a right shift amount may be determined as the difference between the first exponents (e.g., E1-E2, if E1 is the larger exponent). Alternatively, if at least one of the first exponents is not non-zero (e.g., the determination is "no" at block 1793), the method may advance to block 1795. By way of example, the circuitry 1811 of **FIG. 18** may include comparison circuitry, selection circuitry (e.g., a multiplexer), and subtraction circuitry (e.g., an adder) to perform these operations.

At block 1795, a determination may be made whether both the first exponents are zero (e.g., both E1 and E2 are zero). If both first exponents are zero (e.g., the determination is "yes"), the method may advance to block 1796. At block 1796, the base exponent may be determined to be zero, and the right shift amount may be determined to be the absolute value of the difference between the second exponent values (e.g., P1-P2 if P1 is the larger one of the second exponent values). There is no need to take an absolute value if the smaller second exponent value is subtracted from the larger second exponent value. By way of example, the circuitry 1811 of **FIG. 18** may include comparison circuitry, selection circuitry (e.g., a multiplexer), and subtraction circuitry (e.g., an adder) to perform these operations.

Alternatively, if both of the first exponents are not zero (e.g., the determination is "no" at block 1795), which in this method means that one of the first exponents (e.g., E1) is non-zero and the other (e.g., E2) is zero, then the method may advance to block 1797. At block 1797, the base exponent may be determined to be the non-zero first exponent, and the right shift amount may be determined to be the sum of the non-zero first exponent of one of the floating-point data elements and the second exponent value of the other floating-point data element. By way of example, the circuitry 1811 of **FIG. 18** may include comparison circuitry, selection circuitry (e.g., a multiplexer), and addition circuitry (e.g., an adder) to perform these operations.

Based on the determinations made at blocks 1793, 1795, the method will advance to block 1798 via one of blocks 1794, 1796, and 1797. At block 1798, the mantissa of the floating-point data element with the smaller exponent may be right shifted relative to the radix/binary point by the determined right shift amount. In some embodiments, if the right shift value is greater than the precision of the mantissa of the floating-point data element with the smaller exponent, then the second exponent value may be set to its maximum value (e.g., for **FIG. 4** if the shift is more than eleven bits, it may be set to one of 1011-1111, 0000), the shift amount may optionally be set to zero (e.g., as an optional optimization since there is no point in shifting the mantissa if all of its bits will ultimately be shifted out), and if the mantissa is non-zero the sticky bit may be set to binary one.

Referring to **FIG. 18**, a mantissa shift circuit 1814 may be coupled to receive the mantissa M1 of X1, the mantissa M2 of X2, and the determined right shift amount 1815. The mantissa shift circuit may be operative to right shift the mantissa of the floating-point data element with the smaller exponent relative to the radix/binary point by the right shift amount. The mantissa shift circuit may output a right shifted mantissa 1816 (e.g., a right shifted M1) and the other mantissa (e.g., M2) 1817.

At block 1799 of **FIG. 17A**, a sum of the mantissa M1 of the first floating-point data element X1, and the mantissa M2 of the second floating-point data element X2, may be generated. The mantissas that are added may include the explicit mantissa bits as well as the hidden bits or J-bits (e.g., 1.M1 + 1.M2). Referring to **FIG. 18,** an adder 1819 may be coupled to receive a right shifted mantissa 1816 (e.g., a right shifted M1) and the other mantissa (e.g., M2) 1817, may be operative to add the right shifted mantissa and the other mantissa, and output a sum of the mantissas 1822. The adder may have a size suitable for adding the mantissas.

At block 1705 of **FIG. 17A**, the sum of the mantissas may be normalized, as needed, by shifting the binary/radix point of the sum of the mantissas, and adjusting the temporary first exponent E3 (e.g., originally the base exponent determined at block 1792) of X3 and/or the temporary second exponent value P3 of X3 to account for the shift of the binary/radix point. Referring to **FIG. 18,** normalization circuitry 1823 may be coupled to receive the sum of the mantissas 1822, the base exponent 1821, and in some cases optionally the second exponent value 1820. The normalization circuitry may be operative to normalize the sum of the mantissas and output a normalized sum of the mantissas 1826. The normalization circuitry may also be operative to adjust the temporary first exponent E3 (e.g., originally the base exponent) and/or the temporary second exponent value P3 to account for the shift of the binary/radix point. By way of example, the normalization circuitry may use shift circuitry, multiplexers, or other circuitry to shift the sum of the mantissas and an increment/decrement circuitry or an adder to adjust E3 and/or P3.

Block 1705 of **FIG. 17A** includes several optional sub-operations. At block 1701, the radix/binary point of the sum of the mantissas may be shifted until the sum of the mantissas is normalized. The sum of the mantissas may be normalized when there is a single bit to the left of the radix/binary point, and that single bit is set to a value of binary one. For example, normalized floating-point numbers may have the form 1.0011, 1.1111, 1.1011, whereas non-normalized floating-point numbers may have forms such as 100.11, 11.111, 1101.1.

At block 1702, the temporary first exponent E3 (e.g., initially the determined base exponent) may be adjusted to account for the shift of the binary/radix point (e.g., base exponent equal to base exponent minus left shift). If you left shift the mantissa, this is equivalent to multiplying it by a power of two, so we need to reduce the exponent to make sure the number stays the same, which may be achieved by subtracting the left shift from the base exponent. For example, each time the radix/binary point is moved one bit position to the left, the temporary first exponent E3 may be incremented or increased by one. Conversely, each time the radix/binary point is moved one bit position to the right, the temporary first exponent E3 may be decremented or decreased by one.

At block 1703, a determination may be made whether the temporary first exponent E3 (e.g., initially the determined base exponent) is less than zero. If the temporary first exponent E3 is less than zero (e.g., the determination is "yes"), the method may advance to block 1704. At block 1704, the temporary first exponent E3 (e.g., initially the determined base exponent) may be zeroed and the underflow due to the shift may be reflected in the temporary second exponent value P3. For example, the temporary second exponent value P3 may be set equal to the negative of the temporary first exponent E3 plus one. By way of example, this may be done with an adder. The method may advance from block 1704 to block 1706. Alternatively, if the temporary first exponent E3 is not less than zero (e.g., the determination is "no" at block 1703), the method may also advance to block 1706.

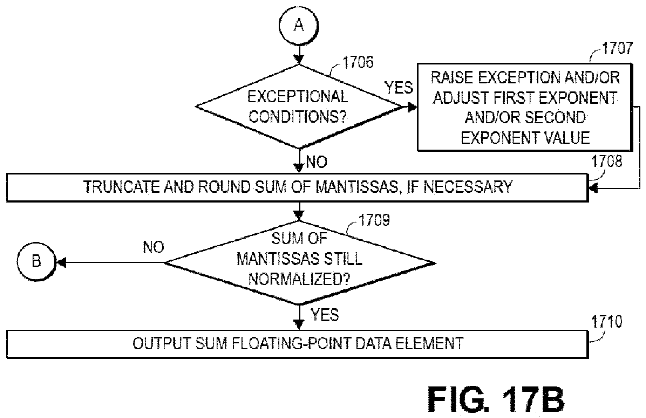

At block 1706 of **FIG. 17B**, a determination may be made whether any exceptional conditions exist. If an exceptional condition is determined to exist (e.g., "yes" is the determination), the method may advance to block 1707. At block 1707, in some embodiments, the temporary first exponent E3 and/or the second exponent value P3 of the sum floating-point number may be adjusted to indicate the exceptional condition. For example, in some embodiments, if the second exponent value P3 indicates an underflow amount greater than its maximum underflow amount then the second exponent value P3 may be set to its maximum underflow amount. For example, in the embodiment of **FIG. 5,** if the 3-bit second exponent value 519 is negative nine (-9) then Y3Y2Y1 may be set to 000 to indicate an exponent of -8. Alternatively, in other embodiments, an exception may optionally be raised or otherwise signaled without adjusting E3 and/or P3. For example, this may be handled in software, as previously described.

Referring to **FIG. 18,** exceptional condition detection circuitry 1827 may be coupled to receive the temporary first exponent E3 1824 and in some cases optionally the second exponent value P3 1825. The exceptional condition detection circuitry may be operative to detect exceptional conditions. In some embodiments, the exceptional condition detection circuitry may be operative to raise or signal an exception 1890 without adjusting E3 and/or P3. In other embodiments, the exceptional condition detection circuitry may be operative to adjust and output E3 or P3 of the sum floating-point data element X3.

Referring again to **FIG. 17B,** at block 1708, the sum of the mantissas may be truncated to the appropriate number of bits and rounded, if needed. Any less meaningful terminal bits of the sum of the mantissas may be truncated down to the number of explicit significant bits for the floating-point format (e.g., fifty-two for double precision, twenty-three for single precision, ten for half precision, seven for BFLOAT16, and so on). Rounding may be performed as needed. Different rounding approaches are known in the arts, such as, for example, round to nearest where ties round to the nearest even, round to nearest where ties round away from zero, round up towards positive infinity, round down towards negative infinity, round toward zero, and so on.

At block 1709, a determination may be made whether the sum of the mantissas is still normalized. In some situations (e.g., for some numbers), the rounding may cause the rounded sum of the mantissas to no longer be normalized. If the determination is that the sum of the mantissas is not normalized (e.g., "no" is the determination), then the method may return to block 1701 and continue. Alternatively, if the determination is that the sum of the mantissas is still normalized (e.g.,

"yes" is the determination at block 1709), then the method may advance to block 1710. Referring to **FIG. 18,** rounding circuitry 1828 may be coupled to receive the normalized sum of the mantissas 1826. The rounding circuitry may be operative to truncate and round the normalized sum of the mantissas. The rounding circuitry may be operative to determine whether the truncated and rounded sum of the mantissas is still normalized. If not, the un-normalized truncated and rounded sum of the mantissas may be returned along a return 1829 to the normalization circuitry. Otherwise, the mantissa (M3) of the sum floating-point data element may be output.

At block 1710, the sum floating-point data element X3 may be output (e.g., stored in a register). This may include outputting S3, E3, M3, and in some cases optionally P3.

Example Computer Architectures.

Detailed below are descriptions of example computer architectures. Other system designs and configurations known in the arts for laptop, desktop, and handheld personal computers (PC)s, personal digital assistants, engineering workstations, servers, disaggregated servers, network devices, network hubs, switches, routers, embedded processors, digital signal processors (DSPs), graphics devices, video game devices, set-top boxes, micro controllers, cell phones, portable media players, hand-held devices, and various other electronic devices, are also suitable. In general, a variety of systems or electronic devices capable of incorporating a processor and/or other execution logic as disclosed herein are generally suitable.

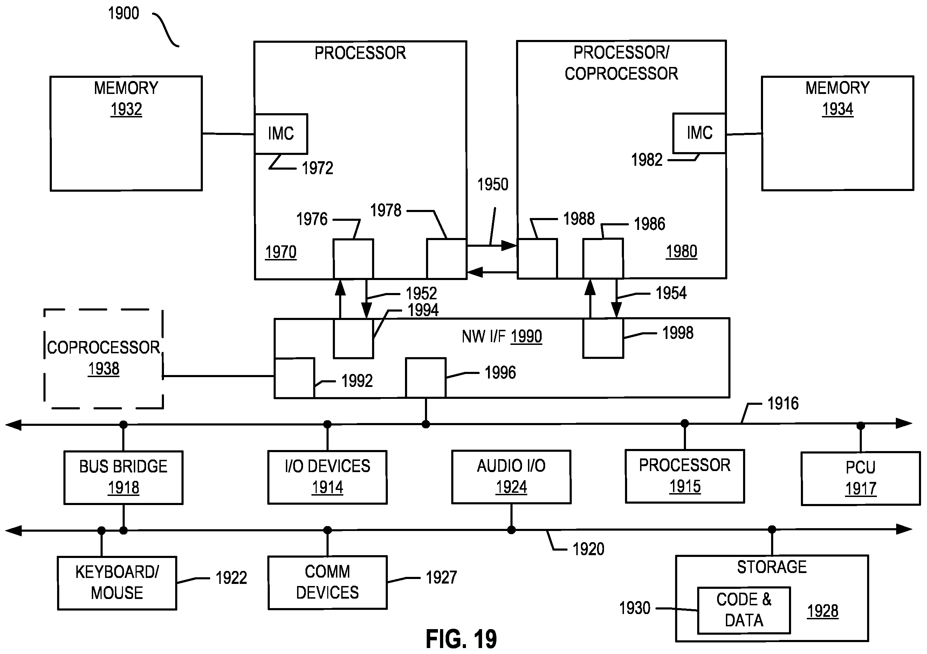

**FIG. 19** illustrates an example computing system. Multiprocessor system 1900 is an interfaced system and includes a plurality of processors or cores including a first processor 1970 and a second processor 1980 coupled via an interface 1950 such as a point-to-point (P-P) interconnect, a fabric, and/or bus. In some examples, the first processor 1970 and the second processor 1980 are homogeneous. In some examples, first processor 1970 and the second processor 1980 are heterogenous. Though the example system 1900 is shown to have two processors, the system may have three or more processors, or may be a single processor system. In some examples, the computing system is a system on a chip (SoC).

Processors 1970 and 1980 are shown including integrated memory controller (IMC) circuitry 1972 and 1982, respectively. Processor 1970 also includes interface circuits 1976 and 1978; similarly, second processor 1980 includes interface circuits 1986 and 1988. Processors 1970, 1980 may exchange information via the interface 1950 using interface circuits 1978, 1988. IMCs 1972 and 1982 couple the processors 1970, 1980 to respective memories, namely a memory 1932 and a memory 1934, which may be portions of main memory locally attached to the respective processors.

Processors 1970, 1980 may each exchange information with a network interface (NW I/F) 1990 via individual interfaces 1952, 1954 using interface circuits 1976, 1994, 1986, 1998. The network interface 1990 (e.g., one or more of an interconnect, bus, and/or fabric, and in some examples is a chipset) may optionally exchange information with a coprocessor 1938 via an interface circuit 1992. In some examples, the coprocessor 1938 is a special-purpose processor, such as, for example, a high-throughput processor, a network or communication processor, compression engine, graphics processor, general purpose graphics processing unit (GPGPU), neural-network processing unit (NPU), embedded processor, or the like.

A shared cache (not shown) may be included in either processor 1970, 1980 or outside of both processors, yet connected with the processors via an interface such as P-P interconnect, such that either or both processors' local cache information may be stored in the shared cache if a processor is placed into a low power mode.

Network interface 1990 may be coupled to a first interface 1916 via interface circuit 1996. In some examples, first interface 1916 may be an interface such as a Peripheral Component Interconnect (PCI) interconnect, a PCI Express interconnect or another I/O interconnect. In some examples, first interface 1916 is coupled to a power control unit (PCU) 1917, which may include circuitry, software, and/or firmware to perform power management operations with regard to the processors 1970, 1980 and/or co-processor 1938. PCU 1917 provides control information to a voltage regulator (not shown) to cause the voltage regulator to generate the appropriate regulated voltage. PCU 1917 also provides control information to control the operating voltage generated. In various examples, PCU 1917 may include a variety of power management logic units (circuitry) to perform hardware-based power management. Such power management may be wholly processor controlled (e.g., by various processor hardware, and which may be triggered by workload and/or power, thermal or other processor constraints) and/or the power management may be performed responsive to external sources (such as a platform or power management source or system software).

PCU 1917 is illustrated as being present as logic separate from the processor 1970 and/or processor 1980. In other cases, PCU 1917 may execute on a given one or more of cores (not shown) of processor 1970 or 1980. In some cases, PCU 1917 may be implemented as a microcontroller (dedicated or general-purpose) or other control logic configured to execute its own dedicated power management code, sometimes referred to as P-code. In yet other examples, power management operations to be performed by PCU 1917 may be implemented externally to a processor, such as by way of a separate power management integrated circuit (PMIC) or another component external to the processor. In yet other examples, power management operations to be performed by PCU 1917 may be implemented within BIOS or other system software.

Various I/O devices 1914 may be coupled to first interface 1916, along with a bus bridge 1918 which couples first interface 1916 to a second interface 1920. In some examples, one or more additional processor(s) 1915, such as coprocessors, high throughput many integrated core (MIC) processors, GPGPUs, accelerators (such as graphics accelerators or digital signal processing (DSP) units), field programmable gate arrays (FPGAs), or any other processor, are coupled to first interface 1916. In some examples, second interface 1920 may be a low pin count (LPC) interface. Various devices may be coupled to second interface 1920 including, for example, a keyboard and/or mouse 1922, communication devices 1927 and storage circuitry 1928. Storage circuitry 1928 may be one or more non-transitory machine-readable storage media as described below, such as a disk drive or other mass storage device which may include instructions/code and data 1930 and may implement the storage 'ISAB03 in some examples. Further, an audio I/O 1924 may be coupled to second interface 1920. Note that other architectures than the point-to-point architecture described above are possible. For example, instead of the point-to-point architecture, a system such as multiprocessor system 1900 may implement a multi-drop interface or other such architecture.

Example Core Architectures, Processors, and Computer Architectures.

Processor cores may be implemented in different ways, for different purposes, and in different processors. For instance, implementations of such cores may include: 1) a general purpose in-order core intended for general-purpose computing; 2) a high-performance general purpose out-of-order core intended for general-purpose computing; 3) a special purpose core intended primarily for graphics and/or scientific (throughput) computing. Implementations of different processors may include: 1) a CPU including one or more general purpose in-order cores intended for general-purpose computing and/or one or more general purpose out-of-order cores intended for general-purpose computing; and 2) a coprocessor including one or more special purpose cores intended primarily for graphics and/or scientific (throughput) computing. Such different processors lead to different computer system architectures, which may include: 1) the coprocessor on a separate chip from the CPU; 2) the coprocessor on a separate die in the same package as a CPU; 3) the coprocessor on the same die as a CPU (in which case, such a coprocessor is sometimes referred to as special purpose logic, such as integrated graphics and/or scientific (throughput) logic, or as special purpose cores); and 4) a system on a chip (SoC) that may be included on the same die as the described CPU (sometimes referred to as the application core(s) or application processor(s)), the above described coprocessor, and additional functionality. Example core architectures are described next, followed by descriptions of example processors and computer architectures.

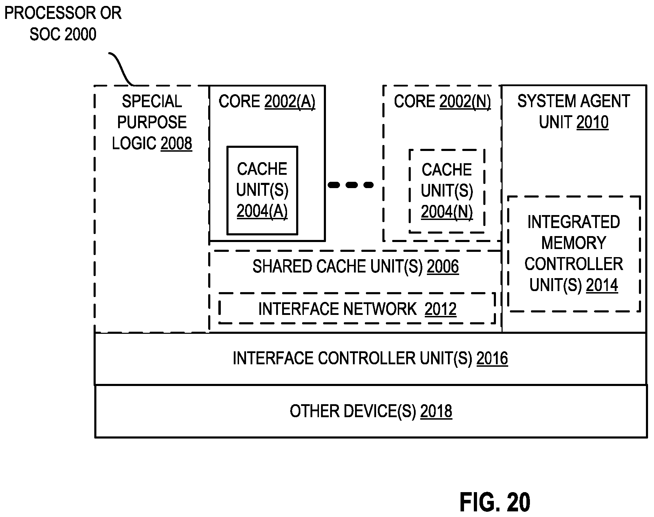

**FIG. 20** illustrates a block diagram of an example processor and/or SoC 2000 that may have one or more cores and an integrated memory controller. The solid lined boxes illustrate a processor 2000 with a single core 2002(A), system agent unit circuitry 2010, and a set of one or more interface controller unit(s) circuitry 2016, while the optional addition of the dashed lined boxes illustrates an alternative processor 2000 with multiple cores 2002(A)-(N), a set of one or more integrated memory controller unit(s) circuitry 2014 in the system agent unit circuitry 2010, and special purpose logic 2008, as well as a set of one or more interface controller units circuitry 2016. Note that the processor 2000 may be one of the processors 1970 or 1980, or co-processor 1938 or 1915 of **FIG. 19.**

Thus, different implementations of the processor 2000 may include: 1) a CPU with the special purpose logic 2008 being integrated graphics and/or scientific (throughput) logic (which may include one or more cores, not shown), and the cores 2002(A)-(N) being one or more general purpose cores (e.g., general purpose in-order cores, general purpose out-of-order cores, or a combination of the two); 2) a coprocessor with the cores 2002(A)-(N) being a large number of special purpose cores intended primarily for graphics and/or scientific (throughput); and 3) a coprocessor with the cores 2002(A)-(N) being a large number of general purpose in-order cores. Thus, the processor 2000 may be a general-purpose processor, coprocessor or special-purpose processor, such as, for example, a network or communication processor, compression engine, graphics processor, GPGPU (general purpose graphics processing unit), a high throughput many integrated core (MIC) coprocessor (including 30 or more cores), embedded processor, or the like. The processor may be implemented on one or more chips. The processor 2000 may be a part of and/or may be implemented on one or more substrates using any of a number of process technologies, such as, for example, complementary metal oxide semiconductor (CMOS), bipolar CMOS (BiCMOS), P-type metal oxide semiconductor (PMOS), or N-type metal oxide semiconductor (NMOS).

A memory hierarchy includes one or more levels of cache unit(s) circuitry 2004(A)-(N) within the cores 2002(A)-(N), a set of one or more shared cache unit(s) circuitry 2006, and external memory (not shown) coupled to the set of integrated memory controller unit(s) circuitry 2014. The set of one or more shared cache unit(s) circuitry 2006 may include one or more mid-level caches, such as level 2 (L2), level 3 (L3), level 4 (L4), or other levels of cache, such as a last level cache (LLC), and/or combinations thereof. While in some examples interface network circuitry 2012 (e.g., a ring interconnect) interfaces the special purpose logic 2008 (e.g., integrated graphics logic), the set of shared cache unit(s) circuitry 2006, and the system agent unit circuitry 2010, alternative examples use any number of well-known techniques for interfacing such units. In some examples, coherency is maintained between one or more of the shared cache unit(s) circuitry 2006 and cores 2002(A)-(N). In some examples, interface controller units circuitry 2016 couple the cores 2002 to one or more other devices 2018 such as one or more I/O devices, storage, one or more communication devices (e.g., wireless networking, wired networking, etc.), etc.

In some examples, one or more of the cores 2002(A)-(N) are capable of multi-threading. The system agent unit circuitry 2010 includes those components coordinating and operating cores 2002(A)-(N). The system agent unit circuitry 2010 may include, for example, power control unit (PCU) circuitry and/or display unit circuitry (not shown). The PCU may be or may include logic and components needed for regulating the power state of the cores 2002(A)-(N) and/or the special purpose logic 2008 (e.g., integrated graphics logic). The display unit circuitry is for driving one or more externally connected displays.

The cores 2002(A)-(N) may be homogenous in terms of instruction set architecture (ISA). Alternatively, the cores 2002(A)-(N) may be heterogeneous in terms of ISA; that is, a subset of the cores 2002(A)-(N) may be capable of executing an ISA, while other cores may be capable of executing only a subset of that ISA or another ISA.

Example Core Architectures - In-order and out-of-order core block diagram.

**FIG. 21(A)** is a block diagram illustrating both an example in-order pipeline and an example register renaming, out-of-order issue/execution pipeline according to examples. **FIG. 21(B)** is a block diagram illustrating both an example in-order architecture core and an example register renaming, out-of-order issue/execution architecture core to be included in a processor according to examples. The solid lined boxes in **FIGS. 21(A)-(B)** illustrate the in-order pipeline and in-order core, while the optional addition of the dashed lined boxes illustrates the register renaming, out-of-order issue/execution pipeline and core. Given that the in-order aspect is a subset of the out-of-order aspect, the out-of-order aspect will be described.

**In FIG. 21(A),** a processor pipeline 2100 includes a fetch stage 2102, an optional length decoding stage 2104, a decode stage 2106, an optional allocation (Alloc) stage 2108, an optional renaming stage 2110, a schedule (also known as a dispatch or issue) stage 2112, an optional register read/memory read stage 2114, an execute stage 2116, a write back/memory write stage 2118, an optional exception handling stage 2122, and an optional commit stage 2124. One or more operations can be performed in each of these processor pipeline stages. For example, during the fetch stage 2102, one or more instructions are fetched from instruction memory, and during the decode stage 2106, the one or more fetched instructions may be decoded, addresses (e.g., load store unit (LSU) addresses) using forwarded register ports may be generated, and branch forwarding (e.g., immediate offset or a link register (LR)) may be performed. In one example, the decode stage 2106 and the register read/memory read stage 2114 may be combined into one pipeline stage. In one example, during the execute stage 2116, the decoded instructions may be executed, LSU address/data pipelining to an Advanced Microcontroller Bus (AMB) interface may be performed, multiply and add operations may be performed, arithmetic operations with branch results may be performed, etc.

By way of example, the example register renaming, out-of-order issue/execution architecture core of **FIG. 21(B)** may implement the pipeline 2100 as follows: 1) the instruction fetch circuitry 2138 performs the fetch and length decoding stages 2102 and 2104; 2) the decode circuitry 2140 performs the decode stage 2106; 3) the rename/allocator unit circuitry 2152 performs the allocation stage 2108 and renaming stage 2110; 4) the scheduler(s) circuitry 2156 performs the schedule stage 2112; 5) the physical register file(s) circuitry 2158 and the memory unit circuitry 2170 perform the register read/memory read stage 2114; the execution cluster(s) 2160 perform the execute stage 2116; 6) the memory unit circuitry 2170 and the physical register file(s) circuitry 2158 perform the write back/memory write stage 2118; 7) various circuitry may be involved in the exception handling stage 2122; and 8) the retirement unit circuitry 2154 and the physical register file(s) circuitry 2158 perform the commit stage 2124.

**FIG. 21(B)** shows a processor core 2190 including front-end unit circuitry 2130 coupled to execution engine unit circuitry 2150, and both are coupled to memory unit circuitry 2170. The core 2190 may be a reduced instruction set architecture computing (RISC) core, a complex instruction set architecture computing (CISC) core, a very long instruction word (VLIW) core, or a hybrid or alternative core type. As yet another option, the core 2190 may be a special-purpose core, such as, for example, a network or communication core, compression engine, coprocessor core, general purpose computing graphics processing unit (GPGPU) core, graphics core, or the like.

The front-end unit circuitry 2130 may include branch prediction circuitry 2132 coupled to instruction cache circuitry 2134, which is coupled to an instruction translation lookaside buffer (TLB) 2136, which is coupled to instruction fetch circuitry 2138, which is coupled to decode circuitry 2140. In one example, the instruction cache circuitry 2134 is included in the memory unit circuitry 2170 rather than the front-end circuitry 2130. The decode circuitry 2140 (or decoder) may decode instructions, and generate as an output one or more micro-operations, microcode entry points, microinstructions, other instructions, or other control signals, which are decoded from, or which otherwise reflect, or are derived from, the original instructions. The decode circuitry 2140 may further include address generation unit (AGU, not shown) circuitry. In one example, the AGU generates an LSU address using forwarded register ports, and may further perform branch forwarding (e.g., immediate offset branch forwarding, LR register branch forwarding, etc.). The decode circuitry 2140 may be implemented using various mechanisms. Examples of suitable mechanisms include, but are not limited to, look-up tables, hardware implementations, programmable logic arrays (PLAs), microcode read only memories (ROMs), etc. In one example, the core 2190 includes a microcode ROM (not shown) or other medium that stores microcode for certain macroinstructions (e.g., in decode circuitry 2140 or otherwise within the front-end circuitry 2130). In one example, the decode circuitry 2140 includes a micro-operation (micro-op) or operation cache (not shown) to hold/cache decoded operations, micro-tags, or micro-operations generated during the decode or other stages of the processor pipeline 2100. The decode circuitry 2140 may be coupled to rename/allocator unit circuitry 2152 in the execution engine circuitry 2150.

The execution engine circuitry 2150 includes the rename/allocator unit circuitry 2152 coupled to retirement unit circuitry 2154 and a set of one or more scheduler(s) circuitry 2156. The scheduler(s) circuitry 2156 represents any number of different schedulers, including reservations stations, central instruction window, etc. In some examples, the scheduler(s) circuitry 2156 can include arithmetic logic unit (ALU) scheduler/scheduling circuitry, ALU queues, address generation unit (AGU) scheduler/scheduling circuitry, AGU queues, etc. The scheduler(s) circuitry 2156 is coupled to the physical register file(s) circuitry 2158. Each of the physical register file(s) circuitry 2158 represents one or more physical register files, different ones of which store one or more different data types, such as scalar integer, scalar floating-point, packed integer, packed floating-point, vector integer, vector floating-point, status (e.g., an instruction pointer that is the address of the next instruction to be executed), etc. In one example, the physical register file(s) circuitry 2158 includes vector registers unit circuitry, writemask registers unit circuitry, and scalar register unit circuitry. These register units may provide architectural vector registers, vector mask registers, general-purpose registers, etc. The physical register file(s) circuitry 2158 is coupled to the retirement unit circuitry 2154 (also known as a retire queue or a retirement queue) to illustrate various ways in which register renaming and out-of-order execution may be implemented (e.g., using a reorder buffer(s) (ROB(s)) and a retirement register file(s); using a future file(s), a history buffer(s), and a retirement register file(s); using a register maps and a pool of registers; etc.). The retirement unit circuitry 2154 and the physical register file(s) circuitry 2158 are coupled to the execution cluster(s) 2160. The execution cluster(s) 2160 includes a set of one or more execution unit(s) circuitry 2162 and a set of one or more memory access circuitry 2164. The execution unit(s) circuitry 2162 may perform various arithmetic, logic, floating-point or other types of operations (e.g., shifts, addition, subtraction, multiplication) and on various types of data (e.g., scalar integer, scalar floating-point, packed integer, packed floating-point, vector integer, vector floating-point). While some examples may include a number of execution units or execution unit circuitry dedicated to specific functions or sets of functions, other examples may include only one execution unit circuitry or multiple execution units/execution unit circuitry that all perform all functions. The scheduler(s) circuitry 2156, physical register file(s) circuitry 2158, and execution cluster(s) 2160 are shown as being possibly plural because certain examples create separate pipelines for certain types of data/operations (e.g., a scalar integer pipeline, a scalar floating-point/packed integer/packed floating-point/vector integer/vector floating-point pipeline, and/or a memory access pipeline that each have their own scheduler circuitry, physical register file(s) circuitry, and/or execution cluster - and in the case of a separate memory access pipeline, certain examples are implemented in which only the execution cluster of this pipeline has the memory access unit(s) circuitry 2164). It should also be understood that where separate pipelines are used, one or more of these pipelines may be out-of-order issue/execution and the rest in-order.

In some examples, the execution engine unit circuitry 2150 may perform load store unit (LSU) address/data pipelining to an Advanced Microcontroller Bus (AMB) interface (not shown), and address phase and writeback, data phase load, store, and branches.

The set of memory access circuitry 2164 is coupled to the memory unit circuitry 2170, which includes data TLB circuitry 2172 coupled to data cache circuitry 2174 coupled to level 2 (L2) cache circuitry 2176. In one example, the memory access circuitry 2164 may include load unit circuitry, store address unit circuitry, and store data unit circuitry, each of which is coupled to the data TLB circuitry 2172 in the memory unit circuitry 2170. The instruction cache circuitry 2134 is further coupled to the level 2 (L2) cache circuitry 2176 in the memory unit circuitry 2170. In one example, the instruction cache 2134 and the data cache 2174 are combined into a single instruction and data cache (not shown) in L2 cache circuitry 2176, level 3 (L3) cache circuitry (not shown), and/or main memory. The L2 cache circuitry 2176 is coupled to one or more other levels of cache and eventually to a main memory.

The core 2190 may support one or more instructions sets (e.g., the x86 instruction set architecture (optionally with some extensions that have been added with newer versions); the MIPS instruction set architecture; the ARM instruction set architecture (optionally with optional additional extensions such as NEON)), including the instruction(s) described herein. In one example, the core 2190 includes logic to support a packed data instruction set architecture extension (e.g., AVX1, AVX2), thereby allowing the operations used by many multimedia applications to be performed using packed data.

Example Execution Unit(s) Circuitry.

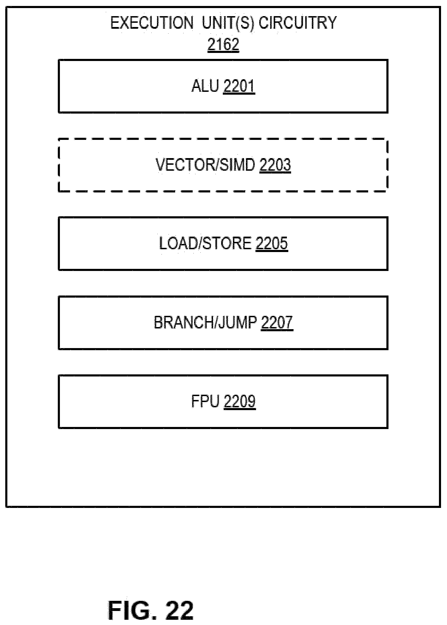

**FIG. 22** illustrates examples of execution unit(s) circuitry, such as execution unit(s) circuitry 2162 of **FIG. 21(B).** As illustrated, execution unit(s) circuity 2162 may include one or more ALU circuits 2201, optional vector/single instruction multiple data (SIMD) circuits 2203, load/store circuits 2205, branch/jump circuits 2207, and/or Floating-point unit (FPU) circuits 2209. ALU circuits 2201 perform integer arithmetic and/or Boolean operations. Vector/SIMD circuits 2203 perform vector/SIMD operations on packed data (such as SIMD/vector registers). Load/store circuits 2205 execute load and store instructions to load data from memory into registers or store from registers to memory. Load/store circuits 2205 may also generate addresses. Branch/jump circuits 2207 cause a branch or jump to a memory address depending on the instruction. FPU circuits 2209 perform floating-point arithmetic. The width of the execution unit(s) circuitry 2162 varies depending upon the example and can range from 16-bit to 1,024-bit, for example. In some examples, two or more smaller execution units are logically combined to form a larger execution unit (e.g., two 128-bit execution units are logically combined to form a 256-bit execution unit).

Example Register Architecture.

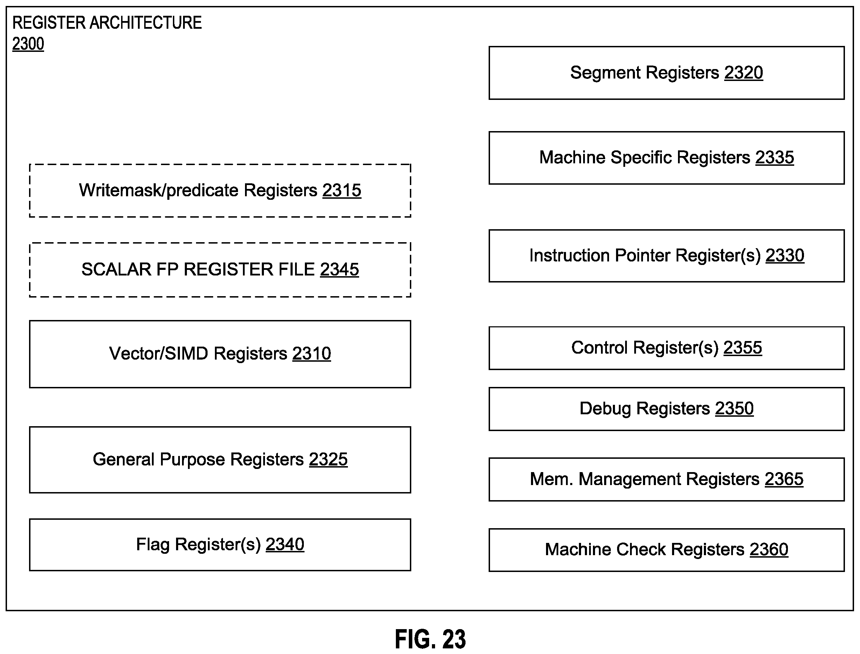

FIG. 23 is a block diagram of a register architecture 2300 according to some examples. As illustrated, the register architecture 2300 includes vector/SIMD registers 2310 that vary from 128-bit to 1,024 bits width. In some examples, the vector/SIMD registers 2310 are physically 512-bits and, depending upon the mapping, only some of the lower bits are used. For example, in some examples, the vector/SIMD registers 2310 are ZMM registers which are 512 bits: the lower 256 bits are used for YMM registers and the lower 128 bits are used for XMM registers. As such, there is an overlay of registers. In some examples, a vector length field selects between a maximum length and one or more other shorter lengths, where each such shorter length is half the length of the preceding length. Scalar operations are operations performed on the lowest order data element position in a ZMM/YMM/XMM register; the higher order data element positions are either left the same as they were prior to the instruction or zeroed depending on the example.
In some examples, the register architecture 2300 includes writemask/predicate registers 2315. For example, in some examples, there are 8 writemask/predicate registers (sometimes called k0 through k7) that are each 16-bit, 32-bit, 64-bit, or 128-bit in size. Writemask/predicate registers 2315 may allow for merging (e.g., allowing any set of elements in the destination to be protected from updates during the execution of any operation) and/or zeroing (e.g., zeroing vector masks allow any set of elements in the destination to be zeroed during the execution of any operation). In some examples, each data element position in a given writemask/predicate register 2315 corresponds to a data element position of the destination. In other examples, the writemask/predicate registers 2315 are scalable and consists of a set number of enable bits for a given vector element (e.g., 8 enable bits per 64-bit vector element).
The register architecture 2300 includes a plurality of general-purpose registers 2325. These registers may be 16-bit, 32-bit, 64-bit, etc. and can be used for scalar operations. In some examples, these registers are referenced by the names RAX, RBX, RCX, RDX, RBP, RSI, RDI, RSP, and R8 through R15.
In some examples, the register architecture 2300 includes scalar floating-point (FP) register file 2345 which is used for scalar floating-point operations on 32/64/80-bit floating-point data using the x87 instruction set architecture extension or as MMX registers to perform operations on 64-bit packed integer data, as well as to hold operands for some operations performed between the MMX and XMM registers.
One or more flag registers 2340 (e.g., EFLAGS, RFLAGS, etc.) store status and control information for arithmetic, compare, and system operations. For example, the one or more flag registers 2340 may store condition code information such as carry, parity, auxiliary carry, zero, sign, and overflow. In some examples, the one or more flag registers 2340 are called program status and control registers.
Segment registers 2320 contain segment points for use in accessing memory. In some examples, these registers are referenced by the names CS, DS, SS, ES, FS, and GS.
Machine specific registers (MSRs) 2335 control and report on processor performance. Most MSRs 2335 handle system-related functions and are not accessible to an application program. Machine check registers 2360 consist of control, status, and error reporting MSRs that are used to detect and report on hardware errors.
One or more instruction pointer register(s) 2330 store an instruction pointer value. Control register(s) 2355 (e.g., CR0-CR4) determine the operating mode of a processor (e.g., processor 1970, 1980, 1938, 1915, and/or 2000) and the characteristics of a currently executing task. Debug registers 2350 control and allow for the monitoring of a processor or core's debugging operations.
Memory (mem) management registers 2365 specify the locations of data structures used in protected mode memory management. These registers may include a global descriptor table register (GDTR), interrupt descriptor table register (IDTR), task register, and a local descriptor table register (LDTR) register.
Alternative examples may use wider or narrower registers. Additionally, alternative examples may use more, less, or different register files and registers. The register architecture 2300 may, for example, be used in register file / memory 'ISAB08, or physical register file(s) circuitry 21 58.

Instruction set architectures.

An instruction set architecture (ISA) may include one or more instruction formats. A given instruction format

define various fields (e.g., number of bits, location of bits) to specify, among other things, the operation to be performed (e.g., opcode) and the operand(s) on which that operation is to be performed and/or other data field(s) (e.g., mask). Some instruction formats are further broken down through the definition of instruction templates (or sub-formats). For example, the instruction templates of a given instruction format may be defined to have different subsets of the instruction format's fields (the included fields are typically in the same order, but at least some have different bit positions because there are less fields included) and/or defined to have a given field interpreted differently. Thus, each instruction of an ISA is expressed using a given instruction format (and, if defined, in a given one of the instruction templates of that instruction format) and includes fields for specifying the operation and the operands. For example, an example ADD instruction has a specific opcode and an instruction format that includes an opcode field to specify that opcode and operand fields to select operands (source1/destination and source2); and an occurrence of this ADD instruction in an instruction stream will have specific contents in the operand fields that select specific operands. In addition, though the description below is made in the context of x86 ISA, it is within the knowledge of one skilled in the art to apply the teachings of the present disclosure in another ISA.

Example Instruction Formats.

Examples of the instruction(s) described herein may be embodied in different formats. Additionally, example systems, architectures, and pipelines are detailed below. Examples of the instruction(s) may be executed on such systems, architectures, and pipelines, but are not limited to those detailed.

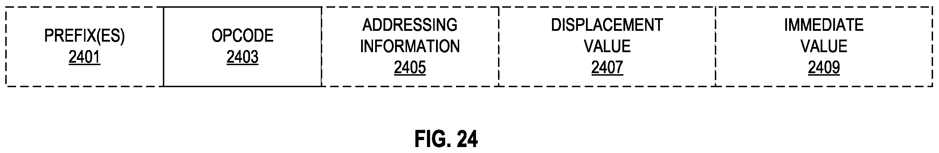

**FIG. 24** illustrates examples of an instruction format. As illustrated, an instruction may include multiple components including, but not limited to, one or more fields for: one or more prefixes 2401, an opcode 2403, addressing information 2405 (e.g., register identifiers, memory addressing information, etc.), a displacement value 2407, and/or an immediate value 2409. Note that some instructions utilize some or all the fields of the format whereas others may only use the field for the opcode 2403. In some examples, the order illustrated is the order in which these fields are to be encoded, however, it should be appreciated that in other examples these fields may be encoded in a different order, combined, etc.

The prefix(es) field(s) 2401, when used, modifies an instruction. In some examples, one or more prefixes are used to repeat string instructions (e.g., 0xF0, 0xF2, 0xF3, etc.), to provide section overrides (e.g., 0x2E, 0x36, 0x3E, 0x26, 0x64, 0x65, 0x2E, 0x3E, etc.), to perform bus lock operations, and/or to change operand (e.g., 0x66) and address sizes (e.g., 0x67). Certain instructions require a mandatory prefix (e.g., 0x66, 0xF2, 0xF3, etc.). Certain of these prefixes may be considered "legacy" prefixes. Other prefixes, one or more examples of which are detailed herein, indicate, and/or provide further capability, such as specifying particular registers, etc. The other prefixes typically follow the "legacy" prefixes.

The opcode field 2403 is used to at least partially define the operation to be performed upon a decoding of the instruction. In some examples, a primary opcode encoded in the opcode field 2403 is one, two, or three bytes in length. In other examples, a primary opcode can be a different length. An additional 3-bit opcode field is sometimes encoded in another field.

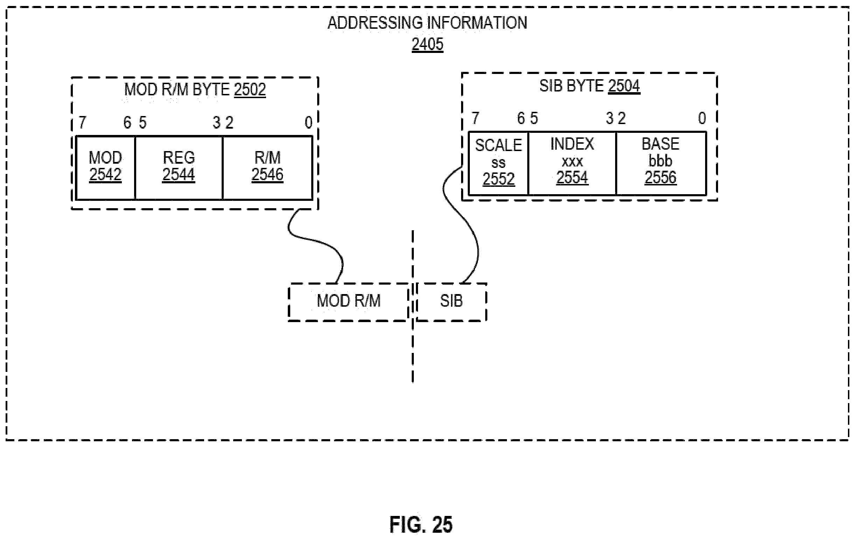

The addressing information field 2405 is used to address one or more operands of the instruction, such as a location in memory or one or more registers. **FIG. 25** illustrates examples of the addressing information field 2405. In this illustration, an optional MOD R/M byte 2502 and an optional Scale, Index, Base (SIB) byte 2504 are shown. The MOD R/M byte 2502 and the SIB byte 2504 are used to encode up to two operands of an instruction, each of which is a direct register or effective memory address. Note that both fields are optional in that not all instructions include one or more of these fields. The MOD R/M byte 2502 includes a MOD field 2542, a register (reg) field 2544, and R/M field 2546.

The content of the MOD field 2542 distinguishes between memory access and nonmemory access modes. In some examples, when the MOD field 2542 has a binary value of 11 (11b), a register-direct addressing mode is utilized, and otherwise a register-indirect addressing mode is used.

The register field 2544 may encode either the destination register operand or a source register operand or may encode an opcode extension and not be used to encode any instruction operand. The content of register field 2544, directly or through address generation, specifies the locations of a source or destination operand (either in a register or in memory). In some examples, the register field 2544 is supplemented with an additional bit from a prefix (e.g., prefix 2401) to allow for greater addressing.

The R/M field 2546 may be used to encode an instruction operand that references a memory address or may be used to encode either the destination register operand or a source register operand. Note the R/M field 2546 may be combined with the MOD field 2542 to dictate an addressing mode in some examples.

The SIB byte 2504 includes a scale field 2552, an index field 2554, and a base field 2556 to be used in the generation of an address. The scale field 2552 indicates a scaling factor. The index field 2554 specifies an index register to use. In some examples, the index field 2554 is supplemented with an additional bit from a prefix (e.g., prefix 2401) to allow for greater addressing. The base field 2556 specifies a base register to use. In some examples, the base field 2556 is supplemented with an additional bit from a prefix (e.g., prefix 2401) to allow for greater addressing. In practice, the content of the scale field 2552 allows for the scaling of the content of the index field 2554 for memory address generation (e.g., for address generation that uses $2^{scale}$ * index + base).

Some addressing forms utilize a displacement value to generate a memory address. For example, a memory address may be generated according to $2^{scale}$ * index + base + displacement, index*scale + displacement, r/m + displacement, instruction pointer (RIP/EIP) + displacement, register + displacement, etc. The displacement may be a 1-byte, 2-byte, 4-byte, etc. value. In some examples, the displacement field 2407 provides this value. Additionally, in some examples, a displacement factor usage is encoded in the MOD field of the addressing information field 2405 that indicates a compressed displacement scheme for which a displacement value is calculated and stored in the displacement field 2407.

In some examples, the immediate value field 2409 specifies an immediate value for the instruction. An immediate value may be encoded as a 1-byte value, a 2-byte value, a 4-byte value, etc.

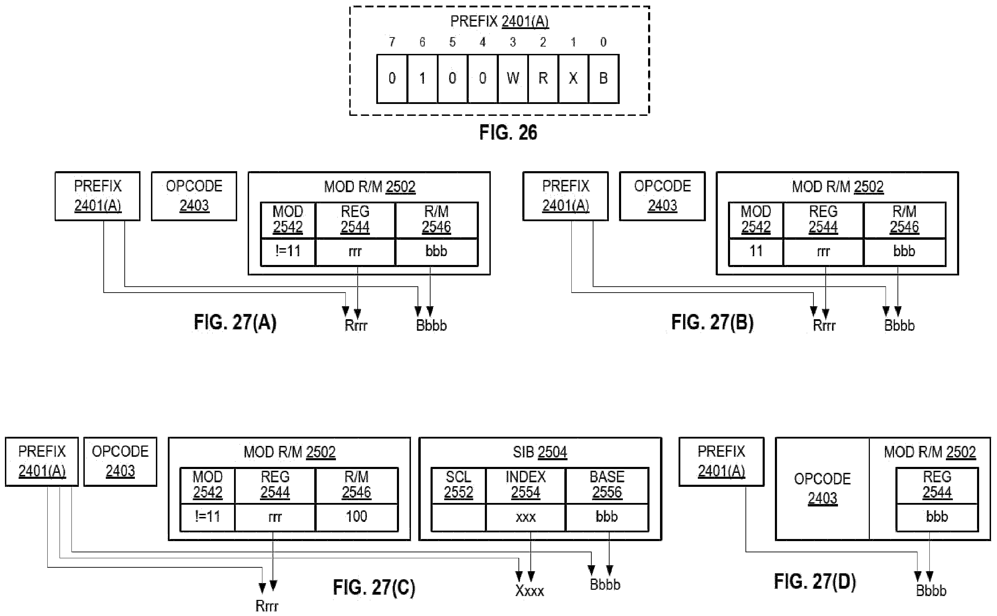

**FIG. 26** illustrates examples of a first prefix 2401(A). In some examples, the first prefix 2401(A) is an example of a REX prefix. Instructions that use this prefix may specify general purpose registers, 64-bit packed data registers (e.g., single instruction, multiple data (SIMD) registers or vector registers), and/or control registers and debug registers (e.g., CR8-CR15 and DR8-DR15).

Instructions using the first prefix 2401(A) may specify up to three registers using 3-bit fields depending on the format: 1) using the reg field 2544 and the R/M field 2546 of the MOD R/M byte 2502; 2) using the MOD R/M byte 2502 with the SIB byte 2504 including using the reg field 2544 and the base field 2556 and index field 2554; or 3) using the register field of an opcode.

In the first prefix 2401(A), bit positions 7:4 are set as 0100. Bit position 3 (W) can be used to determine the operand size but may not solely determine operand width. As such, when W = 0, the operand size is determined by a code segment descriptor (CSD) and when W = 1, the operand size is 64-bit.

Note that the addition of another bit allows for 16 ($2^4$) registers to be addressed, whereas the MOD R/M reg field 2544 and MOD R/M R/M field 2546 alone can each only address 8 registers.

In the first prefix 2401(A), bit position 2 (R) may be an extension of the MOD R/M reg field 2544 and may be used to modify the MOD R/M reg field 2544 when that field encodes a general-purpose register, a 64-bit packed data register (e.g., a SSE register), or a control or debug register. R is ignored when MOD R/M byte 2502 specifies other registers or defines an extended opcode.

Bit position 1 (X) may modify the SIB byte index field 2554.

Bit position 0 (B) may modify the base in the MOD R/M R/M field 2546 or the SIB byte base field 2556; or it may modify the opcode register field used for accessing general purpose registers (e.g., general purpose registers 2325).

**FIGS. 27(A)-(D)** illustrate examples of how the R, X, and B fields of the first prefix 2401(A) are used. **FIG. 27(A)** illustrates R and B from the first prefix 2401(A) being used to extend the reg field 2544 and R/M field 2546 of the MOD R/M byte 2502 when the SIB byte 25 04 is not used for memory addressing. **FIG. 27(B)** illustrates R and B from the first prefix 2401(A) being used to extend the reg field 2544 and R/M field 2546 of the MOD R/M byte 2502 when the SIB byte 25 04 is not used (register-register addressing). **FIG. 27(C)** illustrates R, X, and B from the first prefix 2401(A) being used to extend the reg field 2544 of the MOD R/M byte 2502 and the index field 2554 and base field 2556 when the SIB byte 25 04 being used for memory addressing. **FIG. 27(D)** illustrates B from the first prefix 2401(A) being used to extend the reg field 2544 of the MOD R/M byte 2502 when a register is encoded in the opcode 2403.

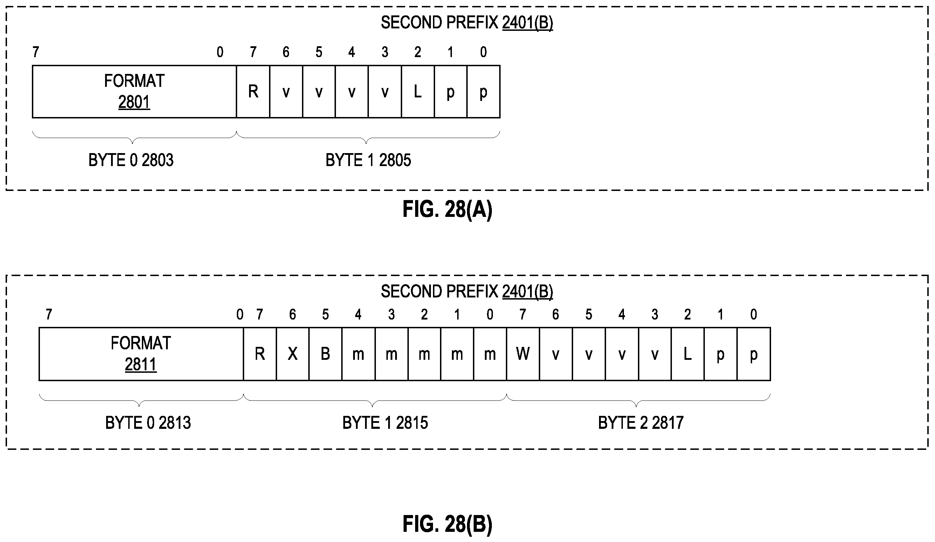

**FIGS. 28(A)-(B)** illustrate examples of a second prefix 2401(B). In some examples, the second prefix 2401(B) is an example of a VEX prefix. The second prefix 2401(B) encoding allows instructions to have more than two operands, and allows SIMD vector registers (e.g., vector/SIMD registers 2310) to be longer than 64-bits (e.g., 128-bit and 256-bit). The use of the second prefix 2401(B) provides for three-operand (or more) syntax. For example, previous twooperand instructions performed operations such as A = A + B, which overwrites a source operand. The use of the second prefix 2401(B) enables operands to perform nondestructive operations such as A = B + C.

In some examples, the second prefix 2401(B) comes in two forms - a two-byte form and a three-byte form. The two-byte second prefix 2401(B) is used mainly for 128-bit, scalar, and some 256-bit instructions; while the three-byte second prefix 2401(B) provides a compact replacement of the first prefix 2401(A) and 3-byte opcode instructions.

**FIG. 28(A)** illustrates examples of a two-byte form of the second prefix 2401(B). In one example, a format field 2801 (byte 0 2803) contains the value C5H. In one example, byte 1 2805 includes an "R" value in bit[7]. This value is the complement of the "R" value of the first prefix 2401(A). Bit[2] is used to dictate the length (L) of the vector (where a value of 0 is a scalar or 128-bit vector and a value of 1 is a 256-bit vector). Bits[1:0] provide opcode extensionality equivalent to some legacy prefixes (e.g., 00 = no prefix, 01 = 66H, 10 = F3H, and 11 = F2H). Bits[6:3] shown as vvvv may be used to: 1) encode the first source register operand, specified in inverted (1s complement) form and valid for instructions with 2 or more source operands; 2) encode the destination register operand, specified in 1s complement form for certain vector shifts; or 3) not encode any operand, the field is reserved and should contain a certain value, such as 1111b.

Instructions that use this prefix may use the MOD R/M R/M field 2546 to encode the instruction operand that references a memory address or encode either the destination register operand or a source register operand.

Instructions that use this prefix may use the MOD R/M reg field 2544 to encode either the destination register operand or a source register operand, or to be treated as an opcode extension and not used to encode any instruction operand.

For instruction syntax that supports four operands, vvvv, the MOD R/M R/M field 2546 and the MOD R/M reg field 2544 encode three of the four operands. Bits[7:4] of the immediate value field 2409 are then used to encode the third source register operand.

**FIG. 28(B)** illustrates examples of a three-byte form of the second prefix 2401(B). In one example, a format field 2811 (byte 0 2813) contains the value C4H. Byte one 2815 includes in bits[7:5] "R," "X," and "B" which are the complements of the same values of the first prefix 2401(A). Bits[4:0] of byte 1 2815 (shown as mmmmm) include content to encode, as needed, one or more implied leading opcode bytes. For example, 00001 implies a 0FH leading opcode, 00010 implies a 0F38H leading opcode, 00011 implies a 0F3AH leading opcode, etc.

Bit[7] of byte 2 2817 is used like W of the first prefix 2401(A) including helping to determine promotable operand sizes. Bit[2] is used to dictate the length (L) of the vector (where a value of 0 is a scalar or 128-bit vector and a value of 1 is a 256-bit vector). Bits[1:0] provide opcode extensionality equivalent to some legacy prefixes (e.g., 00 = no prefix, 01 = 66H, 10 = F3H, and 11 = F2H). Bits[6:3], shown as vvvv, may be used to: 1) encode the first source register operand, specified in inverted (1s complement) form and valid for instructions with 2 or more source operands; 2) encode the destination register operand, specified in 1s complement form for certain vector shifts; or 3) not encode any operand, the field is reserved and should contain a certain value, such as 1111b.

Instructions that use this prefix may use the MOD R/M R/M field 2546 to encode the instruction operand that references a memory address or encode either the destination register operand or a source register operand.

Instructions that use this prefix may use the MOD R/M reg field 2544 to encode either the destination register operand or a source register operand, or to be treated as an opcode extension and not used to encode any instruction operand.

For instruction syntax that supports four operands, vvvv, the MOD R/M R/M field 2546, and the MOD R/M reg field 2544 encode three of the four operands. Bits[7:4] of the immediate value field 2409 are then used to encode the third source register operand.

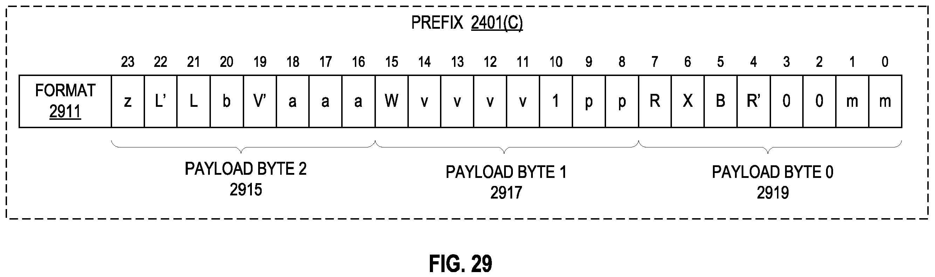

**FIG. 29** illustrates examples of a third prefix 2401(C). In some examples, the third prefix 2401(C) is an example of an EVEX prefix. The third prefix 2401(C) is a four-byte prefix.

The third prefix 2401(C) can encode 32 vector registers (e.g., 128-bit, 256-bit, and 512-bit registers) in 64-bit mode. In some examples, instructions that use a writemask/opmask (see discussion of registers in a previous figure, such as **FIG. 23**) or predication utilize this prefix. Opmask register allows for conditional processing or selection control. Opmask instructions, whose source/destination operands are opmask registers and treat the content of an opmask register as a single value, are encoded using the second prefix 2401(B).

The third prefix 2401(C) may encode functionality that is specific to instruction classes (e.g., a packed instruction with "load+op" semantic can support embedded broadcast functionality, a floating-point instruction with rounding semantic can support static rounding functionality, a floating-point instruction with non-rounding arithmetic semantic can support "suppress all exceptions" functionality, etc.).

The first byte of the third prefix 2401(C) is a format field 2911 that has a value, in one example, of 62H. Subsequent bytes are referred to as payload bytes 2915-2919 and collectively form a 24-bit value of P[23:0] providing specific capability in the form of one or more fields (detailed herein).

In some examples, P[1:0] of payload byte 2919 are identical to the low two mm bits. P[3:2] are reserved in some examples. Bit P[4] (R') allows access to the high 16 vector register set when combined with P[7] and the MOD R/M reg field 2544. P[6] can also provide access to a high sixteen vector register when SIB-type addressing is not needed. P[7:5] consist of R, X, and B which are operand specifier modifier bits for vector register, general purpose register, memory addressing and allow access to the next set of 8 registers beyond the low 8 registers when combined with the MOD R/M register field 2544 and MOD R/M R/M field 2546. P[9:8] provide opcode extensionality equivalent to some legacy prefixes (e.g., 00 = no prefix, 01 = 66H, 10 = F3H, and 11 = F2H). P[10] in some examples is a fixed value of 1. P[14:11], shown as vvvv, may be used to: 1) encode the first source register operand, specified in inverted (1s complement) form and valid for instructions with 2 or more source operands; 2) encode the destination register operand, specified in 1s complement form for certain vector shifts; or 3) not encode any operand, the field is reserved and should contain a certain value, such as 1111b.

P[15] is like W of the first prefix 2401(A) and second prefix 2411(B) and may serve as an opcode extension bit or operand size promotion.

P[18:16] specify the index of a register in the opmask (writemask) registers (e.g., writemask/predicate registers 2315). In one example, the specific value aaa = 000 has a special behavior implying no opmask is used for the instruction (this may be implemented in a variety of ways including the use of an opmask hardwired to all ones or hardware that bypasses the masking hardware). When merging, vector masks allow any set of elements in the destination to be protected from updates during the execution of any operation (specified by the base operation and the augmentation operation); in other one example, preserving the old value of each element of the destination where the corresponding mask bit has a 0. In contrast, when zeroing vector masks allow any set of elements in the destination to be zeroed during the execution of any operation (specified by the base operation and the augmentation operation); in one example, an element of the destination is set to 0 when the corresponding mask bit has a 0 value. A subset of this functionality is the ability to control the vector length of the operation being performed (that is, the span of elements being modified, from the first to the last one); however, it is not necessary that the elements that are modified be consecutive. Thus, the opmask field allows for partial vector operations, including loads, stores, arithmetic, logical, etc. While examples are described in which the opmask field's content selects one of a number of opmask registers that contains the opmask to be used (and thus the opmask field's content indirectly identifies that masking to be performed), alternative examples instead or additional allow the mask write field's content to directly specify the masking to be performed.

P[19] can be combined with P[14:11] to encode a second source vector register in a non-destructive source syntax which can access an upper 16 vector registers using P[19]. P[20] encodes multiple functionalities, which differ across different classes of instructions and can affect the meaning of the vector length/ rounding control specifier field (P [22:21]). P[23] indicates support for merging-writemasking (e.g., when set to 0) or support for zeroing and merging-writemasking (e.g., when set to 1).

Example examples of encoding of registers in instructions using the third prefix 2401(C) are detailed in the following tables.

Table 1: 32-Register Support in 64-bit Mode

|  | 4 | 3 | [2:0] | REG. TYPE | COMMON USAGES |
|---|---|---|---|---|---|
| REG | R' | R | MOD R/M reg | GPR, Vector | Destination or Source |
| VVVV | V' | | VVVV | GPR, Vector | 2nd Source or Destination |
| RM | X | B | MOD R/M R/M | GPR, Vector | 1st Source or Destination |
| BASE | 0 | B | MOD R/M R/M | GPR | Memory addressing |
| INDEX | 0 | X | SIB.index | GPR | Memory addressing |
| VIDX | V' | X | SIB.index | Vector | VSIB memory addressing |

Table 2: Encoding Register Specifiers in 32-bit Mode

|  | [2:0] | REG. TYPE | COMMON USAGES |
|---|---|---|---|
| REG | MOD R/M reg | GPR, Vector | Destination or Source |
| VVVV | vvvv | GPR, Vector | 2nd Source or Destination |
| RM | MOD R/M R/M | GPR, Vector | 1st Source or Destination |
| BASE | MOD R/M R/M | GPR | Memory addressing |
| INDEX | SIB.index | GPR | Memory addressing |
| VIDX | SIB.index | Vector | VSIB memory addressing |

Table 3: Opmask Register Specifier Encoding

|  | [2:0] | REG. TYPE | COMMON USAGES |
|---|---|---|---|
| REG | MOD R/M Reg | k0-k7 | Source |
| VVVV | vvvv | k0-k7 | 2nd Source |
| RM | MOD R/M R/M | k0-k7 | 1st Source |
| {k1} | aaa | k0-k7 | Opmask |

Program code may be applied to input information to perform the functions described herein and generate output information. The output information may be applied to one or more output devices, in known fashion. For purposes of this application, a processing system includes any system that has a processor, such as, for example, a digital signal processor (DSP), a microcontroller, an application specific integrated circuit (ASIC), a field programmable gate array (FPGA), a microprocessor, or any combination thereof.

The program code may be implemented in a high-level procedural or object-oriented programming language to communicate with a processing system. The program code may also be implemented in assembly or machine language, if desired. In fact, the mechanisms described herein are not limited in scope to any particular programming language. In any case, the language may be a compiled or interpreted language.

Examples of the mechanisms disclosed herein may be implemented in hardware, software, firmware, or a combination of such implementation approaches. Examples may be implemented as computer programs or program code executing on programmable systems comprising at least one processor, a storage system (including volatile and non-volatile memory and/or storage elements), at least one input device, and at least one output device.

One or more aspects of at least one example may be implemented by representative instructions stored on a machine-readable medium which represents various logic within the processor, which when read by a machine causes the machine to fabricate logic to perform the techniques described herein. Such representations, known as "intellectual property (IP) cores" may be stored on a tangible, machine readable medium and supplied to various customers or manufacturing facilities to load into the fabrication machines that make the logic or processor.

Such machine-readable storage media may include, without limitation, non-transitory, tangible arrangements of articles manufactured or formed by a machine or device, including storage media such as hard disks, any other type of disk including floppy disks, optical disks, compact disk read-only memories (CD-ROMs), compact disk rewritables (CD-RWs), and magneto-optical disks, semiconductor devices such as read-only memories (ROMs), random access memories (RAMs) such as dynamic random access memories (DRAMs), static random access memories (SRAMs), erasable programmable read-only memories (EPROMs), flash memories, electrically erasable programmable read-only memories (EEPROMs), phase change memory (PCM), magnetic or optical cards, or any other type of media suitable for storing electronic instructions.

Accordingly, examples also include non-transitory, tangible machine-readable media containing instructions or containing design data, such as Hardware Description Language (HDL), which defines structures, circuits, apparatuses, processors and/or system features described herein. Such examples may also be referred to as program products.

Emulation (including binary translation, code morphing, etc.).

In some cases, an instruction converter may be used to convert an instruction from a source instruction set architecture to a target instruction set architecture. For example, the instruction converter may translate (e.g., using static binary translation, dynamic binary translation including dynamic compilation), morph, emulate, or otherwise convert an instruction to one or more other instructions to be processed by the core. The instruction converter may be implemented in software, hardware, firmware, or a combination thereof. The instruction converter may be on processor, off processor, or part on and part off processor.

FIG. 30 is a block diagram illustrating the use of a software instruction converter to convert binary instructions in a source ISA to binary instructions in a target ISA according to examples. In the illustrated example, the instruction converter is a software instruction converter, although alternatively the instruction converter may be implemented in software, firmware, hardware, or various combinations thereof. **FIG. 30** shows a program in a high-level language 3002 may be compiled using a first ISA compiler 3004 to generate first ISA binary code 3006 that may be natively executed by a processor with at least one first ISA core 3016. The processor with at least one first ISA core 3016 represents any processor that can perform substantially the same functions as an Intel® processor with at least one first ISA core by compatibly executing or otherwise processing (1) a substantial portion of the first ISA or (2) object code versions of applications or other software targeted to run on an Intel processor with at least one first ISA core, in order to achieve substantially the same result as a processor with at least one first ISA core. The first ISA compiler 3004 represents a compiler that is operable to generate first ISA binary code 3006 (e.g., object code) that can, with or without additional linkage processing, be executed on the processor with at least one first ISA core 3016. Similarly, **FIG. 30** shows the program in the high-level language 3002 may be compiled using an alternative ISA compiler 3008 to generate alternative ISA binary code 3010 that may be natively executed by a processor without a first ISA core 3014. The instruction converter 3012 is used to convert the first ISA binary code 3006 into code that may be natively executed by the processor without a first ISA core 3014. This converted code is not necessarily to be the same as the alternative ISA binary code 3010; however, the converted code will accomplish the general operation and be made up of instructions from the alternative ISA. Thus, the instruction converter 3012 represents software, firmware, hardware, or a combination thereof that, through emulation, simulation or any other process, allows a processor or other electronic device that does not have a first ISA processor or core to execute the first ISA binary code 3006.

Components, features, and details described for any of **FIGs. 1, 3, and 4-11** may also optionally apply to any of **FIGs. 2, 12, and 13.** Components, features, and details described for any of the processors disclosed herein (e.g., processor 202) may optionally apply to any of the methods disclosed herein (e.g., method 1342, method 1348), which in embodiments may optionally be performed by and/or with such processors. Any of the processors described herein (e.g., processor 202) in embodiments may optionally be included in any of the systems disclosed herein (e.g., any of the systems of **FIGs. 19-20**). Any of the instructions disclosed herein may in some embodiments optionally have any of the features or details of the instruction formats shown herein (e.g., the formats described for **FIG. 11** or **FIGs. 24-29**).

References to "one example," "an example," etc., indicate that the example described may include a particular feature, structure, or characteristic, but every example may not necessarily include the particular feature, structure, or

**EP 4 478 176 B1**

characteristic. Moreover, such phrases are not necessarily referring to the same example. Further, when a particular feature, structure, or characteristic is described in connection with an example, it is submitted that it is within the knowledge of one skilled in the art to affect such feature, structure, or characteristic in connection with other examples whether explicitly described.

Processor components disclosed herein may be said and/or claimed to be operative, operable, capable, able, configured adapted, or otherwise to perform an operation. For example, a decoder may be said and/or claimed to decode an instruction, an execution unit may be said and/or claimed to store a result, or the like. As used herein, these expressions refer to the characteristics, properties, or attributes of the components when in a powered-off state, and do not imply that the components or the device or apparatus in which they are included is currently powered on or operating. For clarity, it is to be understood that the processors and apparatus claimed herein are not claimed as being powered on or running.

In the description and claims, the terms "coupled" and/or "connected," along with their derivatives, may have been used. These terms are not intended as synonyms for each other. Rather, in embodiments, "connected" may be used to indicate that two or more elements are in direct physical and/or electrical contact with each other. "Coupled" may mean that two or more elements are in direct physical and/or electrical contact with each other. However, "coupled" may also mean that two or more elements are not in direct contact with each other, yet still co-operate or interact with each other. For example, an execution unit may be coupled with a register and/or a decode unit through one or more intervening components. In the figures, arrows are used to show connections and couplings.

Some embodiments include an article of manufacture (e.g., a computer program product) that includes a machine-readable medium. The medium may include a mechanism that provides, for example stores, information in a form that is readable by the machine. The machine-readable medium may provide, or have stored thereon, an instruction or sequence of instructions, that if and/or when executed by a machine are operative to cause the machine to perform and/or result in the machine performing one or operations, methods, or techniques disclosed herein.

In some embodiments, the machine-readable medium may include a tangible and/or non-transitory machine-readable storage medium. For example, the non-transitory machine-readable storage medium may include a floppy diskette, an optical storage medium, an optical disk, an optical data storage device, a CD-ROM, a magnetic disk, a magneto-optical disk, a read only memory (ROM), a programmable ROM (PROM), an erasable-and-programmable ROM (EPROM), an electrically-erasable-and-programmable ROM (EEPROM), a random access memory (RAM), a static-RAM (SRAM), a dynamic-RAM (DRAM), a Flash memory, a phase-change memory, a phase-change data storage material, a non-volatile memory, a non-volatile data storage device, a non-transitory memory, a non-transitory data storage device, or the like. The non-transitory machine-readable storage medium does not consist of a transitory propagated signal. In some embodiments, the storage medium may include a tangible medium that includes solid-state matter or material, such as, for example, a semiconductor material, a phase change material, a magnetic solid material, a solid data storage material, etc. Alternatively, a non-tangible transitory computer-readable transmission media, such as, for example, an electrical, optical, acoustical or other form of propagated signals - such as carrier waves, infrared signals, and digital signals, may optionally be used.

Examples of suitable machines include, but are not limited to, a general-purpose processor, a special-purpose processor, a digital logic circuit, an integrated circuit, or the like. Still other examples of suitable machines include a computer system or other electronic device that includes a processor, a digital logic circuit, or an integrated circuit. Examples of such computer systems or electronic devices include, but are not limited to, desktop computers, laptop computers, notebook computers, tablet computers, netbooks, smartphones, cellular phones, servers, network devices (e.g., routers and switches.), Mobile Internet devices (MIDs), media players, smart televisions, nettops, set-top boxes, and video game controllers.

Moreover, in the various examples described above, unless specifically noted otherwise, disjunctive language such as the phrase "at least one of A, B, or C" or "A, B, and/or C" is intended to be understood to mean either A, B, or C, or any combination thereof (i.e. A and B, A and C, B and C, and A, B and C).

In the description above, specific details have been set forth to provide a thorough understanding of the embodiments. However, other embodiments may be practiced without some of these specific details. The specification and drawings are, accordingly, to be regarded in an illustrative rather than a restrictive sense. The scope of the invention is not to be determined by the specific examples provided above, but only by the claims below. In other instances, well-known circuits, structures, devices, and operations have been shown in block diagram form and/or without detail to avoid obscuring the understanding of the description.

**Claims**

1. An apparatus comprising:

    decoder circuitry to decode an instruction, the instruction to indicate at least a source floating-point operand and a destination register, the source floating-point operand to have at least a floating-point data element, the floating-point data element to have a sign bit, an N-bit first exponent value, and M bits; and
execution circuitry coupled with the decoder circuitry, the execution circuitry to perform operations corresponding to the instruction, including to:

interpret the M bits as an M-bit significand, when the N-bit first exponent value is not all zeroes or all ones;
interpret the M bits as including a second exponent value in at least one of the M bits, and a less than M-bit significand in at least one other of the M bits, when the N-bit first exponent value is either all zeroes or all ones;
perform an operation specified by the instruction on said at least the source floating-point operand to generate a result floating-point operand; and
store the result floating-point operand in the destination register.

2. The apparatus of claim 1, wherein the second exponent value comprises a plurality of least significant bits of the M bits, and wherein the less than M-bit significand comprises a plurality of bits more significant than the plurality of least significant bits.

3. The apparatus of claim 2, wherein the second exponent value, and the less than M-bit significand, together include M bits.

4. The apparatus of any one of claims 1 to 3, wherein, when the N-bit first exponent value is all zeroes, the execution circuitry is to use the second exponent value to identify a position of a binary point relative to the less than M-bit significand.

5. The apparatus of any one of claims 1 to 4, wherein the second exponent value has enough bits to be able to encode any one of at least M different values.

6. The apparatus of any one of claims 1 to 5, wherein, when the second exponent value has a given value, the execution circuitry is to set a sticky bit equal to an implicit most significant significand bit for the floating-point data element.

7. The apparatus of any one of claims 1 to 6, wherein one of:

the floating-point data element is a 64-bit floating-point data element, the N-bit first exponent value is an 11-bit value, the M-bit significand is a 52-bit significand, the second exponent value includes from two to six of the M bits, and the less than M-bit significand includes from forty-six to fifty of the M bits;
the floating-point data element is a 32-bit floating-point data element, the N-bit first exponent value is an 8-bit value, the M-bit significand is a 23-bit significand, the second exponent value includes from two to five of the M bits, and the less than M-bit significand includes from eighteen to twenty-one of the M bits;
the floating-point data element is a 16-bit floating-point data element, the N-bit first exponent value is a 5-bit value, the M-bit significand is a 10-bit significand, the second exponent value includes from two to four of the M bits, and the less than M-bit significand includes from six to eight of the M bits; and
the floating-point data element is a 16-bit floating-point data element, the N-bit first exponent value is an 8-bit value, the M-bit significand is a 7-bit significand, the second exponent value includes from two to four of the M bits, and the less than M-bit significand includes from three to five of the M bits.

8. The apparatus of claim 1, wherein, when the N-bit first exponent value is all ones, the execution circuitry is to combine the second exponent value with the N-bit first exponent value, and wherein one of:

the floating-point data element is a 64-bit floating-point data element, the N-bit first exponent value is an 11-bit value, the M-bit significand is a 52-bit significand, the second exponent value includes from three to eleven of the M bits, and the less than M-bit significant includes from forty-one to forty-nine of the M bits;
the floating-point data element is a 32-bit floating-point data element, the N-bit first exponent value is an 8-bit value, the M-bit significand is a 23-bit significand, the second exponent value includes from three to eight of the M bits, and the less than M-bit significant includes from fifteen to twenty of the M bits;
the floating-point data element is a 16-bit floating-point data element, the N-bit first exponent value is a 5-bit value, the M-bit significand is a 10-bit significand, the second exponent value includes from two to five of the M bits, and the less than M-bit significant includes from five to eight of the M bits; and
the floating-point data element is a 16-bit floating-point data element, the N-bit first exponent value is an 8-bit value, the M-bit significand is a 7-bit significand, the second exponent value includes from two to six of the M bits, and the less than M-bit significant includes from one to five of the M bits.

9. The apparatus of any one of claims 1 to 8, wherein one or more of:

when the N-bit first exponent value is all ones, the execution circuitry is not to interpret the floating-point data as a Not a Number (NaN) or as infinity; and/or
the apparatus is to use a value to determine a number of bits of the second exponent value, and wherein the apparatus is either to read the value from a register or obtain the value from either a prefix or an immediate of the instruction.

10. A method comprising:

decoding an instruction, the instruction indicating at least a source floating-point operand and a destination register, the source floating-point operand having at least a floating-point data element, the floating-point data element having a sign bit, an N-bit first exponent value, and M bits; and
performing operations corresponding to the instruction, including:

interpreting the M bits as an M-bit significand, when the N-bit first exponent value is not all zeroes or all ones;
interpreting the M bits as including a second exponent value in at least one of the M bits, and a less than M-bit significand in at least one other of the M bits, when the N-bit first exponent value is either all zeroes or all ones;
performing an operation specified by the instruction on said at least the source floating-point operand to generate a result floating-point operand; and
storing the result floating-point operand in the destination register.

11. The method of claim 10, wherein the second exponent value comprises a plurality of least significant bits of the M bits, and wherein the less than M-bit significand comprises a plurality of bits more significant than the plurality of least significant bits.

12. The method of any one of claims 10 to 11, wherein, when the N-bit first exponent value is all zeroes, the execution circuitry is to use the second exponent value to identify a position of a binary point relative to the less than M-bit significand.

13. A processor comprising means for performing the method of any one of claims 10 to 12.

14. A machine-readable medium including machine-readable instructions that when executed, cause a machine to perform the method of any one of claims 10 to 12.

15. A computer program product comprising instructions which, when executed by a processor, cause the processor to perform the method of any one of claims 10 to 12.

**Patentansprüche**

1. Einrichtung, die Folgendes umfasst:

eine Decodiererschaltungsanordnung zum Decodieren einer Anweisung, wobei die Anweisung mindestens einen Quell-Gleitkommaoperanden und ein Zielregister angeben soll,
wobei der Quell-Gleitkommaoperand mindestens ein Gleitkommadatenelement aufweisen soll, wobei das Gleitkommadatenelement ein Vorzeichenbit, einen ersten N-Bit-Exponentenwert und M Bit aufweisen soll; und
eine Ausführungsschaltungsanordnung, die mit der Decodiererschaltungsanordnung gekoppelt ist, wobei die Ausführungsschaltungsanordnung Operationen durchführen soll, die der Anweisung entsprechen, einschließlich:

Interpretieren der M Bit als eine M-Bit-Mantisse, wenn der erste N-Bit-Exponentenwert nicht ausschließlich aus Nullen oder ausschließlich aus Einsen besteht;
Interpretieren der M Bit als einen zweiten Exponentenwert in mindestens einem der M Bit und eine aus weniger als M Bit bestehende Mantisse in mindestens einem anderen der M Bit beinhaltend, wenn der erste N-Bit-Exponentenwert entweder ausschließlich aus Nullen oder ausschließlich aus Einsen besteht;

EP 4 478 176 B1

Durchführen einer durch die Anweisung spezifizierten Operation an dem mindestens dem Quell-Gleitkommaoperanden, um einen Ergebnis-Gleitkommaoperanden zu erzeugen; und
Speichern des Ergebnis-Gleitkommaoperanden in dem Zielregister.

2. Einrichtung nach Anspruch 1, wobei der zweite Exponentenwert mehrere niedrigstwertige Bit der M Bit umfasst und wobei die aus weniger als M Bit bestehende Mantisse mehrere Bit umfasst, die höherwertig als die mehreren niedrigstwertigen Bits sind.

3. Einrichtung nach Anspruch 2, wobei der zweite Exponentenwert und die aus weniger als M Bit bestehende Mantisse zusammen M Bit beinhalten.

4. Einrichtung nach einem der Ansprüche 1 bis 3, wobei, wenn der erste N-Bit-Exponentenwert ausschließlich aus Nullen besteht, die Ausführungsschaltungsanordnung den zweiten Exponentenwert verwenden soll, um eine Position eines Binärpunkts relativ zu der aus weniger als M Bit bestehenden Mantisse zu identifizieren.

5. Einrichtung nach einem der Ansprüche 1 bis 4, wobei der zweite Exponentenwert genügend Bits aufweist, um in der Lage zu sein, einen beliebigen von mindestens M verschiedenen Werten zu codieren.

6. Einrichtung nach einem der Ansprüche 1 bis 5, wobei, wenn der zweite Exponentenwert einen gegebenen Wert aufweist, die Ausführungsschaltungsanordnung ein Sticky-Bit gleich einem impliziten höchstwertigen Mantissenbit für das Gleitkommadatenelement setzen soll.

7. Einrichtung nach einem der Ansprüche 1 bis 6, wobei eines der Folgenden gilt:

das Gleitkommadatenelement ist ein 64-Bit-Gleitkommadatenelement, der erste N-Bit-Exponentenwert ist ein 11-Bit-Wert, die M-Bit-Mantisse ist eine 52-Bit-Mantisse, der zweite Exponentenwert zwei bis sechs der M Bit beinhaltet und die aus weniger als M Bit bestehende Mantisse beinhaltet sechsundvierzig bis fünfzig der M Bit;
das Gleitkommadatenelement ist ein 32-Bit-Gleitkommadatenelement, der erste N-Bit-Exponentenwert ist ein 8-Bit-Wert, die M-Bit-Mantisse ist eine 23-Bit-Mantisse, der zweite Exponentenwert beinhaltet zwei bis fünf der M Bit und die aus weniger als M Bit bestehende Mantisse beinhaltet achtzehn bis einundzwanzig der M Bit;
das Gleitkommadatenelement ist ein 16-Bit-Gleitkommadatenelement, der erste N-Bit-Exponentenwert ist ein 5-Bit-Wert, die M-Bit-Mantisse ist eine 10-Bit-Mantisse, der zweite Exponentenwert zwei bis vier der M Bit beinhaltet und die aus weniger als M Bit bestehende Mantisse beinhaltet sechs bis acht der M Bit; und
das Gleitkommadatenelement ist ein 16-Bit-Gleitkommadatenelement, der erste N-Bit-Exponentenwert ist ein 8-Bit-Wert, die M-Bit-Mantisse ist eine 7-Bit-Mantisse, der zweite Exponentenwert beinhaltet zwei bis vier der M Bit und die aus weniger als M Bit bestehende Mantisse beinhaltet drei bis fünf der M Bit.

8. Einrichtung nach Anspruch 1, wobei, wenn der erste N-Bit-Exponentenwert ausschließlich aus Einsen besteht, die Ausführungsschaltungsanordnung den zweiten Exponentenwert mit dem ersten N-Bit-Exponentenwert kombinieren soll, und wobei eines der Folgenden gilt:

das Gleitkommadatenelement ist ein 64-Bit-Gleitkommadatenelement, der erste N-Bit-Exponentenwert ist ein 11-Bit-Wert, die M-Bit-Mantisse ist eine 52-Bit-Mantisse, der zweite Exponentenwert drei bis elf der M Bit beinhaltet und die aus weniger als M Bit bestehende Mantisse beinhaltet einundvierzig bis neunundvierzig der M Bit;
das Gleitkommadatenelement ist ein 32-Bit-Gleitkommadatenelement, der erste N-Bit-Exponentenwert ist ein 8-Bit-Wert, die M-Bit-Mantisse ist eine 23-Bit-Mantisse, der zweite Exponentenwert beinhaltet drei bis acht der M Bit und die aus weniger als M Bit bestehende Mantisse beinhaltet fünfzehn bis zwanzig der M Bit;
das Gleitkommadatenelement ist ein 16-Bit-Gleitkommadatenelement, der erste N-Bit-Exponentenwert ist ein 5-Bit-Wert, die M-Bit-Mantisse ist eine 10-Bit-Mantisse, der zweite Exponentenwert zwei bis fünf der M Bit beinhaltet und die aus weniger als M Bit bestehende Mantisse beinhaltet fünf bis acht der M Bit; und
das Gleitkommadatenelement ist ein 16-Bit-Gleitkommadatenelement, der erste N-Bit-Exponentenwert ist ein 8-Bit-Wert, die M-Bit-Mantisse ist eine 7-Bit-Mantisse, der zweite Exponentenwert beinhaltet zwei bis sechs der M Bit und die aus weniger als M Bit bestehende Mantisse beinhaltet ein bis fünf der M Bit.

9. Einrichtung nach einem der Ansprüche 1 bis 8, wobei eines oder mehrere der Folgenden gelten:

wenn der erste N-Bit-Exponentenwert ausschließlich aus Einsen besteht, soll die Ausführungsschaltungsanordnung die Gleitkommadaten nicht als "Not a Number" (NaN) oder als unendlich interpretieren; und/oder die Einrichtung soll einen Wert verwenden, um eine Anzahl von Bits des zweiten Exponentenwerts zu bestimmen, und wobei die Einrichtung entweder den Wert aus einem Register lesen oder den Wert entweder aus einem Präfix oder einem Immediate der Anweisung erhalten soll.

10. Verfahren, das Folgendes umfasst:

Decodieren einer Anweisung, wobei die Anweisung mindestens einen Quell-Gleitkommaoperanden und ein Zielregister angibt, wobei der Quell-Gleitkommaoperand mindestens ein Gleitkommadatenelement aufweist, wobei das Gleitkommadatenelement ein Vorzeichenbit, einen ersten N-Bit-Exponentenwert und M Bit aufweist; und
Durchführen von Operationen, die der Anweisung entsprechen, einschließlich:

Interpretieren der M Bit als eine M-Bit-Mantisse, wenn der erste N-Bit-Exponentenwert nicht ausschließlich aus Nullen oder ausschließlich aus Einsen besteht;
Interpretieren der M Bit als einen zweiten Exponentenwert in mindestens einem der M Bit und eine aus weniger als M Bit bestehende Mantisse in mindestens einem anderen der M Bit beinhaltend, wenn der erste N-Bit-Exponentenwert entweder ausschließlich aus Nullen oder ausschließlich aus Einsen besteht;
Durchführen einer durch die Anweisung spezifizierten Operation an dem mindestens dem Quell-Gleitkommaoperanden, um einen Ergebnis-Gleitkommaoperanden zu erzeugen; und
Speichern des Ergebnis-Gleitkommaoperanden in dem Zielregister.

11. Verfahren nach Anspruch 10, wobei der zweite Exponentenwert mehrere niedrigstwertige Bit der M Bit umfasst und wobei die aus weniger als M Bit bestehende Mantisse mehrere Bit umfasst, die höherwertig als die mehreren niedrigstwertigen Bits sind.

12. Verfahren nach einem der Ansprüche 10 bis 11, wobei, wenn der erste N-Bit-Exponentenwert ausschließlich aus Nullen besteht, die Ausführungsschaltungsanordnung den zweiten Exponentenwert verwenden soll, um eine Position eines Binärpunkts relativ zu der aus weniger als M Bit bestehenden Mantisse zu identifizieren.

13. Prozessor, der Mittel zum Durchführen des Verfahrens nach einem der Ansprüche 10 bis 12 umfasst.

14. Maschinenlesbares Medium, das maschinenlesbare Anweisungen beinhaltet, die bei Ausführung bewirken, dass eine Maschine das Verfahren nach einem der Ansprüche 10 bis 12 durchführt.

15. Computerprogrammprodukt, das Anweisungen umfasst, die bei Ausführung durch einen Prozessor bewirken, dass der Prozessor das Verfahren nach einem der Ansprüche 10 bis 12 durchführt.


**Revendications**

1. Appareil comprenant :

une circuiterie décodeuse pour décoder une instruction, l'instruction indiquant au moins un opérande source à virgule flottante et un registre de destination, l'opérande source à virgule flottante comportant au moins un élément de données à virgule flottante, l'élément de données à virgule flottante comportant un bit de signe, une première valeur d'exposant à N bits, et M bits ; et
une circuiterie d'exécution couplée à la circuiterie décodeuse, la circuiterie d'exécution effectuant des opérations correspondant à l'instruction, ce qui comprend les étapes consistant à :

interpréter les M bits comme un significande à M bits, lorsque la première valeur d'exposant à N bits n'est pas composée uniquement de zéros ou uniquement de uns ;
interpréter que les M bits comprennent une seconde valeur d'exposant dans au moins un des M bits et un significande de moins de M bits dans au moins un autre des M bits lorsque la première valeur d'exposant à N bits est soit composée uniquement de zéros, soit uniquement de uns ;
réaliser une opération spécifiée par l'instruction sur ledit au moins un opérande source à virgule flottante pour générer un opérande résultat à virgule flottante ; et
stocker l'opérande résultat à virgule flottante dans le registre de destination.

**2.** Appareil selon la revendication 1, la seconde valeur d'exposant comprenant une pluralité de bits de poids faible parmi les M bits, et le significande de moins de M bits comprenant une pluralité de bits de poids plus important que la pluralité de bits de poids faible.

**3.** Appareil selon la revendication 2, la seconde valeur d'exposant et le significande de moins de M bits comprenant ensemble M bits.

**4.** Appareil selon l'une quelconque des revendications 1 à 3, lorsque la première valeur d'exposant à N bits est composée uniquement de zéros, la circuiterie d'exécution utilisant la seconde valeur d'exposant pour identifier une position d'un point binaire par rapport au significande de moins de M bits.

**5.** Appareil selon l'une quelconque des revendications 1 à 4, la seconde valeur d'exposant comportant suffisamment de bits pour pouvoir coder n'importe laquelle d'au moins M valeurs différentes.

**6.** Appareil selon l'une quelconque des revendications 1 à 5, lorsque la seconde valeur d'exposant a une valeur donnée, la circuiterie d'exécution définissant un sticky bit égal à un bit implicite de significande de poids fort pour l'élément de données à virgule flottante.

**7.** Appareil selon l'une quelconque des revendications 1 à 6, l'une des situations suivantes étant vérifiée :

l'élément de données à virgule flottante est un élément de données à virgule flottante à 64 bits, la première valeur d'exposant à N bits est une valeur à 11 bits, le significande à M bits est un significande à 52 bits, la seconde valeur d'exposant comprend de deux à six des M bits, et le significande de moins de M bits comprend de quarante-six à cinquante des M bits ;

l'élément de données à virgule flottante est un élément de données à virgule flottante à 32 bits, la première valeur d'exposant à N bits est une valeur à 8 bits, le significande à M bits est un significande à 23 bits, la seconde valeur d'exposant comprend de deux à cinq des M bits, et le significande de moins de M bits comprend de dix-huit à vingt-et-un des M bits ;

l'élément de données à virgule flottante est un élément de données à virgule flottante à 16 bits, la première valeur d'exposant à N bits est une valeur à 5 bits, le significande à M bits est un significande à 10 bits, la seconde valeur d'exposant comprend de deux à quatre des M bits, et le significande de moins de M bits comprend de six à huit des M bits ; et

l'élément de données à virgule flottante est un élément de données à virgule flottante à 16 bits, la première valeur d'exposant à N bits est une valeur à 8 bits, le significande à M bits est un significande à 7 bits, la seconde valeur d'exposant comprend de deux à quatre des M bits, et le significande de moins de M bits comprend de trois à cinq des M bits.

**8.** Appareil selon la revendication 1, lorsque la première valeur d'exposant de N bits est composée uniquement de uns, la circuiterie d'exécution combinant la seconde valeur d'exposant avec la première valeur d'exposant à N bits, et l'une des situations suivantes étant vérifiée :

l'élément de données à virgule flottante est un élément de données à virgule flottante à 64 bits, la première valeur d'exposant à N bits est une valeur à 11 bits, le significande à M bits est un significande à 52 bits, la seconde valeur d'exposant comprend de trois à onze des M bits, et le significande de moins de M bits comprend de quarante-et-un à quarante-neuf des M bits ;

l'élément de données à virgule flottante est un élément de données à virgule flottante à 32 bits, la première valeur d'exposant à N bits est une valeur à 8 bits, le significande à M bits est un significande à 23 bits, la seconde valeur d'exposant comprend de trois à huit des M bits, et le significande de moins de M bits comprend de quinze à vingt des M bits ;

l'élément de données à virgule flottante est un élément de données à virgule flottante à 16 bits, la première valeur d'exposant à N bits est une valeur à 5 bits, le significande à M bits est un significande à 10 bits, la seconde valeur d'exposant comprend de deux à cinq des M bits, et le significande de moins de M bits comprend de cinq à huit des M bits ; et

l'élément de données à virgule flottante est un élément de données à virgule flottante à 16 bits, la première valeur d'exposant à N bits est une valeur à 8 bits, le significande à M bits est un significande à 7 bits, la seconde valeur d'exposant comprend de deux à six des M bits, et le significande de moins de M bits comprend d'un à cinq des M bits.

9. Appareil selon l'une quelconque des revendications 1 à 8, une ou plusieurs des situations suivantes étant vérifiées : lorsque la première valeur d'exposant à N bits est composée uniquement de uns, la circuiterie d'exécution n'interprète pas les données à virgule flottante comme un Pas un nombre (NaN) ou comme un infini ; et/ou l'appareil utilise une valeur pour déterminer un nombre de bits de la seconde valeur d'exposant, et l'appareil soit lit la valeur dans un registre, soit obtient la valeur à partir d'un préfixe ou d'un immédiat de l'instruction.

10. Procédé, comprenant les étapes consistant à :

décoder une instruction, l'instruction indiquant au moins un opérande source à virgule flottante et un registre de destination, l'opérande source à virgule flottante comportant au moins un élément de données à virgule flottante, l'élément de données à virgule flottante comportant un bit de signe, une première valeur d'exposant à N bits, et M bits ; et
réaliser des opérations correspondant à l'instruction, ce qui comprend les étapes consistant à :

interpréter les M bits comme un significande à M bits, lorsque la première valeur d'exposant à N bits n'est pas composée uniquement de zéros ou uniquement de uns ;
interpréter que les M bits comprennent une seconde valeur d'exposant dans au moins un des M bits et un significande de moins de M bits dans au moins un autre des M bits lorsque la première valeur d'exposant à N bits est soit composée uniquement de zéros, soit uniquement de uns ;
réaliser une opération spécifiée par l'instruction sur ledit au moins un opérande source à virgule flottante pour générer un opérande résultat à virgule flottante ; et
stocker l'opérande résultat à virgule flottante dans le registre de destination.

11. Procédé selon la revendication 10, la seconde valeur d'exposant comprenant une pluralité de bits de poids faible parmi les M bits, et le significande de moins de M bits comprenant une pluralité de bits de poids plus important que la pluralité de bits de poids faible.

12. Procédé selon l'une quelconque des revendications 10 à 11, lorsque la première valeur d'exposant à N bits est composée uniquement de zéros, la circuiterie d'exécution utilisant la seconde valeur d'exposant pour identifier une position d'un point binaire par rapport au significande de moins de M bits.

13. Processeur, comprenant un moyen permettant de réaliser le procédé selon l'une quelconque des revendications 10 à 12.

14. Support lisible par machine, comprenant des instructions lisibles par machine qui, lorsqu'elles sont exécutées, amènent une machine à réaliser le procédé selon l'une quelconque des revendications 10 à 12.

15. Produit-programme informatique, comprenant des instructions qui, lorsqu'elles sont exécutées par un processeur, amènent le processeur à réaliser le procédé selon l'une quelconque des revendications 10 à 12.

STANDARD FLOATING-POINT FORMATS 100

| FORMAT | EXPLICIT SIGNAFICAND BITS | EXPONENT BITS |
|---|---|---|
| DOUBLE PRECISION (FP64) | 52 | 11 |
| SINGLE PRECISION (FP32) | 23 | 8 |
| HALF PRECISION (FP16) | 10 | 5 |
| BFLOAT16 | 7 | 8 |
| FF8 E5M2 | 2 | 5 |
| FP8 E4M3 | 3 | 4 |

PROCESSOR
102

EXTENDED RANGE FLOATING-POINT FORMAT(S)
101

# FIG. 1

FIG. 2

PROCESSOR 202

FLOATING-POINT INSTRUCTION 203

DECODER CIRCUITRY 204

EXECUTION CIRCUITRY 205

| N-BIT FIRST EXPONENT VALUE IS NOT ALL ZEROS OR ALL ONES 216 | m-BIT SIGNIFICAND 217 |
|---|---|

m BITS 211

| N-BIT FIRST EXPONENT VALUE IS ALL ZEROS OR ALL ONES 218 | SIGNIFICAND 220 | SECOND EXPONENT VALUE 219 |
|---|---|---|

FIRST SOURCE FLOATING-POINT OPERAND 206

REGISTERS/ MEMORY 215

FLOATING-POINT DATA ELEMENT 207

| 208 | SIGN BIT 209 | N-BIT FIRST EXPONENT VALUE 210 | m BITS 211 |
|---|---|---|---|

212 — OPTIONAL SECOND SOURCE FLOATING-POINT OPERAND

DESTINATION REGISTER 213

RESULT FLOATING-POINT OPERAND 214

EP 4 478 176 B1

FIG. 3

PROCESSOR 302

STORAGE 322

FLOATING-POINT INSTRUCTION) 303

DECODER CIRCUITRY 304

DECODED INST.

REG. RENAME/ REG. ALLOC./ SCHED CIRCUITRY 323

REGISTER FILE/ MEMORY 315

EXECUTION CIRCUITRY 305

WRITE BACK CIRCUITRY 324

FIG. 4

STANDARD FLOATING-POINT FORMAT 500

EXTENDED RANGE FLOATING-POINT FORMAT 501

10 BIT EXPLICIT SIGNIFICAND 517

5 BIT FIRST EXPONENT VALUE 516

7-BIT SIGNIFICAND 520

3-BIT SECOND EXPONENT VALUE 519

5-BIT FIRST EXPONENT VALUE 518

| $Y_3 Y_2 Y_1$ | EXPONENT |
|---|---|
| 001 | -1 |
| 010 | -2 |
| 011 | -3 |
| 100 | -4 |
| 101 | -5 |
| 110 | -6 |
| 111 | -7 |
| 000 | -8 |

FIG. 5

EP 4 478 176 B1

STANDARD FLOATING-POINT FORMAT 600

10 BIT EXPLICIT SIGNIFICAND 617

5 BIT FIRST EXPONENT VALUE 616

| (1) | A | B | C | D | E | F | G | H | I | J | $X_5$ | $X_4$ | $X_3$ | $X_2$ | $X_1$ |

| (1) | A | B | C | D | E | F | G | H | $Y_2$ | $Y_1$ | 0 | 0 | 0 | 0 | 0 |

EXTENDED RANGE FLOATING-POINT FORMAT 601

8-BIT SIGNIFICAND 620

2-BIT SECOND EXPONENT VALUE 619

5-BIT FIRST EXPONENT VALUE 618

| (1) | A | B | C | D | E | F | G | 0 | 0 |
| (1) | A | B | C | D | E | F | G | 0 |
| (1) | A | B | C | D | E | F | G |
| | | | | | | | | (1) |

| $Y_2Y_1$ | EXPONENT |
|---|---|
| 01 | -1 |
| 10 | -2 |
| 11 | -3 |
| 00 | -4 |

**FIG. 6**

|  | STANDARD FLOATING-POINT FORMATS 700 | | EXTENDED EXPONENT RANGE FOR UNDER FLOW FLOATING-POINT FORMATS 701 | |
|---|---|---|---|---|
| NAME | EXPLICIT SIGNIFICAND BITS | FIRST EXPONENT VALUE BITS | SECOND EXPONENT VALUE BITS | UNDERFLOW SIGNIFICAND BITS |
| DOUBLE PRECISION (FP64) | 52 | 11 | 1-6 OR 2-6 | 46-51 OR 46-50 |
| SINGLE PRECISION (FP32) | 23 | 8 | 1-5 OR 2-5 | 18-22 OR 18-21 |
| HALF PRECISION (FP16) | 10 | 5 | 1-4 OR 2-4 | 6-9 OR 6-8 |
| BFLOAT16 | 7 | 8 | 1-4 OR 2-4 | 3-6 OR 3-5 |
| FP8 E5M2 | 2 | 5 | 1-2 | 0-1 |
| FP8 E4M3 | 3 | 4 | 1-3 | 0-2 |

# FIG. 7

FIG. 8

| | STANDARD FLOATING-POINT FORMATS 900 | | | EXTENDED EXPONENT RANGE FOR OVERFLOW FLOATING-POINT FORMATS 901 | |
|---|---|---|---|---|---|
| NAME | EXPLICIT SIGNIFICAND BITS | FIRST EXPONENT VALUE BITS | | SECOND EXPONENT VALUE BITS | UNDERFLOW SIGNIFICAND BITS |
| DOUBLE PRECISION (FP64) | 52 | 11 | | 1-11 OR 3-11 | 41-51 OR 41-49 |
| SINGLE PRECISION (FP32) | 23 | 8 | | 1-8 OR 3-8 | 15-22 OR 15-20 |
| HALF PRECISION (FP16) | 10 | 5 | | 1-5 OR 2-5 | 5-9 OR 5-8 |
| BFLOAT16 | 7 | 8 | | 1-6 OR 2-6 | 1-6 OR 1-5 |
| FP8 E5M2 | 2 | 5 | | 1-2 | 1-2 |
| FP8 E4M3 | 3 | 4 | | 1-2 | 1-2 |

# FIG. 9

EP 4 478 176 B1

PROCESSOR
1002

REGISTER(S)
1015

ENABLE/
DISABLE
CONTROL
1030

INDICATION OF
NUMBER OF BITS
FOR SECOND EXPONENT
VALUE TO EXTEND
UNDERFLOW RANGE
1032

INDICATION OF
NUMBER OF BITS
FOR SECOND EXPONENT
VALUE TO EXTEND
OVERFLOW RANGE
1034

# FIG. 10

FLOATING-POINT
INSTRUCTION
1103

| OPTIONAL PREFIX 1135 / ENABLE/ DISABLE CONTROL 1136 | OPCODE 1137 | FIRST SOURCE SPECIFIER 1138 | OPTIONAL SECOND SOURCE SPECIFIER 1139 | DESTINATION SPECIFIER 1140 | OPTIONAL INDICATION OF NUMBER OF BITS FOR SECOND EXPONENT VALUE TO EXTEND UNDERFLOW RANGE 1141 | OPTIONAL INDICATION OF NUMBER OF BITS FOR SECOND EXPONENT VALUE TO EXTEND OVERFLOW RANGE 1142 |
|---|---|---|---|---|---|---|

**FIG. 11**

METHOD 1242

FETCH INSTANCE OF SINGLE FLOATING-POINT INSTRUCTION INDICATING AT LEAST ONE SOURCE FLOATING-POINT OPERAND AND DESTINATION REGISTER, SOURCE FLOATING-POINT OPERAND HAVING AT LEAST ONE FLOATING-POINT DATA ELEMENT HAVING SIGN BIT, N-BIT FIRST EXPONENT VALUE, AND M BITS   1243

DECODE FLOATING-POINT INSTRUCTION 1244

RETRIEVE DATA ASSOCIATED WITH THE SOURCE FLOATING-POINT OPERAND(S) AND SCHEDULE 1245

EXECUTE THE DECODED INSTRUCTION TO:

INTERPRET M BITS AS M-BIT SIGNIFICAND, WHEN N-BIT FIRST EXPONENT VALUE IS NOT ALL ZEROES OR ALL ONES

INTERPRET M BITS AS INCLUDING SECOND EXPONENT VALUE IN AT LEAST ONE OF M BITS, AND LESS THAN M-BIT SIGNIFICAND IN AT LEAST ONE OTHER OF M BITS, WHEN N-BIT FIRST EXPONENT VALUE IS EITHER ALL ZEROES OR ALL ONES

PERFORM OPERATION SPECIFIED BY FLOATING-POINT INSTRUCTION ON AT LEAST ONE SOURCE FLOATING-POINT OPERAND TO GENERATE RESULT FLOATING-POINT OPERAND

1246

COMMIT RESULT FLOATING-POINT OPERAND TO DESTINATION REGISTER 1247

FIG. 12

METHOD <u>1348</u>

FETCH SINGLE FLOATING-POINT INSTRUCTION OF FIRST INSTRUCTION SET ARCHITECTURE, INSTRUCTION INDICATING AT LEAST ONE SOURCE FLOATING-POINT OPERAND AND DESTINATION REGISTER, SOURCE FLOATING-POINT OPERAND HAVING AT LEAST ONE FLOATING-POINT DATA ELEMENT HAVING SIGN BIT, N-BIT FIRST EXPONENT VALUE, AND M BITS  <u>1349</u>

TRANSLATE FETCHED SINGLE FLOATING-POINT INSTRUCTION OF FIRST INSTRUCTION SET ARCHITECTURE INTO ONE OR MORE INSTRUCTIONS OF SECOND INSTRUCTION SET ARCHITECTURE   <u>1350</u>

DECODE ONE OR MORE INSTRUCTIONS OF SECOND INSTRUCTION SET ARCHITECTURE <u>1351</u>

RETRIEVE DATA ASSOCIATED WITH SOURCE FLOATING-POINT OPERAND(S) AND SCHEDULE <u>1352</u>

EXECUTE DECODED ONE OR MORE INSTRUCTIONS OF SECOND INSTRUCTION SET ARCHITECTURE TO:

INTERPRET M BITS AS M-BIT SIGNIFICAND, WHEN N-BIT FIRST EXPONENT VALUE IS NOT ALL ZEROES OR ALL ONES

INTERPRET M BITS AS INCLUDING SECOND EXPONENT VALUE IN AT LEAST ONE OF M BITS, AND LESS THAN M-BIT SIGNIFICAND IN AT LEAST ONE OTHER OF M BITS, WHEN N-BIT FIRST EXPONENT VALUE IS EITHER ALL ZEROES OR ALL ONES

PERFORM OPERATION SPECIFIED BY FLOATING-POINT INSTRUCTION ON AT LEAST ONE SOURCE FLOATING-POINT OPERAND TO GENERATE RESULT FLOATING-POINT OPERAND

<u>1353</u>

COMMIT A RESULT FLOATING-POINT OPERAND OF THE EXECUTED INSTRUCTION(S) <u>1354</u>

FIG. 13

EP 4 478 176 B1

PROCESSOR
1402

FIRST STORAGE LOCATION 1415-1

FIRST FLOATING POINT DATA ELEMENT 1407-1

| N-BIT FIRST EXPONENT VALUE THAT IS NOT ALL ZEROS OR ONES 1416 | M-BIT SIGNIFICAND 1417 |

SIGN BIT
1409-1

M-BITS
1411-1

SECOND
EXPONENT
VALUE
1419

SECOND STORAGE LOCATION 1415-2

SECOND FLOATING POINT DATA ELEMENT 1407-2

| N-BIT FIRST EXPONENT VALUE THAT IS ALL ZEROS 1418 | SIGNIFICAND 1420 |

SIGN BIT
1409-2

M-BITS
1411-2

FLOATING-POINT ARITHMETIC UNIT
1405

RESULT FLOATING-POINT
DATA ELEMENT
1414

**FIG. 14**

METHOD OF MULTIPLYING FLOATING-
POINT DATA ELEMENTS
1555

GENERATE TEMPORARY EXPONENT BASED ON FIRST EXPONENTS AND/OR
SECOND EXPONENT VALUES
1556

GENERATE SUM OF BIASED FIRST EXPONENTS — 1557

IDENTIFY SECOND EXPONENT VALUE HAVING CORRESPONDING BIASED
FIRST EXPONENT THAT IS ZERO, OR GENERATE SUM OF SECOND EXPONENT
VALUES HAVING CORRESPONDING BIASED FIRST EXPONENTS THAT ARE ZERO — 1558

GENERATE FIRST TEMPORARY EXPONENT BY SUBTRACTING IDENTIFIED
SECOND EXPONENT VALUE, OR SUM OF SECOND EXPONENT VALUES,
FROM SUM OF BIASED FIRST EXPONENTS — 1559

GENERATE SECOND TEMPORARY EXPONENT BY SUBTRACTING
EXPONENTS BIAS FROM FIRST TEMPORARY EXPONENT — 1560

GENERATE PRODUCT OF MANTISSAS — 1561

NORMALIZE PRODUCT OF MANTISSAS, IF NECESSARY, BY SHIFTING
BINARY POINT AND ADJUST SECOND TEMPORARY EXPONENT — 1562

EXCEPTIONAL
CONDITIONS? — 1563

YES → RAISE EXCEPTION AND/OR
ADJUST FIRST EXPONENT
AND/OR SECOND EXPONENT
VALUE — 1564

NO

TRUNCATE AND ROUND PRODUCT OF MANITSSAS, IF NECESSARY — 1565

PRODUCT OF
MANTISSAS STILL
NORMALIZED? — 1566

NO

YES

CALCULATE SIGN OF PRODUCT — 1567

OUTPUT PRODUCT FLOATING-POINT DATA ELEMENT — 1568

FIG. 15

FIG. 16

METHOD OF ADDING FLOATING-
POINT DATA ELEMENTS
1791

DETERMINE BASE EXPONENT AND RIGHT
SHIFT AMOUNT
BASED ON FIRST EXPONENTS
AND/OR SECOND EXPONENT VALUES
1792

1793
BOTH
FIRST EXPONENTS
NON-ZERO?

YES

1794
BASE EXPONENT IS LARGER
FIRST EXPONENT, RIGHT
SHIFT AMOUNT IS
DIFFERENCE BETWEEN
FIRST EXPONENTS

NO

1795
BOTH
FIRST EXPONENTS
ZERO?

YES

1796
BASE EXPONENT IS ZERO,
RIGHT SHIFT AMOUNT IS
DIFFERENCE BETWEEN
SECOND EXPONENT VALUES

NO

1797
BASE EXPONENT IS NON-ZERO EXPONENT, RIGHT SHIFT AMOUNT IS NON-ZERO
EXPONENT PLUS SECOND EXPONENT VALUE

1798
RIGHT SHIFT MANTISSA OF FLAOTING-POINT ELEMENTS WITH SMALLER
EXPONENT BY RIGHT SHIFT AMOUNT

1799
GENERATE SUM OF MANTISSAS

NORMALIZE SUM OF MANTISSAS, IF
NECESSARY, AND ADJUST BASE EXPONENT
AND/OR SECOND EXPONENT VALUE
1705

1701
SHIFT BINARY POINT OF SUM OF MANTISSAS

1702
ADJUST BASE EXPONENT TO ACCOUNT FOR SHIFT

1703
BASE
EXPONENT LESS THAN
ZERO?

NO

1704
SET BASE EXPONENTS TO
ZERO AND REFLECT
UNDERFLOW SHIFT IN
SECOND EXPONENT VALUE

YES

B

A

FIG. 17A

FIG. 17B

**FIG. 18**

**FIG. 19**

EP 4 478 176 B1

EP 4 478 176 B1

PROCESSOR OR
SOC 2000

| SPECIAL PURPOSE LOGIC 2008 | CORE 2002(A) | | CORE 2002(N) | SYSTEM AGENT UNIT 2010 |
|---|---|---|---|---|
| | CACHE UNIT(S) 2004(A) | • • • | CACHE UNIT(S) 2004(N) | INTEGRATED MEMORY CONTROLLER UNIT(S) 2014 |
| | SHARED CACHE UNIT(S) 2006 | | | |
| | INTERFACE NETWORK 2012 | | | |

INTERFACE CONTROLLER UNIT(S) 2016

OTHER DEVICE(S) 2018

**FIG. 20**

FIG. 21(A)

EP 4 478 176 B1

FIG. 21(B)

EXECUTION UNIT(S) CIRCUITRY
2162

ALU 2201

VECTOR/SIMD 2203

LOAD/STORE 2205

BRANCH/JUMP 2207

FPU 2209

FIG. 22

EP 4 478 176 B1

REGISTER ARCHITECTURE
2300

Segment Registers 2320

Machine Specific Registers 2335

Writemask/predicate Registers 2315

SCALAR FP REGISTER FILE 2345

Instruction Pointer Register(s) 2330

Vector/SIMD Registers 2310

Control Register(s) 2355

Debug Registers 2350

General Purpose Registers 2325

Mem. Management Registers 2365

Flag Register(s) 2340

Machine Check Registers 2360

FIG. 23

EP 4 478 176 B1

| PREFIX(ES) 2401 | OPCODE 2403 | ADDRESSING INFORMATION 2405 | DISPLACEMENT VALUE 2407 | IMMEDIATE VALUE 2409 |

**FIG. 24**

ADDRESSING INFORMATION
2405

MOD R/M BYTE 2502

| 7 | 6 5 | 3 2 | 0 |
|---|---|---|---|
| MOD 2542 | REG 2544 | R/M 2546 | |

SIB BYTE 2504

| 7 | 6 5 | 3 2 | 0 |
|---|---|---|---|
| SCALE ss 2552 | INDEX xxx 2554 | BASE bbb 2556 | |

MOD R/M | SIB

FIG. 25

EP 4 478 176 B1

EP 4 478 176 B1

PREFIX 2401(A)

| 7 | 6 | 5 | 4 | 3 | 2 | 1 | 0 |
|---|---|---|---|---|---|---|---|
| 0 | 1 | 0 | 0 | W | R | X | B |

**FIG. 26**

| PREFIX 2401(A) | OPCODE 2403 | MOD R/M 2502 | | |
|---|---|---|---|---|
| | | MOD 2542 | REG 2544 | R/M 2546 |
| | | !=11 | rrr | bbb |

**FIG. 27(A)**

Rrrr          Bbbb

| PREFIX 2401(A) | OPCODE 2403 | MOD R/M 2502 | | |
|---|---|---|---|---|
| | | MOD 2542 | REG 2544 | R/M 2546 |
| | | 11 | rrr | bbb |

**FIG. 27(B)**

Rrrr          Bbbb

| PREFIX 2401(A) | OPCODE 2403 | MOD R/M 2502 | | | SIB 2504 | | |
|---|---|---|---|---|---|---|---|
| | | MOD 2542 | REG 2544 | R/M 2546 | SCL 2552 | INDEX 2554 | BASE 2556 |
| | | !=11 | rrr | 100 | | xxx | bbb |

**FIG. 27(C)**

Rrrr          Xxxx     Bbbb

| PREFIX 2401(A) | OPCODE 2403 | MOD R/M 2502 |
|---|---|---|
| | | REG 2544 |
| | | bbb |

**FIG. 27(D)**

Bbbb

SECOND PREFIX 2401(B)

| 7 | 0 | 7 | 6 | 5 | 4 | 3 | 2 | 1 | 0 |
|---|---|---|---|---|---|---|---|---|---|
| FORMAT 2801 | | R | v | v | v | v | L | p | p |

BYTE 0 2803 — BYTE 1 2805

**FIG. 28(A)**

SECOND PREFIX 2401(B)

| 7 | 0 | 7 | 6 | 5 | 4 | 3 | 2 | 1 | 0 | 7 | 6 | 5 | 4 | 3 | 2 | 1 | 0 |
|---|---|---|---|---|---|---|---|---|---|---|---|---|---|---|---|---|---|
| FORMAT 2811 | | R | X | B | m | m | m | m | m | W | v | v | v | v | L | p | p |

BYTE 0 2813 — BYTE 1 2815 — BYTE 2 2817

**FIG. 28(B)**

PREFIX 2401(C)

| | 23 | 22 | 21 | 20 | 19 | 18 | 17 | 16 | 15 | 14 | 13 | 12 | 11 | 10 | 9 | 8 | 7 | 6 | 5 | 4 | 3 | 2 | 1 | 0 |
|---|---|---|---|---|---|---|---|---|---|---|---|---|---|---|---|---|---|---|---|---|---|---|---|---|
| FORMAT 2911 | z | L' | L | b | V' | a | a | a | W | v | v | v | v | 1 | p | p | R | X | B | R' | 0 | 0 | m | m |

PAYLOAD BYTE 2
2915

PAYLOAD BYTE 1
2917

PAYLOAD BYTE 0
2919

**FIG. 29**

**FIG. 30**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2013191432 A1